(19) 

Europäisches
Patentamt
European
Patent Office
Office européen
des brevets

(11) **EP 2 868 986 B1**

(12) **EUROPEAN PATENT SPECIFICATION**

(45) Date of publication and mention
of the grant of the patent:
**07.11.2018 Bulletin 2018/45**

(21) Application number: **13831924.9**

(22) Date of filing: **27.09.2013**

(51) Int Cl.:
*F24F 5/00* *(2006.01)*  *F24D 3/16* *(2006.01)*
*F24F 7/00* *(2006.01)*  *F24F 1/00* *(2011.01)*
*F24F 11/65* *(2018.01)*

(86) International application number:
**PCT/JP2013/076277**

(87) International publication number:
**WO 2015/011844 (29.01.2015 Gazette 2015/04)**

(54) **AIR CONDITIONING DEVICE AND METHOD FOR OPERATING AIR CONDITIONING DEVICE**

KLIMAANLAGE UND BETRIEBSVERFAHREN FÜR DIE KLIMAANLAGE

DISPOSITIF CLIMATISEUR ET PROCÉDÉ DE FONCTIONNEMENT DE DISPOSITIF CLIMATISEUR

(84) Designated Contracting States:
**AL AT BE BG CH CY CZ DE DK EE ES FI FR GB
GR HR HU IE IS IT LI LT LU LV MC MK MT NL NO
PL PT RO RS SE SI SK SM TR**

(30) Priority: **26.07.2013 JP 2013155956**

(43) Date of publication of application:
**06.05.2015 Bulletin 2015/19**

(73) Proprietor: **Eco Factory Co., Ltd.
Kumamoto 862-0950 (JP)**

(72) Inventor: **MURAKAMI Takanobu
Kumamoto-shi
Kumamoto 862-0950 (JP)**

(74) Representative: **Isarpatent
Patent- und Rechtsanwälte Behnisch Barth
Charles
Hassa Peckmann & Partner mbB
Friedrichstrasse 31
80801 München (DE)**

(56) References cited:
**JP-A- S62 276 337     JP-A- 2003 148 758
JP-A- 2003 148 758     JP-A- 2006 207 869
JP-A- 2007 024 417     JP-A- 2007 024 417
JP-A- 2011 185 454     JP-A- 2011 237 097
JP-U- 3 003 413         JP-U- 3 003 413**

**Description**

FIELD OF THE ART

The present invention relates to an air conditioning system and an operation method for the air conditioning system. To be more detailed, the present invention relates to an air conditioning system combining an air conditioner and a radiant heat exchanger and arranged so that the radiant heat exchanger has a function of covering a heating element and is capable of promoting convection of indoor air to enable startup of air conditioning until comfort is provided to be quickened and the indoor air to be made uniform in a short time to thereby enable air conditioning of an indoor space to be performed efficiently without applying an uncomfortable draft sensation to the human body.

BACKGROUND ART

Air conditioning of an indoor space of a general household or office, etc., is generally performed using a packaged air conditioner, such as a room air conditioner or a multi air conditioner, etc. On the other hand, a radiant heat exchange unit, which, unlike an air conditioner having a forced convection type indoor machine, does not emit driving noise or wind noise due to a fan and does not apply an uncomfortable draft sensation to the human body by blowing cold air or warm air, is also used. Further, an air conditioning system having a radiant heat exchanger incorporated in a refrigerant circuit for a refrigeration cycle of the air conditioner has also been proposed.

As an example of such an air conditioning system, there is the air conditioning system described in Patent Document 1.

This conventional air conditioning system includes a refrigerant circuit <10>, in which a compressor <11>, an indoor heat exchanger <13>, and an outdoor heat exchanger <15> are connected by piping to circulate a refrigerant to perform a refrigeration cycle, and includes a heating operation function by which warm air, resulting from heat exchange with the refrigerant at the indoor heat exchanger <13>, is supplied to an indoor space.

The refrigerant circuit <10> includes a radiant panel <12>, which is connected between the discharge side of the compressor <11> and the indoor heat exchanger <13>, absorbs heat from the refrigerant, and emits radiant heat to the indoor space, and, at the same time, is arranged so that the high pressure of the refrigeration cycle is higher than a critical pressure of the refrigerant.

A wide high temperature region can thereby be set for the refrigerant and the high-temperature radiant heat from the radiant panel <12> is supplied to the indoor space so that the warm air blowing amount of the indoor heat exchanger <13> is decreased and, consequently, the draft sensation is decreased and the capability of heating by radiant heat can be increased significantly.

PRIOR ART DOCUMENT(S)

PATENT DOCUMENT(S)

Patent Document 1: Japanese Published Unexamined Patent Application No. 2005-16919
Patent Document 2: JP2007024417

SUMMARY OF THE INVENTION

PROBLEM(S) TO BE SOLVED BY THE INVENTION

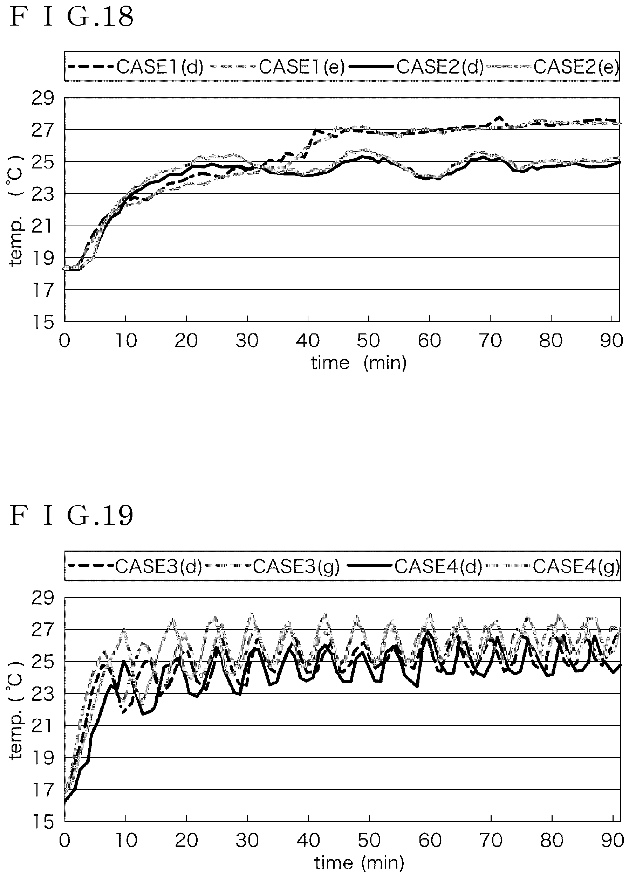

The radiant heat exchanger of the air conditioning system according to Patent Document 1 as described above is a panel structure called the radiant panel, and the three forms of (1) a floor unit separate from the indoor machine (Embodiment 1, see FIG. 2), (2) an integral floor unit, with which the radiant panel and the indoor heat exchanger are housed in a single indoor unit (Embodiment 2, see FIGS. 5 and 6), and (3) a ceiling-embedded unit, with which the indoor heat exchanger is housed in a casing and the radiant panel is embedded
at the center of a grill (Embodiment 6, see FIG. 18), are described.

With the air conditioning system described in Patent Document 1, the radiant panel of each of the embodiments is simply disposed with the radiant surface facing the indoor space, the generation of air convection by the radiant heat is extremely slight, and the stirring of the indoor air is mainly performed by a fan that delivers the indoor air heated by the indoor heat exchanger . Therefore if startup of air conditioning of the indoor space is to be accomplished in a short time or the indoor air is to be made uniform in a short time, the blowing amount of the fan must be increased after all and moreover, blowing by the fan is localized, poor in air stirring efficiency, and takes time and the applying an uncomfortable draft sensation to the human body thus cannot be resolved sufficiently.

Also in Patent Document 1, it is not indicated in particular that the heat generating portion of the radiant panel is covered, and if, for instance, the surface of the heat generating portion is exposed, it is dangerous as there is a possibility of inflicting a burn when a hand or body of a user is put in contact with the heat generating portion when it is heated during operation.

The present invention has been made in view of the above points, and an object thereof is to provide an air conditioning system combining an air conditioner and a radiant heat exchanger and an operation method for the air conditioning system such that the radiant heat exchanger has a function of covering a heating element and is capable of promoting convection of indoor air to enable startup of air conditioning until comfort is provided to be quickened and the indoor air to be made uniform in a short time to thereby enable air conditioning of an indoor space to be performed efficiently without applying an uncomfortable draft sensation to the human body.

MEANS FOR SOLVING THE PROBLEM(S)

The means taken by the present invention to resolve the above problems are as follows.

(1) The invention provides an air conditioning system according to claims 1 to 5. The invention also provides an operation method for air conditioning system according to claims 16 to 20.

(2) With the present invention, the radiant heat exchanger may be disposed with a piping of the heating element being connected in series to the piping of the refrigerant circuit.

In this case, the air conditioning system is an air conditioning system of the simplest arrangement among those having an air conditioner and a radiant heat exchanger and with which the two components are put in operation simultaneously. Therefore, for example in the case of an installation where a radiant heat exchanger is to be combined with an air conditioner that is already installed in a general household, the above arrangement can be the simplest and most inexpensive means.

(3) The present invention may include an operation mode switching means by which switching to a single operation mode among the respective operation modes of a first operation mode of putting the air conditioner and the radiant heat exchanger in operation, a second operation mode of putting only the air conditioner in operation, and a third operation mode of putting only the radiant heat exchanger in operation is performed automatically or manually.

In this case, the most favorable operation mode can be selected appropriately in accordance with the circumstances of air conditioning of the indoor space, for example, as in performing operation in the first mode of putting the air conditioner and the radiant heat exchanger in operation until the air conditioning of the indoor space is up and running and maintaining air conditioning in the second mode of putting only the air conditioner in operation or the third mode of putting only the radiant heat exchanger in operation once the air conditioning is up and running, etc. Air conditioning that is comfortable to a user can thus be performed and a contribution to energy saving can be made because excessive rise or drop of temperature, etc., can be suppressed.

(4) The present invention (operation mode switching means 1: six valves type) may include

an operation mode switching means by which switching to a single operation mode among the respective operation modes of a first operation mode of putting the air conditioner and the radiant heat exchanger in operation, a second operation mode of putting only the air conditioner in operation, and a third operation mode of putting only the radiant heat exchanger in operation is performed automatically or manually, and the operation mode switching means may include a first piping connecting the expansion valve and the indoor side heat exchanger, a first valve that the first piping has in its course, a second piping connecting the flow path switching valve and the indoor side heat exchanger, a second valve that the second piping has in its course, a third piping having one end side connected to the second piping and the other end side connected to one end side of the piping of the heating element of the radiant heat exchanger, a third valve that the third piping has in its course, a fourth piping having one end side connected to the other end side of the piping of the heating element of the radiant heat exchanger and the other end side connected to the second piping at a position closer to the flow path switching valve than the second valve, a fourth valve that the fourth piping has in its course, a fifth piping having one end side connected to the second piping at a position closer to the flow path switching valve than the second valve and the other end side connected to the first piping at a position closer to the expansion valve than the first valve, a fifth valve that the fifth piping has in its course, and a sixth valve that the second piping has in a course between the connection portions to the fourth piping and the third piping.

In this case, when in the air conditioning system, the outdoor machine, the indoor machine, and the radiant heat exchanger are to be put in operation, the fifth valve and the sixth valve are closed and the other valves, that is, the first valve, the second valve, the third valve, and the fourth valve are opened.

Also, when operation of the indoor machine is to be stopped and only the radiant heat exchanger is to be put in operation, the first valve, the second valve, and the sixth valve are closed, and the other valves, that is, the third valve, the fourth valve, and the fifth valve are opened.

Further, when operation of the radiant heat exchanger is to be stopped and only the indoor machine is to be put in operation, the third valve, the fourth valve, and the fifth valve are closed, and the other valves, that is, the first valve, the second valve, and the sixth valve are opened.

(5) The present invention (operation mode switching means 2: five valves type) may include

an operation mode switching means by which switching to a single operation mode among the respective operation modes of a first operation mode of putting the air conditioner and the radiant heat exchanger in operation, a second operation mode of putting only the air conditioner in operation, and a third operation mode of putting only the radiant heat exchanger in operation is performed automatically or manually, the operation mode switching means may include a first piping connecting the expansion valve and the indoor side heat exchanger, a second piping connecting the flow path switching valve and the indoor side heat exchanger, a third piping having one end side connected to the second piping and the other end side connected to one end side of the piping of the heating element of the radiant heat exchanger, a fourth piping having one end side connected to the other end side of the piping of the heating element of the radiant heat exchanger and the other end side connected to the second piping at a position closer to the indoor side heat exchanger than the connection portion to the third piping, a fifth piping having one end side connected to the second piping at a position near the connection portion to the fourth piping and the other end side connected to the first piping, a valve that the fifth piping has in its course, and a valve that the second piping has in its course between the connection portions to the fourth piping and third piping, and one of either of the first piping and the second piping may have a valve in its course or one of either of the third piping and the fourth piping may have a valve in its course.

In this case, when in the air conditioning system, the outdoor machine, the indoor machine, and the radiant heat exchanger are to be put in operation, the valve of the fifth piping and the valve in the course between the connection portions to the fourth piping and the third piping are closed and the valve of one of either of the first piping and the second piping or the valve of one of either of the third piping and the fourth piping is opened.

Also, when operation of the indoor machine is to be stopped and only the radiant heat exchanger is to be put in operation, the valve in the course between the connection portions to the fourth piping and the third piping and the valve, if any, in one of either of the first piping and the second piping are closed, and the valve of the fifth piping and the valve, if any, in one of either of the third piping and the fourth piping are opened.

Further, when operation of the radiant heat exchanger is to be stopped and only the indoor machine is to be put in operation, the valve of the fifth piping and the valve, if any, in one of either of the third piping and the fourth piping are closed, and the valve in the course between the connection portions to the fourth piping and the third piping and the valve, if any, in one of either of the first piping and the second piping are opened.

(6) The present invention (operation mode switching means 3: four valves type) may include

an operation mode switching means by which switching to a single operation mode among the respective operation modes of a first operation mode of putting the air conditioner and the radiant heat exchanger in operation, a second operation mode of putting only the air conditioner in operation, and a third operation mode of putting only the radiant heat exchanger in operation is performed automatically or manually, the operation mode switching means may include a first piping connecting the expansion valve and the indoor side heat exchanger, a second piping connecting the flow path switching valve and the indoor side heat exchanger, a third piping having one end side connected to the second piping and the other end side connected to one end side of the piping of the heating element of the radiant heat exchanger, a fourth piping having one end side connected to the other end side of the piping of the heating element of the radiant heat exchanger and the other end side connected to the second piping at a position closer to the indoor side heat exchanger than the connection portion to the third piping, a fifth piping having one end side connected to the second piping at a position near the connection portion to the fourth piping and the other end side connected to the first piping, a valve that the fifth piping has in its course, and a valve that the second piping has in its course between the connection portions to the fourth piping and the third piping, and one of either of the first piping and the second piping may have a valve in its course and one of either of the third piping and the fourth piping may have a valve in its course.

In this case, when in the air conditioning system, the outdoor machine, the indoor machine, and the radiant heat exchanger are to be put in operation, the valve of the fifth piping and the valve in the course between the connection portions to the fourth piping and the third piping are closed and the valve of one of either of the first piping and the second piping or the valve of one of either of the third piping and the fourth piping is opened.

Also, when operation of the indoor machine is to be stopped and only the radiant heat exchanger is to be put in operation, the valve in one of either of the first piping and the second piping and the valve in the course between the connection portions to the fourth piping and the third piping are closed, and the valve in one of either of the third piping and the fourth piping and the valve of the fifth piping are opened.

Further, when operation of the radiant heat exchanger is to be stopped and only the indoor machine is to be put in operation, the valve in one of either of the third piping and the fourth piping and the valve of the fifth piping are closed, and a valve in one of either of the first piping and the second piping and the valve in the course between the connection portions to the fourth piping and the third piping are opened.

(7) The present invention (operation mode switching means 4: single valve type) may include

an operation mode switching means by which switching to a single operation mode among the respective operation modes of a first operation mode of putting the air conditioner and the radiant heat exchanger in operation, a second operation mode of putting only the air conditioner in operation, and a third operation mode of putting only the radiant heat exchanger in operation is performed automatically or manually, the operation mode switching means may include a first piping connecting the expansion valve and the indoor side heat exchanger, a second piping connecting the flow path switching valve and the indoor side heat exchanger, a third piping having one end side connected branchingly to the second piping and the other end side connected to one end side of the piping of the heating element of the radiant heat exchanger, a fourth piping having one end side connected to the other end side of the piping of the heating element of the radiant heat exchanger and the other end side connected branchingly to the second piping, and a valve that the second piping has in its course between the connection portion to the third piping and the connection portion to the fourth piping, and the length of the course that is the sum of the third piping, the piping of the heating element, and the fourth piping may be formed to be longer than the length of the course between the connection portion to the third piping and the connection portion to the fourth piping.

In this case, when the outdoor machine, the indoor machine, and the radiant heat exchanger are to be put in operation, the valve in the course between the connection portion to the third piping and the connection portion to the fourth piping is closed.

Also, when operation of the radiant heat exchanger is to be stopped and only the indoor machine is to be put in operation, the valve in the course between the connection portion to the third piping and the connection portion to the fourth piping is opened. Thus, the refrigerant passing through the second piping does not pass through the third piping, the piping of the heating element, and the fourth piping that branches from the second piping and the sum course of the third piping, the piping of the heating element, and the fourth piping is longer than the course between the connection portion to the third piping and the connection portion to the fourth piping but the refrigerant passes through the shorter course between the connection portion to the third piping and the connection portion to the fourth piping.

Further, when operation of the indoor machine is to be stopped and only the radiant heat exchanger is to be put in operation, the fan of the indoor machine of the air conditioner is stopped in the state where the valve in the course between the connection portion to the third piping and the connection portion to the fourth piping is closed. Thus, the indoor machine cannot perform air conditioning and the refrigerant merely passes through the piping of the indoor side heat exchanger so that practically, only the radiant heat exchanger is put in operation.

(8) The present invention (operation mode switching means 5: two or three valves type) may include

an operation mode switching means by which switching to a single operation mode among the respective operation modes of a first operation mode of putting the air conditioner and the radiant heat exchanger in operation, a second operation mode of putting only the air conditioner in operation, and a third operation mode of putting only the radiant heat exchanger in operation is performed automatically or manually, and the operation mode switching means may include a first piping connecting the expansion valve and the indoor side heat exchanger, a second piping connecting the flow path switching valve and the indoor side heat exchanger, a third piping having one end side connected to the second piping and the other end side connected to one end side of the piping of the heating element of the radiant heat exchanger, a fourth piping having one end side connected to the other end side of the piping of the heating element of the radiant heat exchanger and the other end side connected to the second piping, and a valve that the second piping has in its course between the connection portion to the third piping and the connection portion to the fourth piping, and either or both of the third piping and the fourth piping may have a valve in the course or courses thereof.

In this case, when the outdoor machine, the indoor machine, and the radiant heat exchanger are to be put in operation, the valve in the course between the connection portion to the third piping and the connection portion to the fourth piping is closed and the valve or valves that either or both of the third piping and the fourth piping has or have is or are opened.

Also, when operation of the radiant heat exchanger is to be stopped and only the indoor machine is to be put in operation, the valve in the course between the connection portion to the third piping and the connection portion to the fourth piping is opened and the valve or valves that either or both of the third piping and the fourth piping has or have is or are closed. Thus, the refrigerant passes through the second piping and does not pass through the third piping, the piping of the heating element, and the fourth piping.

Further, when operation of the indoor machine is to be stopped and only the radiant heat exchanger is to be put in operation, the fan of the indoor machine of the air conditioner is stopped in the state where the valve in the course between the connection portion to the third piping and the connection portion to the fourth piping is closed and the valve or valves that either or both of the third piping and the fourth piping has or have in the course thereof is or are opened. Thus, the indoor machine cannot perform air conditioning and merely the refrigerant passes through the piping of the indoor side heat exchanger so that practically, only the radiant heat exchanger is put in operation.

(9) The present invention may have an arrangement where the heating element has a plurality of piping, the piping are connected in parallel to the piping making up the refrigerant circuit, the direction of flow of the refrigerant is the up/down direction, a gas-liquid two-phase refrigerant passes through from the upper sides to the lower sides of the piping of the heating element during cooling, and a gas phase refrigerant passes through from the lower sides to the upper sides of the piping of the heating element during heating.

In this case, the thermal efficiency is improved by introducing the refrigerant into the piping from the upper side of the heating element and passing it to the lower side during cooling because ordinarily, the temperature is higher and the thermal energy for revaporization is greater near the ceiling at the upper side. In the process of being guided by the piping and moving downward through the piping by the action of gravity while absorbing heat, the gas-liquid two-phase refrigerant undergoes efficient heat exchange and changes to the gas phase refrigerant and the gas phase refrigerant is guided to the outdoor machine. Also in the parallel arrangement, the cross section of an upper header, etc., may be made larger than that of the introduction piping so that the introduced refrigerant is uniformly distributed among the plurality of branched piping. In this case, the upper header, etc., has a large cross section (space) and therefore when the refrigerant enters the upper header, etc., the pressure is released and the revaporization is promoted.

Also during heating, the temperature near the floor at the lower side is ordinarily lower and therefore for performing heating by heat dissipation, the heat exchange efficiency is better if the refrigerant is introduced from the lower portion at which the temperature difference is large. That is, the gas phase refrigerant is guided by the piping branching from a lower header, etc., and moves upward through piping while condensing and dissipating heat. In this process, gravity hardly acts on the refrigerant because it is in the gas phase and the refrigerant can thus move upward smoothly. Also at the heating element, heat exchange by heat dissipation is performed efficiently and the refrigerant changes partially to a liquid phase refrigerant by condensation to become a gas-liquid two phase refrigerant that is guided to the indoor machine. The refrigerant is further condensed and dissipates heat at the indoor machine of the air conditioner and then the refrigerant is guided to the outdoor machine.

(10) With the present invention, the piping of the heating element may have a corrugated pipe arrangement, which is connected in series to the piping making up the refrigerant circuit and with which the direction of flow of the refrigerant is the up/down direction.

Although unlike in the case of the heating element with the parallel piping arrangement, the advantages of passing the high-temperature, high-pressure gas phase refrigerant from the lower side to the upper side of the piping during heating and passing the gas-liquid two-phase refrigerant from the upper side to the lower side of the piping during cooling are not provided in the present case, the refrigerant may be passed from one of either of the upper and lower sides to the other side and the degree of freedom of the piping is thus high. Also, in the process in which the refrigerant moves up and down repeatedly inside the piping, the downward movement of the gas-liquid two-phase refrigerant by the action of gravity and the upward movement of the gas phase refrigerant in the state that is not subject to gravity are repeated alternately so that the refrigerant flows smoothly and heat exchange as an evaporator is also performed smoothly.

(11) The present invention may have an arrangement where the piping of the heating element has a corrugated pipe arrangement, which is connected in series to the piping making up the refrigerant circuit and with which the direction of flow of the refrigerant is the horizontal direction, a gas-liquid two-phase refrigerant passes from the upper side to the lower side of the piping of the heating element during cooling, and a gas phase refrigerant passes from the lower side to the upper side of the piping of the heating element during heating.

In this case, the radiant heat exchanger provides the same actions and advantages as those described above for the case where, in the arrangement in which the heating element has a plurality of piping, the piping is connected in parallel to the piping making up the refrigerant circuit, and the direction of flow of the refrigerant is the up/down direction, the high-temperature, high-pressure gas phase refrigerant passes from the lower side to the upper side of the piping during heating and the gas-liquid two-phase refrigerant passes from the upper side to the lower side of the piping during cooling.

(12) With the present invention, end members connecting the respective rectifying plates may be disposed at end portions at both sides of the respective rectifying plates to form a tubular body that is open at an upper portion and a lower portion, and the heating element may be enclosed in the tubular body.

In this case, the flow of air passing between the rectifying plates is made a more rectified flow due to the presence of the end members at end portions of both sides of the respective rectifying plates and the chimney effect acts more effectively.

(13) The present invention may have an arrangement where the air conditioner is a multi air conditioner having a plurality of indoor side heat exchangers, with piping connected in parallel, with respect to the single outdoor side heat exchanger and one or a plurality of the radiant heat exchangers is or are installed in respective correspondence to the plurality of indoor side heat exchangers.

This arrangement enables efficient operation because the plurality of indoor side heat exchangers can be put in operation with a single outdoor machine having the outdoor side heat exchanger and is especially useful for air conditioning of respective rooms in a building, etc., with many rooms.

(14) The present invention may have an arrangement where the air conditioner is an inverter air conditioner that performs inverter control of the compressor.

In this case, multiple step or stepless output adjustment of the compressor can be performed to enable cooling and heating to be controlled more finely for improved comfort. A contribution to energy saving can also be made because fine control can also be performed in regard to power consumption during operation of the air conditioner and the radiant heat exchanger.

(15) With the present invention, the piping of the heating element may be a flat pipe having a plurality of flow paths running in parallel in the longitudinal direction in the interior or a pipe having a plurality of stria portions running in parallel in the longitudinal direction on the inner surface.

In this case, the flat pipe has a structure where the respective flow paths are finely divided into a plurality while a sufficient area is secured for the outer surface of the piping that performs heat exchange and the positions of the respective flow paths are close to the outer surface so that heat exchange of higher efficiency can be performed in comparison to a circular pipe, etc., with which the position of the central portion of the flow path is somewhat far from the outer surface. Also, with the pipe with the plurality of stria portions, the area of the inner surface of the piping is made greater than that of a simple pipe, thereby enabling heat exchange of higher efficiency.

(16) The present invention may have an arrangement where a ventilation guiding member, which guides the air that enters and exits the gaps at the inner sides of the rectifying plates so that the air flows smoothly, is disposed at the upper side or the lower side or the upper side and the lower side of the heating element.

In this case, the flow of air due to the chimney effect of the respective rectifying plates can be smoothened further by the ventilation guiding member, thereby enabling a contribution to be made toward increasing the flow rate of the air that is convected in the indoor space by the radiant heat exchanger.

(17) With the present invention, one or a plurality of types of processing or coating, selected from among knurling, alumite processing, heat dissipation coating, far infrared ray emission coating, and coating having a deodorizing function, an antibacterial function, or a volatile organic compound adsorption-decomposition function, may be applied to the surface of the heating element.

In this case by applying knurling, alumite processing, or heat dissipation coating, the heating element can be improved in heat dissipation and the heat exchange at the heating element can be performed more efficiently. If a far infrared ray emission coating is applied, the far infrared rays emitted from the heating element, together with the radiant heat, enable indoor temperature adjustment to be performed efficiently. Also, by applying a coating having a deodorizing function, an antibacterial function, or a volatile organic compound adsorption-decomposition function, the maintenance of the radiant heat exchanger is made simpler and pleasant use can be realized by these functions.

(18) The present invention may have an arrangement where an advertisement or an art image is displayed on the surface of the rectifying plate.

In this case, the rectifying plate that has the function of a cover of the heating element can be utilized as an advertisement panel or a sign. That is, the radiant heat exchanger has a largely exposed form of significant presence in the indoor space in which it is installed and if an advertisement is displayed thereon, it can be made to have a function of a more effective advertisement. Also, if an art image is displayed, various effects, such as the creation of a space with an atmosphere of splendor or a space that is relaxing to a user, etc., can be produced in the indoor space by the art image.

(19) The present invention provides in an air conditioning system including an air conditioner having a refrigerant circuit, in which a compressor, an expansion valve, a flow path switching valve, an indoor side heat exchanger, and an outdoor side heat exchanger are connected by piping to circulate a refrigerant to perform a refrigeration cycle, and supplying air, which has undergone heat exchange with the refrigerant at the indoor side heat exchanger, to an indoor space by a fan, a radiant heat exchanger having a heating element incorporated in the refrigerant circuit of the air conditioner, rectifying plates sandwiching the heating element of the radiant heat exchanger in between and each covering a surface of the heating element across a gap provided with respect to the surface, having the inner surface arranged as a reflecting surface that reflects the radiant heat radiated from the heating element, having a radiant heat passing portion penetrating through the inner and outer surfaces and allowing passage of radiant heat and air, and promoting air convection by a chimney effect, and an operation mode switching means, by which switching to a single operation mode among the respective operation modes of a first operation mode of putting the air conditioner and the radiant heat exchanger in operation, a second operation mode of putting only the air conditioner in operation, and a third operation mode of putting only the radiant heat exchanger in operation is performed automatically or manually, an operation method for air conditioning system, in which, when the air conditioner and the radiant heat exchanger are put in operation in the first operation mode, the fan of the air conditioner is stopped to practically put only the radiant heat exchanger in operation.

The structure of the radiant heat passing portion is not restricted in particular as long as radiant heat (may also be referred to as "emitted heat") and air can pass through. For example, it may be a plurality of pores (holes), such as those formed in a perforated metal, or may be a plurality of thin slits. Also, the shape of the pores or slits is not restricted in particular and may, for example, be circular, elliptical, or any of various polygonal shapes, etc. The pores and slits may be connected to each other as penetrating holes or may be formed separately without being connected. Further, although the size of each pore or slit is not restricted in particular, it is preferably of a size through which, for example, a finger cannot pass so that a user cannot inadvertently or intentionally contact the heating element. In the present specification and claims, the term "radiant" may be replaced by "emitted."

The structure of the heating element is, for example, a structure in which a piping for passing the refrigerant is arranged in a flat plate shape, or a structure in which a piping for passing the refrigerant is arranged in a cylindrical shape, etc. Also, the shape of the rectifying plate disposed around the sides of the heating element is not restricted in particular and is formed as suited in accordance with the structure of the heating element, for example, to a circular pipe shape, square pipe shape, flat plate shape, or curved plate shape, etc.

The term "chimney effect" in the present specification and claims is used to signify the effect of increasing the flow speed of air inside the gap by forming the rectifying plate to a tubular shape to cover the entirety of the sides of the heating element and also inclusively signify equivalent effects, for example, due to covering a portion of the sides of heating element, such as disposing the rectifying plates at front and rear sides of the heating element, etc.

The term "art image" in the present specification and claims inclusively signifies, for example, signs (marks and signboard displays) and various designs as well as various artistic expressions, such as pictures, photographs, etc. The advertisement and art image are preferably planar expressions made by printing or handwriting, etc.

(Actions)

The actions of the air conditioning system according to the present invention will be described.

With the radiant heat exchanger, the flow of air within the gaps along the heating element (inclusively signifying a portion of the overall circulation (convection) of indoor air in which the radiant heat exchanger is installed) is promoted by the chimney effect due to the rectifying plates. Also, the rectifying plates have the radiant heat passing portions that penetrate through the inner and outer surfaces and therefore when air flows at a high speed inside the gaps along the heating element, the pressure inside the gaps decreases (based on Bernoulli's theory) and air is taken into the gaps from the radiant heat passing portions to increase the flow rate of air passing through the gaps at the inner sides of the rectifying plates and further promote the convection of indoor air.

The radiant heat exchanger, while having the chimney effect due to the rectifying plate and the function as a cover that guards the user from the heat of the heating element and dew condensation water, can perform, together with the radiant heat generated by the rectifying plates being heated, efficient heat radiation, equivalent to or hardly differing from the case where the rectifying plates are not provided because the radiant heat radiated from the heating element is radiated directly to the exterior through the radiant heat passing portions.

That is, the heat radiated from the heating element can be radiated to the indoor space efficiently and used for air conditioning, and uniform air conditioning of the indoor space can be performed and the startup of air conditioning is fast because of the sum effect of heat transfer due to the satisfactory convection of indoor air and the radiant heat as described above. That is, the time until the air conditioning is put in a comfortable state is comparatively short. Also, by the convection of indoor air being satisfactory, the blowing amount of the fan of the indoor side heat exchanger does not have to be high or the fan does not have to be actuated and the draft sensation felt by a person can thus be reduced or eliminated.

Also, the heat exchange by the heating element is performed more smoothly and efficiently because the convection of the indoor air is promoted further as described above by providing the rectifying plates with the radiant heat passing portions and, for example, freezing of the heating element during cooling and overheating during heating are made less likely to occur. The actions will now be described in detail.

Firstly, when heating of an indoor space is to be performed, the air in the vicinity of the heating element is heated by conductive heat and radiant heat and a flow of air from a lower to higher direction is generated along the heating element. External air is thereby made to flow, for example, from a clearance between the radiant heat exchanger and a floor surface, etc., into the gaps at the inner sides of the respective rectifying plates and the air flow is sustained by the air being heated further by the heating element as it rises through the respective gaps. Also, the flow rate of the flowing air is increased by the so-called chimney effect due to the rectifying plate being disposed with the gap for air flow being provided between the rectifying plate and the heating element.

The heated air that rises through the gaps between the heating element and the rectifying plate is discharged to the exterior, for example, from a clearance between the upper end of the radiant heat exchanger and a ceiling surface. The discharged air is increased in flow speed by the chimney effect and flows along the ceiling surface to reach a position that is considerably separated from the radiant heat exchanger. Also, in accompaniment with this movement, the air undergoes heat exchange with the indoor air and the ceiling surface, is thereby cooled, and descends to move toward the floor surface. The air then enters the gaps from the lower portion of the radiant heat exchanger and rises upon being heated by the heating element. The indoor air is thus circulated and convected around the entire indoor space while being heated by the heating element.

On the other hand, a portion of the radiant heat emitted from the heating element passes through the respective radiant heat passing portions formed in the respective rectifying plates and is transferred to the indoor space at the outer sides of the rectifying plates. The proportion of the radiant heat that passes through the radiant heat passing portion depends on the opening ratio of the radiant heat passing portion. When the radiant heat is thus transmitted to the user, the user can feel warmth directly. Also, the radiant heat is used effectively for warming the walls, ceiling, floor, etc., and the indoor air is indirectly warmed by the warmed walls, ceiling, floor, etc.

The portion of the radiant heat that could not pass through the respective radiant heat passing portions is reflected by the reflecting surface at the inner surface side of each rectifying plate and further undergoes diffuse reflection between the heating element and the reflecting surfaces of the other rectifying plates . A portion of the radiant heat is thereby emitted to the indoor space through the respective radiant heat passing portions and a portion is emitted to the indoor space from upper and lower opening portions defined by the respective rectifying plates. Further, a portion heats the respective rectifying plates and raises the temperature of the respective rectifying plates and the radiant heat is emitted in outward directions from the respective rectifying plates to the indoor space.

Thus in performing heating of an indoor space with the radiant heat exchanger, while the reflection and emission of the radiant heat are repeated, the indoor space is heated satisfactorily by the radiant heat together with the heat being transferred by the convection of air, and the air conditioning of the entire indoor space can thus be performed effectively. This also enables the blowing amount of the fan of the indoor side heat exchanger of the air conditioner to be lessened or the fan to be stopped and consequently, the draft sensation felt by the user due to the blown air from the fan can be suppressed or the draft sensation can be eliminated.

Also in performing cooling of the indoor space, unlike in the case of performing the heating, air is cooled by the heating element and although the air thus flows from the upper to lower direction along the heating element and the respective rectifying plates and the flow of the cooled air is substantially opposite in direction to that in the case of the heating, the same actions as those in the case of the heating, such as the ability to perform effective air conditioning of the entire indoor space, the ability to suppress the draft sensation that the user feels due to the blown air from the fan, etc., are provided in the case of cooling as well.

Further by the arrangement of incorporating the heating element at the inner sides of the respective rectifying plates, direct touching of the heating element by hand is prevented. Therefore, even though the heating element may become high in temperature during heating by the gas phase refrigerant, etc., the arrangement is safe for the user because the user cannot touch the heating element inadvertently. The arrangement is also sanitary because the user cannot touch the dew condensation water that condenses on the heating element during cooling and the clothes, etc., of the user will not be wetted unexpectedly by the dew condensation water. Further, an external force is hardly ever applied to the heating element itself and the heating element can thus be prevented from deforming or breaking due to pressure or impact from the exterior.

The strength for resisting an external force is thus not required to be very high and the structure suffices to have a strength that can withstand at least the pressure of a fluid, and therefore a light material of comparatively low strength, etc., may be adopted as the material of the heating element, thereby expanding the choices of the material to be used in the heating element. The danger of injury due to hitting the heating element inadvertently can also be lowered.

Also when a liquid phase refrigerant or a refrigerant gas is used, it becomes high in pressure and therefore a refrigerant pipe or precision flat pipe that is made of a material of high pressure resistance and good conductivity, for example, a metal, such as copper or aluminum, etc., and has a high thermal emissivity processing applied on the surface may be used. The synthetic resin pipe and carbon fiber pipe heating elements are respectively comparatively lightweight and enable the system to be made light in weight.

The burdens of material carry-in and assembly processes during installation work are thereby lightened and the cost of the installation work can be kept low. Also by the system being made lightweight, for example, the deforming stress during an earthquake, etc., is made small and the minimum necessary work is required for providing reinforcement, etc., for supporting the system. Various restrictions during installation are thus lightened and the risk of toppling of the system etc., due to an earthquake, after installation, etc., is thus lowered. A contribution can thus be made to user safety as well.

The air conditioning system including the radiant heat exchanger that provides such actions is fast in startup and provides the heat radiation effect in a short time because the radiant heat exchanger has the structure in which the refrigerant is passed directly to the heating element and, in addition, room temperature adjustment can be controlled easily by making use of air conditioner control. A circuit arrangement for air temperature adjustment dedicated to the radiant heat exchanger is thereby made unnecessary and the cost of the system can be reduced.

That is, for heating, the gas phase refrigerant that is made high in temperature and high in pressure at the compressor in accordance with the refrigeration cycle is first supplied to the radiant heat exchanger and the temperature of the heating element thus reaches the refrigerant temperature in a comparatively short time and radiant heat of, for example, approximately 60°C to 80°C that is in accordance with the surface temperature of the heating element is emitted.

The radiant heat from the radiant heat exchanger can act directly on the bodily sensation of the user as mentioned above, and therefore by combination with the air conditioner, the startup of air conditioning until comfort is provided is quickened in comparison to the case of performing heating by the air conditioner alone. Also, by the radiant heat propagating directly to the floor, walls, ceiling, and human body, the user is warmed from his/her feet and can feel warm even with a low temperature setting, thereby enabling a contribution to be made to energy saving as well. Thereafter, the refrigerant in the gas phase state is delivered to the outdoor machine that serves as the condenser of the air conditioner and the indoor machine performs heating.

Also, for cooling, the liquid phase refrigerant that has emitted heat by being liquefied at the outdoor side heat exchanger of the outdoor machine in accordance with the refrigeration cycle is reduced in pressure by the expansion valve, and the resulting low-temperature refrigerant in the gas-liquid two-phase state is first supplied to the indoor machine of the air conditioner and the indoor machine is made to act as the evaporator to draw heat from air and thereby perform cooling. The refrigerant in the gas-liquid two-phase state is then delivered to the radiant heat exchanger and the heating element of the radiant heat exchanger is made to act as the evaporator to perform radiant cooling by radiation of cold from the heating element.

In the cooling operation, so-called hybrid operation, in which both the air conditioner and the radiant heat exchanger are put in operation, for example, with the air conditioner being controlled with priority, is thus made possible to enable the slowness of startup of air conditioning to be improved over the conventional case where air conditioning is performed only with the radiant panel (radiant heat exchanger). Also, the temperatures of the floor, walls, and ceiling are gradually decreased by the action of the radiant heat (cold) thereafter and these act in synergy to the bodily sensation of the user to enable comfort to be obtain even when the air conditioner is in weak operation.

Also, an improvement can be made in regard to an issue in the radiant cooling operation in the refrigerant cycle during cooling. That is, the air conditioning system uses the indoor machine of the air conditioner only as the evaporator, the gas-liquid two-phase refrigerant that is partially put in the liquid phase state by being heated by the heat of the indoor heat is, for example, at approximately 7°C to 15°C, and the heating element of the radiant heat exchanger thus does not freeze because the refrigerant at that temperature is passed to the heating element. Further, evaporation of the refrigerant is promoted by heating and the refrigerant is introduced into the compressor as a gas phase refrigerant that is raised in pressure by sufficient vaporization so that the load on the compressor is lightened to contribute to extending the life of the compressor and also contribute to energy saving.

Further, windless and noiseless cooling and heating functions are exhibited by the radiant heat exchanger, temperature non-uniformity of the walls, floor, and ceiling is reduced in accordance with the promotion of convection of the indoor air, sufficient comfort is provided even if the blowing amount of the fan of the indoor machine is lowered, and the uncomfortable draft sensation due to a high blowing amount from the indoor machine of the air conditioner can thus be suppressed. A contribution can thereby be made toward suppressing the operation of the fan of the indoor machine to enable the life of the motor of the fan to be extended and the life of the indoor machine to be extended consequently.

The air conditioning system is a so-called hybrid type air conditioning system with which the radiant heat exchanger that is installed indoors is incorporated in the refrigerant cycle of the air conditioner, and therefore use of indoor temperature programs, etc., of the air conditioner is enabled, that is for example, operation control of the air conditioner with multiple functions, such as dry operation, a filter function or other air cleaning function or a humidifying function, etc., and operation control of the radiant heat exchanger can be performed by ordinary operation of the air conditioner using a remote controller. Further in an energy saving operation of low load, arrangements may be made so that the refrigerant passes only through the outdoor machine and the radiant heat exchanger without passing through the indoor machine of the air conditioner, and in this process, the indoor machine may be used only for the function of detecting the temperature of the indoor air to control the outdoor machine.

EFFECT(S) OF THE INVENTION

The present invention can provide an air conditioning system combining an air conditioner and a radiant heat exchanger and an operation method for the air conditioning system such that the radiant heat exchanger has a function of covering a heating element and is capable of promoting convection of indoor air to enable startup of air conditioning until comfort is provided to be quickened and the indoor air to be made uniform in a short time to thereby enable air conditioning of an indoor space to be performed efficiently without applying an uncomfortable draft sensation to the human body.

BRIEF DESCRIPTION OF THE DRAWINGS

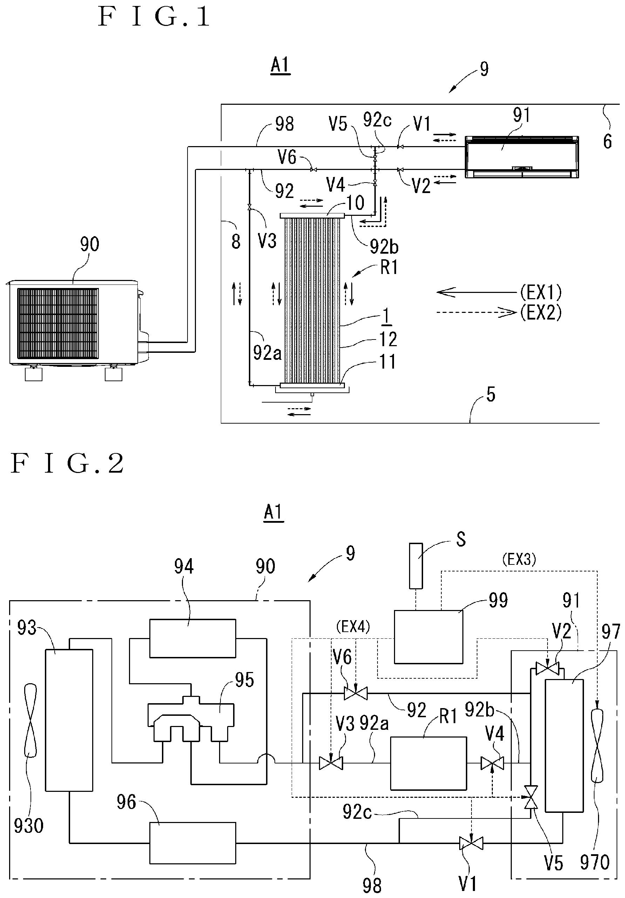

[FIG. 1] is a schematic explanatory diagram of a first embodiment of an air conditioning system according to the present invention.
[FIG. 2] is a block diagram of the air conditioning system of FIG. 1.

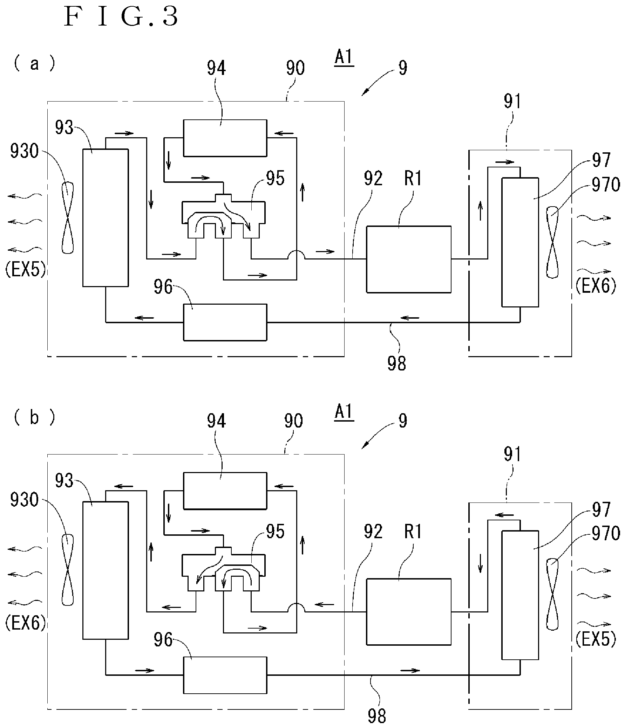

[FIG. 3] shows the air conditioning system of FIG. 1 with FIG. 3A being a block diagram during heating and FIG. 3B being a block diagram during cooling.

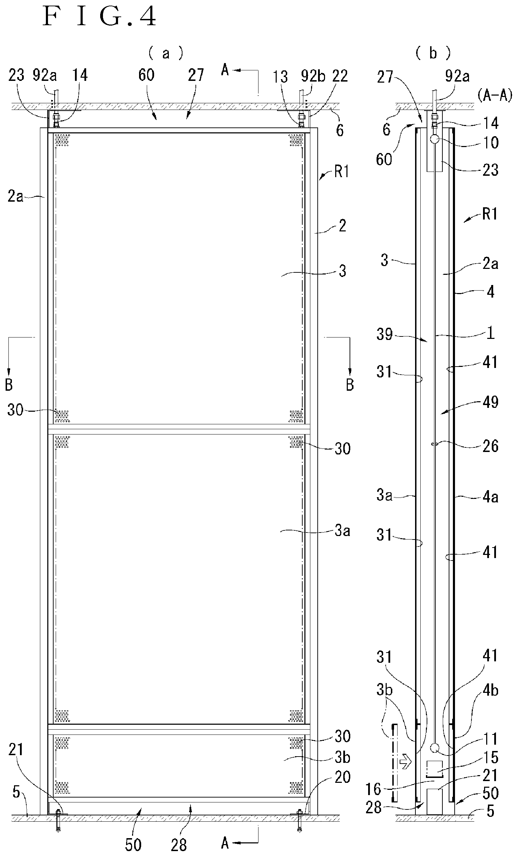

[FIG. 4] shows a first embodiment of a radiant heat exchanger with FIG. 4A being a front view and FIG. 4B being a sectional view taken along A-A in FIG. 4A.

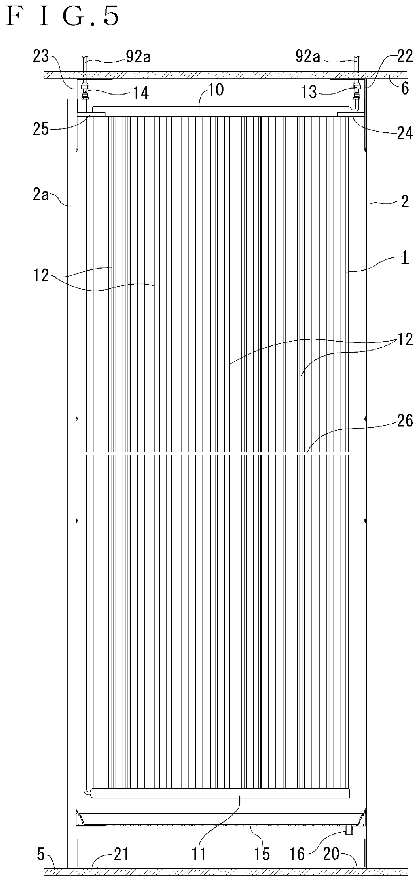

[FIG. 5] is a front explanatory view of a state where rectifying plates at the front side and the rear side of the radiant heat exchanger shown in FIG. 4 are removed.

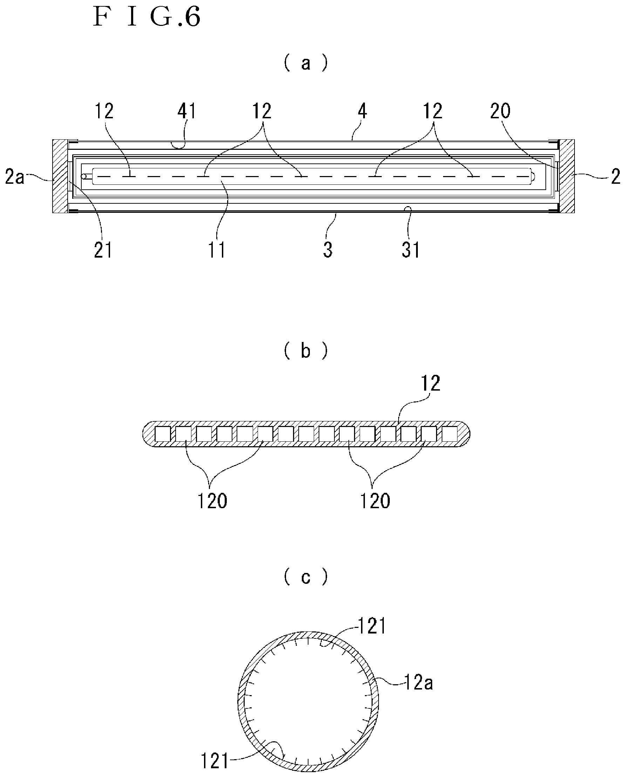

[FIG. 6] shows the structure of the radiant heat exchanger with FIG. 6A being an enlarged sectional view taken along B-B in FIG. 4A, FIG. 6B being an enlarged transverse section of a vertical pipe, and FIG. 6C being a sectional view of another example of piping of a heating element.

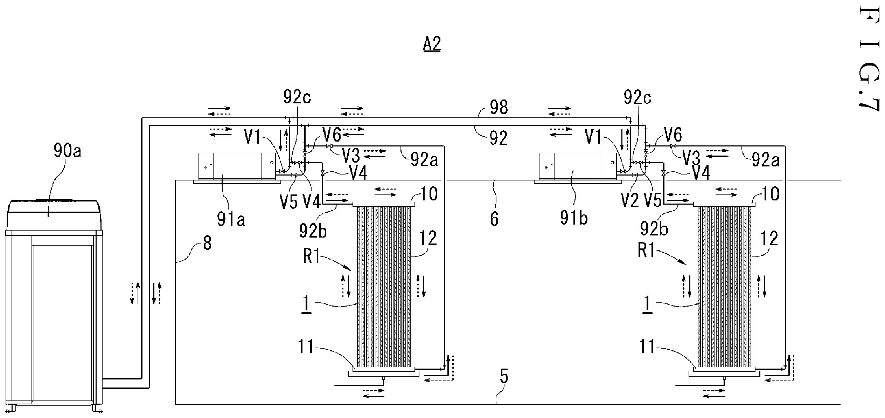

[FIG. 7] is a schematic explanatory diagram of a second embodiment of an air conditioning system according to the present invention.

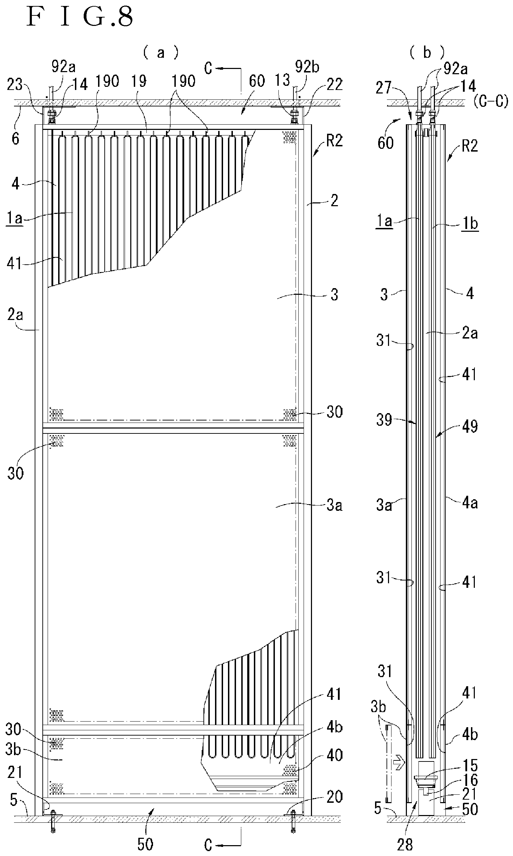

[FIG. 8] shows a second embodiment of a radiant heat exchanger with FIG. 8A being a front explanatory view with a rectifying plate at the front side being partially notched and FIG. 8B being a sectional view taken along C-C in FIG. 8A.

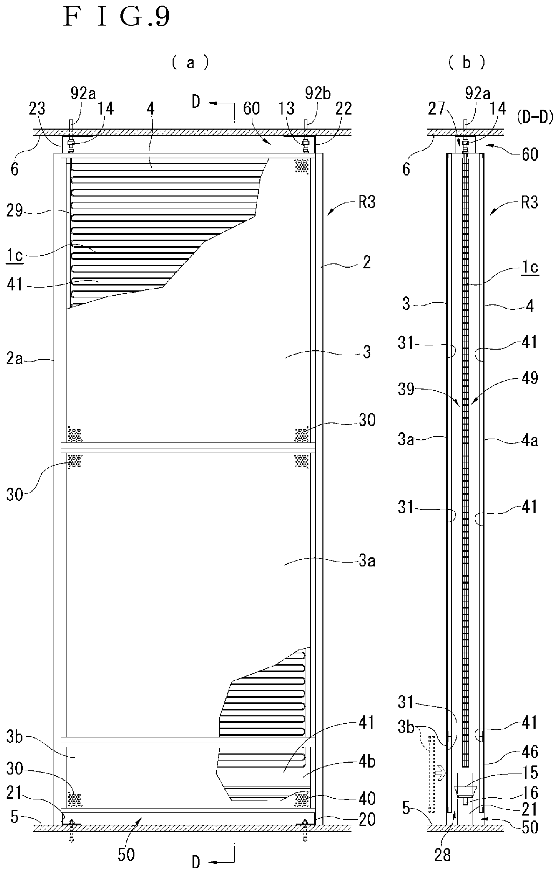

[FIG. 9] shows a third embodiment of a radiant heat exchanger with FIG. 9A being a front explanatory view with a rectifying plate at the front side being partially notched and FIG. 9B being a sectional view taken along D-D in FIG. 9A.

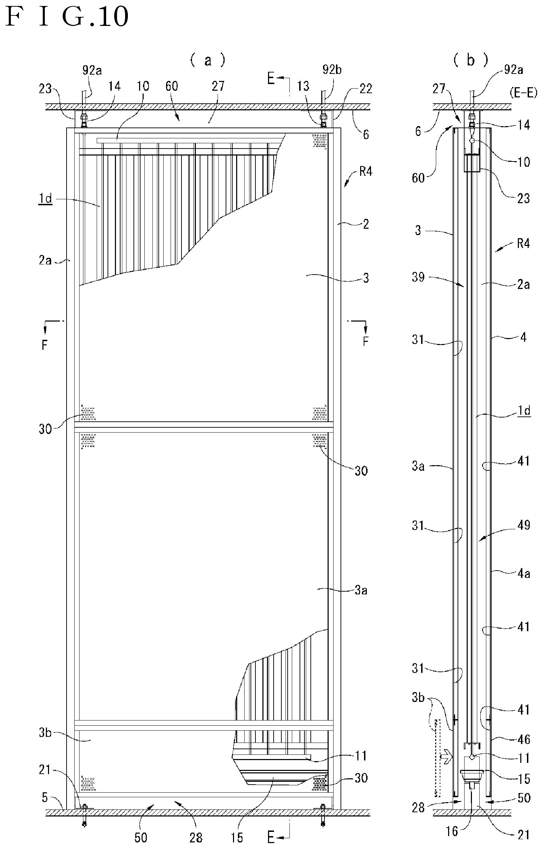

[FIG. 10] shows a fourth embodiment of a radiant heat exchanger with FIG. 10A being a front explanatory view with a rectifying plate at the front side being partially notched and FIG. 10B being a sectional view taken along E-E in FIG. 10A.

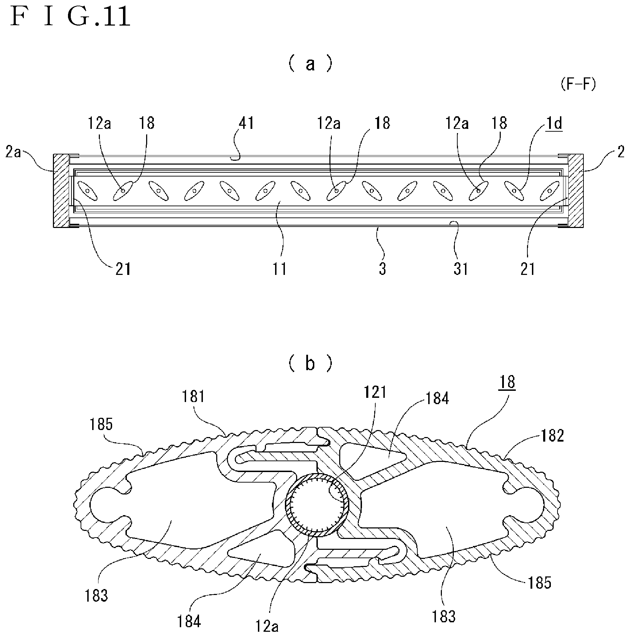

[FIG. 11] shows the structure of the radiant heat exchanger with FIG. 11A being an enlarged sectional view taken along F-F in FIG. 10A and FIG. 11B being an enlarged transverse section of a vertical pipe.

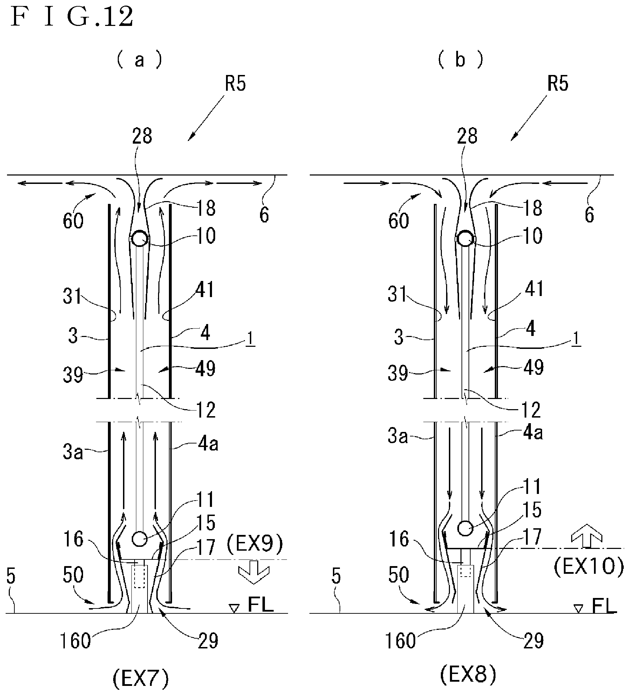

[FIG. 12] shows a fifth embodiment of a radiant heat exchanger that shows the flow of air in cases where ventilation guiding members are disposed at an upper portion and a lower portion of the heating element with FIG. 12A being an explanatory diagram during heating and FIG. 12B being an explanatory diagram during cooling.

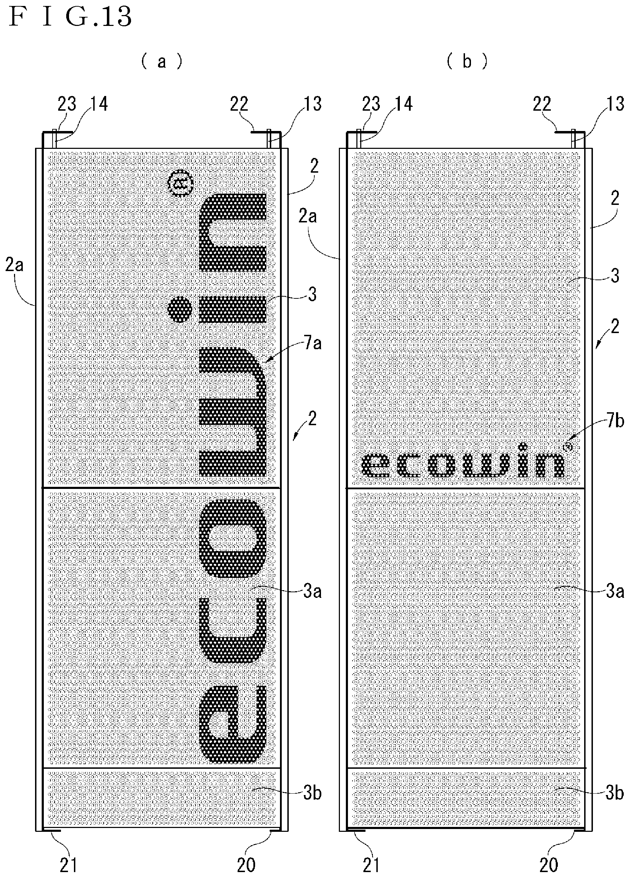

[FIG. 13] shows another embodiment of a radiant heat exchanger and is an explanatory diagram of an example where advertisement characters are displayed on a surface of a rectifying plate.

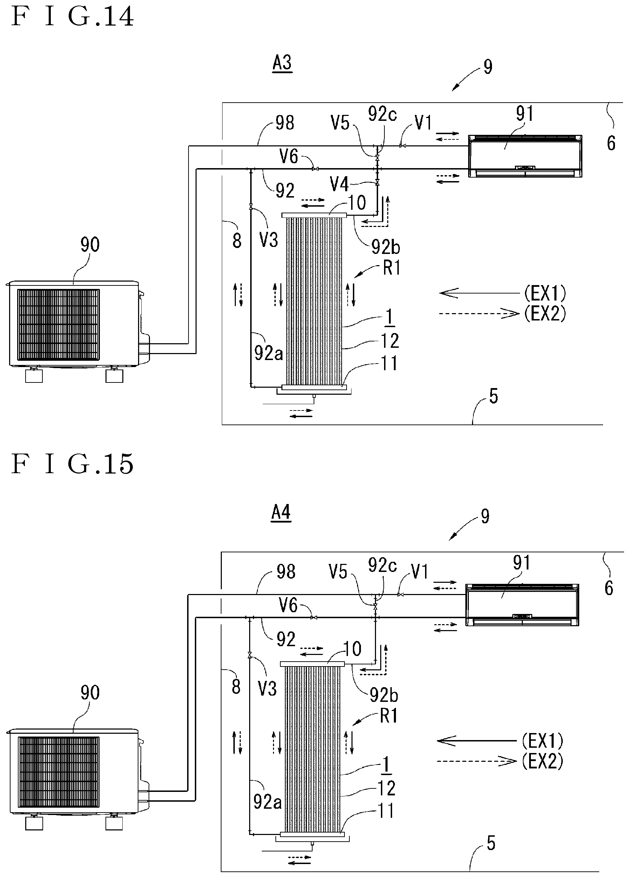

[FIG. 14] is a schematic explanatory diagram of a third embodiment of an air conditioning system according to the present invention.
[FIG. 15] is a schematic explanatory diagram of a fourth embodiment of an air conditioning system according to the present invention.

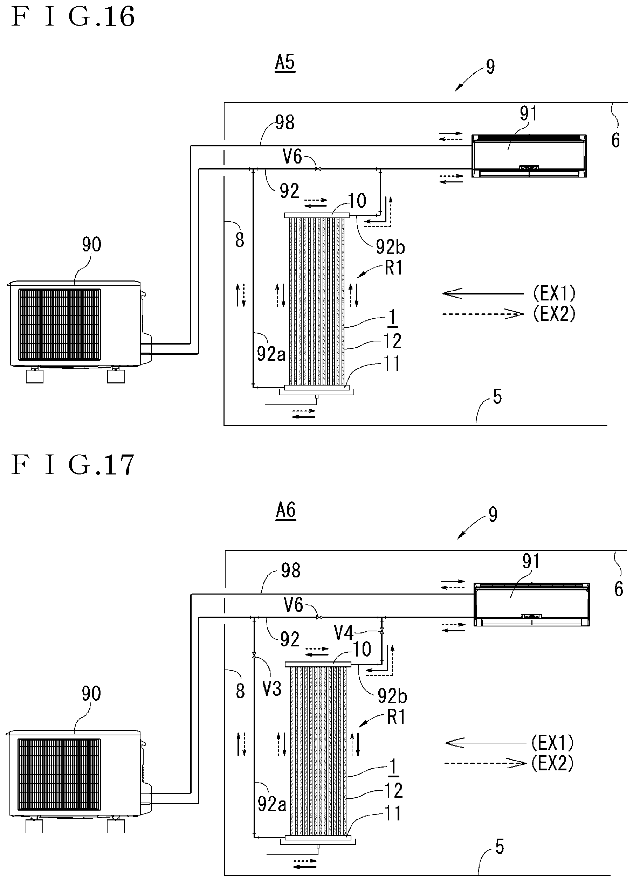

[FIG. 16] is a schematic explanatory diagram of a fifth embodiment of an air conditioning system according to the present invention.
[FIG. 17] is a schematic explanatory diagram of a sixth embodiment of an air conditioning system according to the present invention.
[FIG. 18] is a graph showing changes of room temperature in a case where only an air conditioner of an air conditioning system is put in operation and in a case where the air conditioner and a radiant heat exchanger are put in operation simultaneously.
[FIG. 19] is a graph showing changes of room temperature in a case where only a building multi air conditioner of an air conditioning system is put in operation and in a case where the building multi air conditioner and a radiant heat exchanger are put in operation simultaneously.

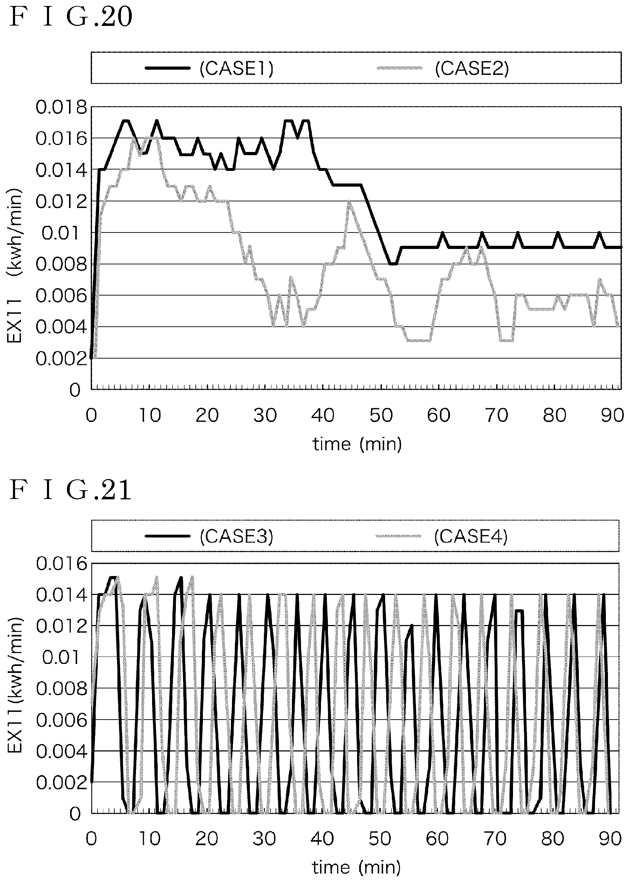

[FIG. 20] is a graph showing changes of power consumption in a case where only an air conditioner of an air conditioning system is put in operation and in a case where the air conditioner and a radiant heat exchanger are put in operation simultaneously.
[FIG. 21] is a graph showing changes of power consumption in a case where only a building multi air conditioner of an air conditioning system is put in operation and in a case where the building multi air conditioner and a radiant heat exchanger are put in operation simultaneously.

MODES FOR CARRYING OUT THE INVENTION

The present invention will now be described in detail based on embodiments illustrated in the drawings.

FIG. 1, FIG. 2, and FIG. 3 will be referenced. In FIG. 1, only a heating element 1 is shown as a radiant heat exchanger R1 for the sake of convenience. In FIG. 3, piping 92, 92a, 92b, and 92c, to be described below, are illustrated as the piping 92 and valves V1 to V6 are omitted for the sake of convenience of illustration.

Among the symbols in FIG. 1, EX1 indicates a "flow of refrigerant gas during a cooling operation" and EX2 indicates a "flow of refrigerant gas during a heating operation." In this regard, the same applies to FIG. 14, FIG. 15, FIG. 16, and FIG. 17. Also, among the symbols in FIG. 2, EX3 indicates a "fan ON/OFF signal" and EX4 indicates a "valve open/close signal." Further, among the symbols in FIG. 3, EX5 indicates "cold air" and EX6 indicates "warm air."

An air conditioning system A1 includes an air conditioner 9, having an outdoor machine 90 and an indoor machine 91 that are incorporated in a refrigerant circuit of a refrigeration cycle, and the radiant heat exchanger R1, with which piping of the heating element 1 are connected to piping 92 and 98 that connect the outdoor machine 90 and the indoor machine 91.

The air conditioner 9 is a known as a room air conditioner having cooling and heating functions and is used in a general household. The air conditioner 9 may be an inverter air conditioner that performs inverter control of a compressor 94 or may be a non-inverter air conditioner that is not inverter-controlled. That more efficient air conditioning can be performed and a contribution to energy saving can be made by adoption of an inverter air conditioner will be described later.

As shown in FIG. 2 and FIG. 3, the outdoor machine 90 of the air conditioner 9 has an outdoor side heat exchanger 93 functioning as an evaporator or a condenser, the compressor 94, a four-way switching valve 95, which is a flow path switching valve, and an expansion valve 96. A fan 930 is for the outdoor side heat exchanger 93.

Also, the indoor machine 91 has an indoor side heat exchanger 97 that functions as the condenser when the outdoor side heat exchanger 93 functions as the evaporator and functions as the evaporator when the outdoor side heat exchanger 93 functions as the condenser. A fan 970 is for the indoor side heat exchanger 97.

The radiant heat exchanger R1 is incorporated by the heating element 1, to be described below, being connected in the course of the second piping 92, which is connected from the four-way switching valve 95 to the indoor side heat exchanger 97 and through which the refrigerant passes, and to be more detailed, the second piping 92, through which the refrigerant in a gas phase that has been made high in temperature and high in pressure at the compressor 94 flows to the indoor side heat exchanger 97 during heating (see FIG. 3A).

The piping 98, which is a first piping, is a piping that delivers the gas phase refrigerant that has been expanded at the expansion valve 96 to the indoor side heat exchanger 97 during cooling. Although a single radiant heat exchanger R1 is installed in the present embodiment, a plurality of units may be connected and installed in series or in parallel (see FIG. 7).

Also as shown in Fig. 1, one end side of the piping 92a , which is a third piping having the other end side connected to a lower header pipe 11 of the heating element 1 to be described below, is connected to the piping 92. The valve V3, which is a third valve, is provided in the course of the piping 92a. One end side of the piping 92b, which is a fourth piping, is connected to an upper header pipe 10 of the heating element 1, and the other end side of the piping 92b is connected to a position in the course of the piping 92 that is closer to the indoor machine 91 than the connection portion to the piping 92a. Also, the piping 92 and the piping 98 are connected by the piping 92c, which is a fifth piping, at the connection position of the piping 92b. The valve V4, which is a fourth valve, is provided in the course of the piping 92b, and the valve V5, which is a fifth valve, is provided in the course of the piping 92c.

Also, the valve V6, which is the sixth valve, is provided between the connection portion to the piping 92a and the connection portion to the piping 92b in the course of the piping 92. Further, between the connection portion to the piping 92c and the indoor machine 91 in the piping 92 and the piping 98, the valve V1, which is the first valve, is provided in the piping 98 and the valve V2, which is the second valve, is provided in the piping 92.

A control portion 99 has a temperature sensor S and the temperature sensor S is disposed at a predetermined measurement point in an indoor space. Valve opening/closing signals are sent from the control portion 99 to the respective valves V1, V2, V3, V4, V5, and V6 via respective signal paths (indicated by dotted lines in FIG. 2). Also, an ON/OFF signal for the fan 970 of the indoor side heat exchanger 97 is sent from the control portion 99 to the fan 970 via a signal path.

The radiant heat exchanger R1 connected to the air conditioner 9 and incorporated in the air conditioning system A1 will be described in detail. FIG. 4 to FIG. 6 will mainly be referenced.

The radiant heat exchanger R1 includes the heating element 1 disposed in the up/down direction (vertical direction), decorative frames 2 and 2a supporting the heating element 1, and front surface side (front side in FIG. 4A, left side in FIG. 4B) rectifying plates 3, 3a, and 3b and rear surface side rectifying plates 4, 4a, and 4b that are disposed in the up/down direction at front and rear sides respectively of the heating element 1 with predetermined gaps 39 and 49 provided with respect to the heating element 1 as described later.

The heating element 1 is fixed to the inner sides of the decorative frames 2 and 2a that are made of wood. The decorative frames 2 and 2a make up end members and are disposed in the vertical direction and parallel to each other across a predetermined interval in the right/left direction. Lower fixing members 20 and 21 that are L-shaped plates for fixing to a floor surface 5 are fixed to the inner surface sides of lower end portions of the decorative frames 2 and 2a. The material of the decorative frames 2 and 2a is not restricted to wood and, for example, a synthetic resin or a metal, such as aluminum, etc., may be adopted instead.

Also, upper fixing members 22 and 23 that are L-shaped plates for fixing to a ceiling surface 6 are fixed to the inner surface sides of upper end portions of the decorative frames 2 and 2a. Horizontal portions (symbols omitted) of the lower fixing members 20 and 21 that contact the floor surface 5 are flush with the lower ends of the decorative frames 2 and 2a, and horizontal portions (symbols omitted) of the upper fixing members 22 and 23 that contact the ceiling surface 6 are positioned at positions slightly higher than the upper ends of the decorative frames 2 and 2a.

The heating element 1, made of metal using aluminum, copper, etc., is mounted between the decorative frames 2 and 2a with respective ends of the upper header pipe 10 being fixed to the inner surfaces of the decorative frames 2 and 2a by fixtures 24 and 25. A reinforcing member 26 is fixed in the horizontal direction at an intermediate portion in the up/down direction between the decorative frames 2 and 2a and reinforces the strengths of the decorative frames 2 and 2a as frame bodies. The reinforcing member 26 also has a function of fixing the intervals between respective vertical pipes 12 as described below of the heating element 1.

The heating element 1 has the upper header pipe 10 and the lower header pipe 11, which is disposed below and in parallel to the upper header pipe 10 across a predetermined interval. Both ends of both the upper header pipe 10 and the lower header pipe 11 are respectively sealed in airtight and liquid-tight manner.

The height at which the upper header pipe 10 is disposed is set to a position slightly lower than the upper ends of the decorative frames 2 and 2a as shown in FIG. 5. Also, the height at which the lower header pipe 11 is disposed is set to a position higher than the lower ends of the decorative frames 2 and 2a.

The upper header pipe 10 and the lower header pipe 11 are connected by a plurality of vertical pipes 12 that are disposed in parallel to each other at predetermined intervals and the upper header pipe 10 and the lower header pipe 11 are in communication with the respective vertical pipes 12. As shown in FIG. 6B, each vertical pipe 12 is a flat pipe made of metal and has a plurality of flow paths 120 running in parallel in the longitudinal direction in its interior. With the vertical pipe 12, a sufficient area is secured at the outer surface for performing heat exchange and at the same time, the respective flow paths 120 are finely divided as plural paths. The structure is thus such that the respective flow paths 120 are close in position to the outer surface to make possible heat exchange of high efficiency.

A supply/discharge pipe 13, connected to the piping 92, is connected upwardly in the vertical direction to a right side end portion in FIG. 5 of the upper header pipe 10. Also, a supply/discharge pipe 14, connected to the piping 92, is connected upwardly in the vertical direction to a left side end portion in FIG. 5 of the lower header pipe 11. Respective upper end portions of the supply/discharge pipes 13 and 14 extend to positions slightly lower than the horizontal portions of the upper fixing members 22 and 23, the supply/discharge pipe 14 is connected to the piping 92a, and the supply/discharge pipe 13 is connected to the piping 92b. With this structure, the gas-liquid two-phase refrigerant passes from the upper side to the lower side during cooling and the gas phase refrigerant passes from the lower side to the upper side during heating through the respective vertical pipes 12 of the heating element 1.

A heat dissipation coating for improving heat dissipation is applied to the surfaces of the upper header pipe 10, the lower header pipe 11, and the respective vertical pipes 12. Besides this, processing or coating that contributes to heat dissipation, such as knurling, alumite processing, heat dissipation coating, etc., may be applied to the surface of the heating element 1. Also, a coating contributing to far infrared ray emission or a coating having a deodorizing function, an antibacterial function, or a volatile organic compound adsorption-decomposition function, may be applied. These may be adopted solitarily or a plurality may be adopted in combination. Also, slightly below the lower header pipe 11, a drain pan 15, which is a trough-shaped water collecting member that is open at the upper side, is disposed with both end portions fixed between the decorative frames 2 and 2a. A drain pipe 16 is connected to one end side of a bottom portion of the drain pan 15. During cooling, dew condensation water that condenses on the surface of the heating element 1 drips onto the drain pan 15 and is suitably collected through the drain pipe 16 and treated.

The rectifying plates 3, 3a, and 3b are detachably installed on the front surface sides of the decorative frames 2 and 2a, and the rectifying plates 4, 4a, and 4b are detachably installed similarly on the rear surface sides. Although each of the rectifying plates 3, 3a, and 3b and rectifying plates 4, 4a, and 4b has, for example, a structure that is installed by latching a plurality of grooves, formed at bent portions at edge portions of both sides, to pins formed at inner surfaces at the front surface side and the rear surface side of the decorative frames 2 and 2a, other known attachment means may also be adopted.

The rectifying plates 3, 3a, and 3b and the rectifying plates 4, 4a, and 4b are respectively mounted in three vertical stages as a single set, and each set as a whole has a rectangular shape with a size capable of covering substantially the entire total width and total height between the decorative frames 2 and 2a. The gaps 39 and 49, through which air flows, are formed between the heating element 1 and the rectifying plates 3, 3a, and 3b and between the heating element 1 and the rectifying plates 4, 4a, and 4b. The rectifying plates 3b and 4b at the lowermost portions are formed to be smaller than the other rectifying plates 3, 3a, 4, and 4a and maintenance of the drain pan 15 can be performed by removing these.

Also, the rectifying plates 3, 3a, and 3b and the rectifying plates 4, 4a, and 4b are perforated metals (or perforated boards) made of aluminum and having pluralities of radiant heat passing pores 30 and 40 (see FIG. 8), which are radiant heat passing portions penetrating through front and rear surfaces, formed over the entire surfaces with the exception of a portion of the peripheral edge portions. The inner surfaces of the rectifying plates 3, 3a, and 3b and the rectifying plates 4, 4a, and 4b are arranged as reflecting surfaces 31 and 41 that reflect radiant heat. The opening ratio of the respective radiant heat passing pores 30 of the rectifying plates 3, 3a, and 3b and the respective radiant heat passing pores 40 of the rectifying plates 4, 4a, and 4b is set to 50% in the present embodiment.

The radiant heat passing pores may, for example, be formed only in the rectifying plates 3, 3a, and 3b at one side and not be formed in the rectifying plates 4, 4a, and 4b at the other side or may be formed only in suitable rectifying plates among the rectifying plates 3, 3a, 3b, 4, 4a, and 4b.

In the former case, the radiant heat from the rectifying plates 3, 3a, and 3b can be made stronger than that from the rectifying plates 4, 4a, and 4b so that even when the radiant heat exchanger R1 is positioned near a wall surface, the influence of heat on the wall surface can be reduced by making the rectifying plates 4, 4a, and 4b, which are weaker in radiant heat, face the wall.

The configurations, numbers, pore shapes, and opening ratios of the radiant heat passing pores 30 and 40 are not restricted in particular and may be set as suited according to diverse designs. In the present embodiment, fine unevenness is formed by applying embossing to the reflecting surfaces 31 and 41 to promote diffuse reflection of radiant heat. Also, the rectifying plates 3a and 3b and the rectifying plates 4a and 4b are formed of aluminum and are thus made excellent in heat transfer effect to further improve the efficiency of heat exchange with air.

Also, purification of indoor air can be achieved, for example, by applying a coating having a deodorizing function, an antibacterial function, or a volatile organic compound (VOC) adsorption-decomposition function, etc., to the inner surfaces of the rectifying plates 3b and 4b that are close to the drain pan 15. Such coating may also be applied to other portions of the radiant heat exchanger R1, such as the surfaces of the heating element 1, the rectifying plates 3 and 3a, and the rectifying plates 4 and 4a.

The entirety of the rectifying plates 3, 3a, and 3b and the entirety of rectifying plates 4, 4a, and 4b have peripheral edge portions extending beyond the peripheral edges of the heating element 1 and have areas greater than the heating element 1 in front view and rear view. The upper ends of the rectifying plate 3 and the rectifying plate 4 are set to be flush with the upper ends of the decorative frames 2 and 2a, and the lower ends of the rectifying plate 3b and the rectifying plate 4b are set at positions slightly higher than the lower ends of the decorative frames 2 and 2a.

The front surface side rectifying plates 3, 3a, and 3b, the rear surface side rectifying plates 4, 4a, and 4b, and the decorative frames 2 and 2a at the respective end sides in the width direction are made integral to form a somewhat flat rectangular tube having an upper opening portion 27 at an upper end portion and a lower opening portion 28 at a lower end portion. By the structural body surrounding the heating element 1 being arranged as a tube, the structure is improved in the chimney effect that promotes the convection of indoor air.

By setting the sizes and mounting positions of the rectifying plates 3, 3a, and 3b and the rectifying plates 4, 4a, and 4b as described above, lower clearances 50 are formed between the floor surface 5 and the lower ends of the rectifying plate 3b and rectifying plate 4b and upper clearances 60 are formed between the ceiling surface 6 and the upper ends of the rectifying plate 3 and the rectifying plate 4 when the radiant heat exchanger R1 is fixed to the floor surface 5 and the ceiling surface 6 as shown in FIGS. 4A and 4B.

(Actions)

Actions of the air conditioning system A1 including the radiant heat exchanger R1 will be described with reference to FIG. 1 to FIG. 6.

With the air conditioning system A1, when the outdoor machine 90 is to be put in operation together with the indoor machine 91 and the radiant heat exchanger R1, the valves V5 and V6 are closed and the other valves V1, V2, V3, and V4 are opened by control by the control portion 99.

Also, to stop the operation of the indoor machine 91 and put the radiant heat exchanger R1 in operation, the valves V1, V2, and V6 are closed and the other valves V3, V4, and V5 are opened.

Further by closing the valves V3, V4, and V5 and opening the other valves V1, V2, and V6, the operation of the radiant heat exchanger R1 can be stopped and only the indoor machine 91 can be put in operation. Also, operations of the respective valves V1 to V6 may be performed by automatic control by the control portion 99 or may be performed manually.

Other variations of the piping and valve arrangement as an operation mode switching means will be described later.

(Actions of the radiant heat exchanger R1)

The radiant heat exchanger R1 of the air conditioning system A1 is installed indoors at a position slightly separated from a wall surface 8 by being fixed to the floor surface 5 by the lower fixing members 20 and 21 and to the ceiling surface 6 by the upper fixing members 22 and 23.

The supply/discharge pipe 14 and the supply/discharge pipe 13 of the heating element 1 of the radiant heat exchanger R1 are connected to the piping 92a and 92b that lead to the piping 92 as shown in FIG. 1.

To perform heating of an indoor space by the radiant heat exchanger R1, the heating element 1 is heated by a high-temperature gas phase refrigerant being supplied from the supply/discharge pipe 14 to the heating element 1. In this process, the gas phase refrigerant passes from the lower sides to the upper sides of the respective vertical pipes 12 (see FIG. 5), and the heat exchange efficiency is high and effective heating can be performed because the air near the floor surface 5 at the lower side of the indoor space, which is lower in temperature and large in temperature difference with respect to the upper side, is heated first. Also, the gas phase refrigerant is guided by the respective vertical pipes 12 branching from the lower header 11 and moves upward while condensing and dissipating heat. In this process, the refrigerant is in the gas phase and the refrigerant can thus move upward smoothly because gravity hardly acts on it.

The heat exchange with air due to heat dissipation of the heating element 1 is also performed with high efficiency and the refrigerant changes partially to a liquid phase refrigerant due to condensation and becomes a gas-liquid two-phase refrigerant that is guided into the indoor machine 91. The refrigerant is condensed further and dissipates heat at the indoor side heat exchanger 97 of the indoor machine 91 and then the refrigerant is guided to the outdoor side heat exchanger 93 of the outdoor machine 90.

The air in the vicinity of the heating element 1 is thus heated by radiant heat and a flow of air from the lower to upper direction forms along the heating element 1. In the following description of the flow of air, the FIG. 12A below will be referenced for the sake of convenience.

Air from the exterior is thereby made to flow in from the clearance 50 at the floor surface 5 side and through the lower opening portion 28 between the rectifying plate 3b and the rectifying plate 4b. The air that flows in is heated further by the heating element 1 while rising through the respective gaps 39 and 49 at the inner sides of the rectifying plates 3, 3a, and 3b and the rectifying plates 4, 4a, and 4b, and a flow of air in the upward direction is thereby sustained. Also, flat rectangular tubes are formed at the front surface side and the rear surface side of the heating element 1 by the rectifying plates 3, 3a, and 3b, the rectifying plates 4, 4a, and 4b, and the decorative frames 2 and 2a and by the resulting chimney effect, a flow rate sufficient for satisfactory convection of the indoor air is secured.

The heated air that rises through the respective gaps 39 and 49 passes through the upper opening portion 27 between the rectifying plate 3 and the rectifying plate 4 and is discharged to the exterior from the upper clearance 60 at the ceiling surface 6 side. The discharged air is increased in flow speed by the chimney effect and flows along the ceiling surface 6 to reach a position that is considerably separated from the radiant heat exchanger R1. Also in accordance with this movement, the air undergoes heat exchange with the indoor air, is cooled thereby and made to descend and move toward the floor surface 5, enters into the radiant heat exchanger A1 again from the lower portion, and rises upon being heated by the heating element 1. The indoor air is thus circulated around the entire indoor space while being heated by the heating element 1 and the convection is promoted.

Meanwhile, a portion of the radiant heat radiated from the heating element 1 (in the present embodiment, the opening ratios of the radiant heat passing pores 30 and 40 are 50% and the proportion of radiant heat that passes through is thus considered to be approximately 50% of the entire radiant heat in consideration of the heat passing through the lower opening portion 28 and the upper opening portion 27) passes through the respective radiant heat passing pores 30 and 40 formed in the rectifying plates 3, 3a, and 3b and the rectifying plates 4, 4a, and 4b and is emitted to the indoor space. The radiant heat is thus used directly and effectively to raise the temperature of the indoor air.

Also, a portion of the radiant heat radiated from the heating element 1 that could not pass through the respective radiant heat passing pores 30 and 40 is reflected by the reflecting surfaces 31 and 41 at the inner surface sides of the rectifying plates 3, 3a, and 3b and the rectifying plates 4, 4a, and 4b and further, diffuse reflection occurs between the heating element 1 and the reflecting surfaces 31 and 41 of the other opposing rectifying plates . A portion of the radiant heat is thus emitted to the indoor space through the respective radiant heat passing pores 30 and 40 and a portion is emitted to the indoor space from the lower opening portion 28 and the upper opening portion 27 between the rectifying plates 3, 3a, and 3b and the rectifying plates 4, 4a, and 4b. Further, a portion heats the rectifying plates 3, 3a, and 3b and the rectifying plates 4, 4a, and 4b and raises the temperature of the rectifying plates 3, 3a, and 3b and the rectifying plates 4, 4a, and 4b and radiant heat in outward directions from the respective rectifying plates is emitted to the indoor space.

Also, in performing cooling of the indoor space by the radiant heat exchanger R1, the thermal efficiency is better when the refrigerant is introduced from the upper side and passed to the lower side of the piping of the heating element 1 because ordinarily, the temperature is high and the heat energy for revaporization is greater near the ceiling 6 at the upper side. In the parallel type piping such as that of the heating element 1, the gas-liquid two-phase refrigerant is guided by the vertical pipes 12 branching from the upper header 10 and undergoes efficient heat exchange in the process of moving downward in the vertical pipes 12 by absorbing heat and also being acted on by gravity to change to a gas phase refrigerant, and the gas phase refrigerant is guided to the outdoor machine 90.

Although in the cooling process, the flow of air that is generated by the radiant heat exchanger R1 is opposite in direction to that generated during heating as described above, actions besides this are generally the same as those during heating.

As described above, with the radiant heat exchanger R1 according to the present embodiment, satisfactory convection of indoor air can be performed while reflection and emission of radiant heat are repeated as described above, and the indoor space is thus heated or cooled satisfactorily by the heat and the radiant heat transferred by the convection of air to enable air conditioning of the entire indoor space to be performed efficiently and effectively.

(Actions of the air conditioning system A1)

The actions of the air conditioning system A1 that includes the radiant heat exchanger R1, which provides the actions and functionality described above, are as follows.

Firstly in the heating process, the gas phase refrigerant, which is made high in temperature (for example, approximately 60 to 80°C) and high in pressure at the compressor 94 in accordance with the refrigeration cycle, is passed through the four-way selector valve 95 and supplied to the radiant heat exchanger R1 first. The temperature of the heating element 1 is thereby made to reach the temperature of the refrigerant in a comparatively short time and the radiant heat exchanger R1 emits radiant heat in accordance with the surface temperature of the heating element 1.

The radiant heat from the radiant heat exchanger R1 can act directly on the bodily sensation of a user and this together with the above-described promotion of convection of the indoor air by the radiant heat exchanger R1 causes the startup of air conditioning until comfort is provided to be quickened in comparison to the case of performing heating with the air conditioner 9 alone. Also, by the radiant heat propagating along the floor surface 5, the wall surface 8, and the ceiling surface 6 or directly to the human body, warmth can be obtained from the feet side so that warmth can be felt even if a low temperature is set by adjustment of the air conditioner 9 and consequently, energy saving is achieved.

The gas phase refrigerant that has passed through the radiant heat exchanger R1 is delivered, as the high-temperature, high-pressure gas phase refrigerant that has been lowered by approximately 5 to 10°C in temperature by heat dissipation, to the indoor machine 91 acting as the condenser and the indoor machine 91 performs heat exchange with the indoor air by means of the indoor side heat exchanger 97 and performs heating by condensation and heat dissipation of the refrigerant.

Also, in the cooling process, the refrigeration cycle that is opposite that in the heating process is set by switching of the four-way selector valve 95. That is, the liquid phase refrigerant that has been liquefied and has emitted heat at the outdoor side heat exchanger 93 of the outdoor machine 90 is reduced in pressure and expanded by the expansion valve 96 and the resulting refrigerant in the gas-liquid two-phase state of low temperature is supplied to the indoor machine 91 of the air conditioner 9, and the indoor machine 91 is made to act as the evaporator to draw heat from the indoor air and thereby perform cooling. The refrigerant in the gas-liquid two-phase state is then delivered from the indoor machine 91 to the radiant heat exchanger R1, and the radiant heat exchanger R1 is made to act as the evaporator to revaporize the refrigerant and thereby draw the heat of the indoor air and perform radiant cooling by radiation of cold from the heating element 1.

By revaporization of the refrigerant by heat exchange with the indoor air by the radiant heat exchanger R1, the temperature of the heating element 1 is lowered further. Also, although the refrigerant is vaporized completely and the refrigerant of increased pressure is introduced into the compressor 94 to be compressed further, the load on the compressor 94 is comparatively light because the pressure of the gas phase refrigerant is already high. By then delivering the refrigerant as the gas phase refrigerant of high temperature and high pressure to the outdoor side heat exchanger 93 acting as the condenser, condensation can be performed efficiently even at a lower temperature and even while reducing the load on the compressor as described above so that the efficiency of the air conditioner 9 as a heat pump is increased and energy saving is achieved.

Also at the compressor 94, by drawing in the gas phase refrigerant of low temperature and low pressure that has been promoted in vaporization, the load on the compressor 94 is lightened and energy saving is achieved in regard to this point as well. To put it shortly, the air conditioning system A1 puts the heat energy that was conventionally wasted without being used in air conditioning to effective use by adoption of the radiant heat exchanger R1 to improve the efficiency of the air conditioner 9 as a heat pump.

That is, the temperature of the indoor air can be lowered by using and consuming the heat energy of the indoor space to achieve phase change of the refrigerant, and it has thus become possible to use the unused energy of the gas-liquid two-phase refrigerant that was conventionally returned to the compressor 94 with latent heat energy remaining and improve the efficiency correspondingly. Further, by the gas-liquid two-phase refrigerant evaporating and revaporizing at the radiant heat exchanger R1, the refrigerant is turned into a low-temperature gas before being supplied to the compressor 94 and is thus supplied in the state of increased pressure to aid the operation of the compressor 94 and, at the same time, suppress reverse flow of the liquid phase of the refrigerant to enable elongation of the life of the compressor 94. Also, a gas-liquid separator (accumulator) can be made small in volume and compact in size.

Also in the cooling operation, so-called hybrid operation, with which the air conditioner 9 among the air conditioner 9 and the radiant heat exchanger R1 is put in operation with priority, is made possible to improve on the conventional slowness of startup of air conditioning by the radiation panel. Also, the temperatures of the floor surface 5, wall surface 8, and ceiling surface 6 are gradually decreased by the subsequent action of the radiant heat (cold) and the radiant heat from these acts in synergy on the bodily sensation of the user to enable comfort to be provided even when the air conditioner 9 is put in a weak operation state.

In regard to the operation of the air conditioning system A1, besides the respective operation modes mentioned above, that is, (1) the mode of putting the air conditioner 9 and the radiant heat exchanger R1 in operation at the same time, (2) the mode of stopping the operation of the radiant heat exchanger R1 and putting only the air conditioner 9 in operation, and (3) the mode of stopping the operation of the air conditioner 9 and putting only the radiant heat exchanger R1 in operation, there is also a method, in regard to the mode of putting only the radiant heat exchanger R1 in operation, of (4) stopping (turning off) the fan 970 at the indoor machine 91 side of the air conditioner 9 in the state where the air conditioner 9 and the radiant heat exchanger R1 are in operation.

The operation state and actions of the air conditioning system A1 in the case of (4) above will be described.

In the air conditioning system A1, the valves V5 and V6 are closed and the other valves V1, V2, V3, and V4 are opened by control by the control portion 99 and hybrid operation, in which the air conditioner 9 and the radiant heat exchanger R1 are put in operation at the same time, is performed. When the air conditioning of the indoor space is up and running and the room temperature reaches the set temperature, the fan 970 at the indoor machine 91 side is stopped.

In a case where air conditioning is to be performed with only the air conditioner, when the room temperature reaches the set temperature during cooling, energy saving operation is performed using the refrigeration cycle and the fan to maintain the set temperature, and ultimately the fan is stopped and further, the refrigeration cycle is also stopped. That is, when the fan is stopped, the indoor side heat exchanger can no longer function as the evaporator and the refrigeration cycle must inevitably be stopped.

If, in order to maintain the set temperature, blowing by the fan is performed with the refrigeration cycle stopped, the blown air becomes high in humidity and uncomfortable due to the influence of the moisture condensed as dew on the evaporator and applies an adverse effect on the cooled indoor air. Also, with the operation in which the operation and stoppage of the fan and the refrigeration cycle are repeated, startup of the refrigeration cycle, which is high in power consumption, is repeated and a large amount of energy is consumed wastefully.

In contrast, with the air conditioning system A1, the radiant heat exchanger R1, which is non-powered, acts as the evaporator during cooling even when the fan 970 of the indoor machine 91 is stopped and the refrigeration cycle can thus be maintained. The air conditioning system A1 can thus put practically only the radiant heat exchanger R1 in operation to perform energy saving operation that maintains comfort.

Also, by stoppage of the fan 970, quietness without motor noise and wind noise can be obtained, and an uncomfortable draft sensation and overcooling due to air blowing (cold air) by the air conditioner 9 can also be prevented.

Further, as mentioned above, the temperatures of the floor, wall, ceiling, human body, equipment, etc., are lowered by heat transfer by the radiant heat from the radiant heat exchanger R1 and non-uniformity of temperature in the vertical direction of the indoor space is thus lessened to provide improved comfort.

Radiant heat acts directly on the bodily sensation and enables a cooler sensation to be felt even at the same room temperature. Also, the blowing of the air conditioner 9 can be stopped as mentioned above and therefore by performing such control, the power consumption can be reduced to contribute to energy saving. Further, dehumidification of the indoor air can be performed by the cooling action of the heating element 1 to lower the humidity and thereby provide comfort.

In the case where air conditioning is performed with only the air conditioner, when the room temperature reaches the set temperature during heating, energy saving operation is performed using the refrigeration cycle and the fan to maintain the set temperature, and ultimately the fan is stopped and further, the refrigeration cycle is also stopped. That is, when the fan is stopped, the indoor side heat exchanger can no longer function as the condenser and the refrigeration cycle must inevitably be stopped.

If, in order to maintain the set temperature, blowing by the fan is performed with the refrigeration cycle stopped, the blown air becomes a wind of low temperature with an uncomfortable draft sensation and applies an adverse effect on the heated indoor air. Also, with the operation in which the operation and stoppage of the fan and the refrigeration cycle are repeated, startup of the refrigeration cycle, which is high in power consumption, is repeated and a large amount of energy is consumed wastefully as in the case of cooling described above.

In contrast, with the air conditioning system A1, the radiant heat exchanger R1, which is non-powered, acts as the condenser during heating even when the fan 970 of the indoor machine 91 is stopped and the refrigeration cycle can thus be maintained. The air conditioning system A1 can thus put practically only the radiant heat exchanger R1 in operation to perform energy saving operation that maintains comfort.

Also, by stoppage of the fan 970, quietness without motor noise and wind noise can be obtained, and an uncomfortable draft sensation and overcooling due to air blowing (warm air) by the air conditioner 9 can also be prevented.

Further, as in the case of cooling described above, the temperatures of the floor, wall, ceiling, human body, equipment, etc., are raised by heat transfer by the radiant heat from the radiant heat exchanger R1 and non-uniformity of temperature in the vertical direction of the indoor space is thus lessened to provide improved comfort. Radiant heat acts directly on the bodily sensation and enables a warmer sensation to be felt even at the same room temperature.

Such control of performing hybrid operation by putting the air conditioner and the radiant heat exchanger in operation at the same time and then stopping the fan of the air conditioner from that state to practically put only the radiant heat exchanger in operation may be performed similarly with air conditioning systems A2, A3, A4, A5, and A6 to be described later.

Also in regard to the operation of the air conditioning system A1, evaluation of PMV was performed for the respective cases of performing cooling and heating by just the air conditioner 9 and performing cooling and heating by the air conditioner 9 and the radiant heat exchanger A1. PMV (predicted mean vote) refers to the predicted mean of declarations of thermal sensation and is a theory presented by Professor Fanger of Technical University of Denmark and is an index of the thermal sensation felt by a human being. By calculating the PMV value, the degree of comfort can be determined with respect to a combination of six factors (air temperature, mean radiation temperature, wind speed, relative humidity, amount of clothing, and metabolic rate) related to the temperature environment.

The calculation formula for PMV is as follows.

$$PMV = (0.303e-0.036M+0.028) \times (M-W-Ed-Es-Ere-Cre-R-C)$$

M: metabolic rate ($W/m^2$) Ere: latent heat loss due to respiration ($W/m^2$)
W: mechanical workload ($W/m^2$) Cre: sensible heat loss due to respiration ($W/m^2$)
Ed: insensible water loss ($W/m^2$) R: radiative heat loss ($W/m^2$)
Es: evaporative heat loss from the skin surface ($w/m^2$)
C: convective heat loss ($W/m^2$)

The following states were assumed:

Summer 0.6 (short sleeve) and 1.1 (chair sitting) and
Winter 1.0 (suit) and 1.1 (chair sitting)

(Conditions)

Air conditioner cooling (room temperature: 24.2°C; globe temperature: 27°C; wind speed: 0.10m/s; humidity: 52.8%)
Air conditioner + radiant cooling (room temperature: 24.2°C; globe temperature: 26°C; wind speed: 0.10m/s; humidity: 51.6%)
Air conditioner heating (room temperature: 30.6°C; globe temperature: 31°C; wind speed: 0.10m/s; humidity: 40.0%)
Air conditioner + radiant heating (room temperature: 30.6°C; globe temperature: 31.8°C; wind speed: 0.10m/s; humidity: 41.9%)

The PMV evaluation is expressed by a numerical value from -3 to +3, with a PMV value of ±0 indicating a neutral state, a higher numerical value indicating a warmer or hotter sensation evaluation, and a lower numerical value indicating a cooler or colder sensation.

As indices, -3: cold; -2: cool; -1: slightly cool; ±0: neither cool nor warm; 1: slightly warm; 2: warm; 3: hot.

(Results for cooling)

Cooling by just the air conditioner ... PMV=0.25
Cooling by the air conditioner and the radiant heat exchanger ... PMV=0.09

The results were such that the numerical value is lower and coolness is felt more when the air conditioner 9 and the radiant heat exchanger R1 are put in linked operation than when the air conditioner is put in operation alone.

Cold radiation (heat absorbing action) of the radiant heat exchanger R1 and the lowering of humidity by the dehumidification action during cooling are considered to be the main reasons for the above results. That is, in addition to the cold radiation action of the radiant heat exchanger R1, the humidity is lowered because the moisture that condensed as dew on the surface of the heating element 1 due to heat exchange by the flow of air is collected in the drain pan 15 and the moisture is discharged outdoors, and it is considered that the two actions combine to provide improved comfort.

(Results for heating)

Heating by just the air conditioner ... PMV=1.99
Heating by the air conditioner and the radiant heat exchanger ... PMV=2.10

The results were such that the numerical value is higher and warmness is felt more when the radiant heat exchanger is put in linked operation than when the air conditioner is put in operation alone.

Also during cooling, the indoor machine 91 of the air conditioner 9 is used as the evaporator, the refrigerant that is heated by the heat of the indoor air and is partially put in the liquid phase (gas-liquid two-phase state) is, for example, approximately 7°C to 15°C, and the heating element 1 of the radiant heat exchanger R1 does not freeze because this refrigerant is passed through the heating element 1. Further, evaporation of the refrigerant is promoted by the heating by the heating element 1 of the radiant heat exchanger R1 and sufficient vaporization is performed so that the load on the compressor 94 is lightened to enable a contribution to be made toward elongating the life of the compressor 94 and also achieve energy saving.

With the air conditioning system A1, in accordance with the exhibition of the windless, noiseless radiant cooling and heating functions provided by the radiant heat exchanger R1, temperature non-uniformity of the floor surface 5, wall surface 8, and ceiling surface 6 is reduced, adequate comfort is provided even when the blowing amount of the indoor machine 91 is lowered, and an uncomfortable draft due to a high blowing amount from the indoor machine 91 can thus be suppressed. It thereby becomes possible to suppress the operation of the fan 970 of the indoor side heat exchanger 97 at the indoor machine 91 side to enable elongation of the life of the motor of the fan 970 and consequently enable elongation of the life of the indoor machine 91.

FIG. 7 will be referenced.

The air conditioning system A2 includes a multi air conditioner 9a that is widely used in stores, etc. , and two radiant heat exchangers R1. The multi air conditioner 9a has an outdoor machine 90a and two indoor machines 91a and 91b that are connected in parallel to the outdoor machine 90a and installed in respective indoor spaces. Also, as with the radiant heat exchanger R1 of the air conditioning system A1, the respective radiant heat exchangers R1 are installed between the floor 5 and the ceiling 6.

Also, although with the present embodiment, one radiant heat exchanger is installed per one indoor machine, a plurality of radiant heat exchangers may be connected and installed in series or in parallel per one indoor machine instead. Although the air conditioning system A2 differs from the air conditioning system A1 in having two units each of the indoor machine and radiant heat exchanger, that is, the indoor machines 91a and 91b and the radiant heat exchangers R1, the structures of each of the indoor machines 91a and 91b, each of the radiant heat exchangers R1, and the connecting piping 92a, 92b, and 92c and the respective valves V1 to V6 in each indoor space are the same as those in the air conditioning system A1 and description of the structures will thus be omitted.

Also, although with the present embodiment, one radiant heat exchanger is installed per one indoor machine, a plurality of radiant heat exchangers may be connected and installed in series or in parallel per one indoor machine instead.

Although the air conditioning system A2 differs from the air conditioning system A1 in having two units respectively of the indoor machines 91a and 91b and the radiant heat exchangers R1, the operation method and actions of the indoor machine 91a and radiant heat exchanger R1 and the indoor machine 91b and the radiant heat exchanger R1 in the respective indoor spaces are substantially the same as those of the indoor machine 91 and the radiant heat exchanger R1 in the air conditioning system A1 and description of the operation method and actions will thus be omitted.

FIG. 8 will be referenced.

The radiant heat exchanger R1 may be substituted by a radiant heat exchanger R2 shown in FIG. 8.

The radiant heat exchanger R2 has substantially the same structure as the radiant heat exchanger R1 with the exception that heating elements 1a and 1b, each with a serial type piping, differ in structure from the heating element 1 with the parallel type piping of the radiant heat exchanger R1. In FIGS. 8A and 8B, portions that are equivalent to those of the radiant heat exchanger R1 are provided with the same symbols and structural description of these portions will be omitted.

The heating elements 1a and 1b are provided in parallel at the front surface side and the rear surface side of the radiant heat exchanger R2 with a slight interval in between and are mutually the same in structure. A suspending beam member 19 is installed at upper end portions of the decorative frames 2a and 2b. The heating elements 1a and 1b are corrugated pipes, each formed of the same flat pipe as the vertical pipe 12 and having a plurality of U-shaped fold-back portions (symbol omitted) at the same heights at the upper and lower ends respectively.

Each of the vertical pipes 12 of the heating element 1 and the corrugated piping of the heating elements 1a and 1b may be formed of a pipe body 12a (see FIG. 6C) having a plurality of stria portions 121 running in parallel in the longitudinal direction on the inner surface or of a pipe body without stria portions formed therein.

With each of the heating elements 1a and 1b, the fold-back portions at the upper side are suspended by the suspending beam member 19 via a plurality of suspending members 190. Both end sides of the corrugated piping of each of the heating elements 1a and 1b respectively penetrate through the suspending beam member 19 and the supply/discharge pipes 13 and 14 are connected to the respective tip portions. The supply/discharge pipes 14 and 13 are connected to the piping 92a and 92b.

Also, although each of the heating elements 1a and 1b has the corrugated pipe arrangement described above and therefore, unlike the heating element 1 with the parallel piping arrangement, do not have the advantage of providing the above-described effects of passing the high-temperature, high-pressure gas phase refrigerant from the lower side to the upper side of the piping during heating and passing the gas-liquid two-phase refrigerant from the upper side to the lower side of the piping during cooling, the refrigerant may be passed from one of either of the upper and lower sides to the other side and the degree of freedom of the piping is thus high.

Also, in the process in which the refrigerant moves up and down repeatedly inside the piping, the downward movement of the gas-liquid two-phase refrigerant by the action of gravity and the upward movement of the gas phase refrigerant in the state that is hardly influenced by gravity are repeated alternately so that the refrigerant flows smoothly and heat exchange as the evaporator is also performed smoothly.

The form of the corrugated pipe is not restricted to that with which the direction of flow of the refrigerant is the up/down direction, and a corrugated pipe, to be described next, with which the direction of flow of the refrigerant is the horizontal direction may be adopted instead.

FIG. 9 will be referenced.

The radiant heat exchanger R1 may be substituted by a radiant heat exchanger R3 shown in FIG. 9.

The radiant heat exchanger R3 has substantially the same structure as the radiant heat exchanger R1 with the exception that a heating element 1c, with which the piping is a corrugated pipe with the refrigerant flow direction being the horizontal direction, differs in structure from the heating element 1 with the parallel type piping of the radiant heat exchanger R1. In FIGS. 9A and 9B, portions that are equivalent to those of the radiant heat exchanger R1 are provided with the same symbols and structural description of these portions will be omitted.

The heating element 1c is a corrugated pipe, formed of the same flat pipe as the vertical pipe 12 of the heating element 1 and having U-shaped fold-back portions (symbol omitted) at multiple steps at the right and left ends respectively. The heating element 1c is supported by the respective fold-back portions at the right and left ends being fixed by fixtures (symbol omitted) to supporting members 29 that are provided vertically at the respective inner sides of the decorative frames 2 and 2a. The respective end portions of the corrugated piping of the heating element 1c are respectively connected to the supply/discharge pipes 13 and 14. The supply/discharge pipes 14 and 13 are connected to the piping 92a and 92b.

As with the heating elements 1a and 1b, the corrugated piping of the heating element 1c may be formed of the pipe body 12a (see FIG. 6C) having the plurality of stria portions 121 running in parallel in the longitudinal direction on the inner surface or of a pipe body without stria portions formed therein.

Also, due to having the corrugated pipe arrangement described above, the heating element 1c, like the heating element 1, has the advantage of providing the above-described effects by passing the high-temperature, high-pressure gas phase refrigerant from the lower side to the upper side of the piping during heating and passing the gas-liquid two-phase refrigerant from the upper side to the lower side of the piping during cooling.

That is, during heating, the heating element 1 is heated by the gas phase refrigerant of high temperature being supplied from the supply/discharge pipe 14 to the heating element 1 and the air near the floor surface 5 at the lower side of the indoor space that is lower in temperature and large in temperature difference with respect to the upper side is heated first so that the heat exchange efficiency is high and effective heating can be performed. Also, the gas phase refrigerant is guided by the respective vertical pipes 12 branching from the lower header 11 and moves upward while condensing and dissipating heat. In this process, the refrigerant is in the gas phase and the refrigerant can thus move upward smoothly because gravity hardly acts on it.

Also during cooling, ordinarily, the temperature is high and the heat energy for revaporization is high near the ceiling at the upper side and therefore the heat efficiency is improved by introducing the refrigerant into the piping from the supply/discharge pipe 13 at the upper portion of the heating element 1c. Also, in the process of being guided by the piping and moving downward through the piping due to the action of gravity while absorbing heat, the gas-liquid two-phase refrigerant undergoes efficient heat exchange and changes to the gas phase refrigerant and the gas phase refrigerant is guided to the outdoor machine 90.

FIG. 10 and FIG. 11 will be referenced.

In FIGS. 10A and 10B, portions that are the same as or equivalent to those of the radiant heat exchanger R1 are provided with the same symbols and redundant descriptions concerning structure will be omitted.

The radiant heat exchanger R1 may be substituted by a radiant heat exchanger R4 shown in FIG. 10.

With the radiant heat exchanger R4, only the structure of a heating element 1d differs from that of the heating element 1 and the structures of other portions are the same as those of the radiant heat exchanger R1. Although the piping is of the parallel type in the heating element 1d, the piping is not restricted thereto and may be arranged as a corrugated pipe, which is of the serial type and with which the refrigerant flow direction is the vertical direction or the lateral direction.

The pipe body 12a (the same as the pipe body of FIG. 6C), which is the vertical pipe used in the heating element 1d, is surrounded by an outer shell body 18 that is for improving the heat exchange efficiency and is made of aluminum, which is excellent in thermal conductivity. The outer shell body 18 is made up of shell members 181 and 182 that are mutually the same in shape. The shell members 181 and 182 are formed so that when fitted together at fitting portions (symbols omitted) as shown in FIG. 11B, the outer shape of the transverse section is a substantially elliptical shape that is slightly flat. The respective fitting portions of the shell members 181 and 182 have concave surface portions (symbols omitted) that respectively fit in close contact with the outer shape (outer surface) of the pipe body 12a. Gaps 183 and 184 are formed in the longitudinal direction and mutually independently in the respective shell members 181 and 182. Although the gaps 183 and 184 are sealed in the present embodiment, these may be in communication with the ambient air instead.

A knurling process that forms a plurality of concavities and convexities 185 is applied to the outer surfaces (outer surfaces when fitted together) of the shell members 181 and 182 to increase the surface area and improve the heat exchange efficiency. As shown in FIG. 11B, in the state where the shell members 181 and 182 are fitted together to hold the pipe body 12a with the respective concave surface portions, the outer shell body 18 and the pipe body 12a do not move relative to each other. The respective outer shell bodies 18 enclosing the pipe bodies 12a are disposed in inverted-V shape (or zigzag) configurations such that with mutually adjacent outer shell bodies 18, the outer surfaces do not face each other as shown in FIG. 11A and mutual influence by radiant heat is thereby avoided, and the heat exchange efficiency is improved in regard to this point as well.

FIG. 12 will be referenced. Among the symbols in FIG. 12, EX7 indicates a "heating state," EX8 indicates a "cooling state," EX9 indicates "expansion during heating," and EX10 indicates "contraction during cooling."

The radiant heat exchanger R1 may be substituted by a radiant heat exchanger R5 shown in FIG. 12. The radiant heat exchanger R5 includes, at a lower portion of the heating element 1, a lower ventilation guiding member 17 that guides flowing air and includes an upper ventilation guiding member 18 at an upper portion of the heating element 1. The lower ventilation guiding member 17 is made up of two curved plates (symbols omitted) each having a width that is substantially equal to the length of the lower header pipe 11 of the heating element 1 and having a predetermined length in the up/down direction, and the respective curved plates are fixed to the decorative frames 2 and 2a so as to face the front surface side and the rear surface side of the drain pan 15.

Also, the upper ventilation guiding member 18 is made up of two curved plates (symbols omitted) each having a width that is substantially equal to the length of the upper header pipe 10 of the heating element 1 and having a predetermined length in the up/down direction, and the respective curved plates are fixed to the decorative frames 2 and 2a so as to face the front surface side and the rear surface side of the upper header pipe 10. The material of the lower ventilation guiding member 17 and the upper ventilation guiding member 18 is any of various metals or a synthetic resin, etc., but is not restricted thereto.

With the radiant heat exchanger R5, the flow of air in the gaps 39 and 49 occurs smoothly due to the provision of the lower ventilation guiding member 17 and the upper ventilation guiding member 18, and the flow or air by the chimney effect using the two-plate structure of the rectifying plates 3 and 3a and rectifying plates 4 and 4a in the present embodiment can thereby be made to occur even more efficiently.

The surfaces of the lower ventilation guiding member 17 and the upper ventilation guiding member 18 may be coated with a coating having a deodorizing function, an antibacterial function, or a volatile organic compound adsorption-decomposition function, etc., to achieve cleaning of the indoor air.

FIG. 13 will be referenced.

With each of the radiant heat exchangers R1, R2, R3, R4, and R5, an advertisement may be displayed on the surfaces of the front surface side rectifying plates 3 and 3a as shown in FIGS. 13A and 13B.

In FIG. 13A, advertisement characters 7a expressing the "ecowin" logo are printed in the vertical direction from the rectifying plate 3a to the rectifying plate 3 at the upper side. In FIG. 13B, advertisement characters 7b expressing the "ecowin" logo are printed in the width direction on the surface of a lower portion of the upper side rectifying plate 3.

Advertisement characters may similarly be printed on the rectifying plates 4 and 4a at the rear surface side. The expressions made on the respective rectifying plates are not restricted to advertisements, signs (marks and signboard displays), and various designs, and various artistic expressions, such as pictures, photographs, etc., may also be adopted.

By the above, the rectifying plates 3, 3a, and 3b and rectifying plates 4, 4a, and 4b, which have functions as covers of the heating element 1 in addition to the functionality of giving rise to the chimney effect that promotes the convection of air, can be utilized as advertisement panels and signs. That is, each of the radiant heat exchangers R1, R2, R3, R4, and R5 has a large exposed form of significant presence in the indoor space in which it is installed and use can be made of the exposed form to provide the function of a more effective advertisement.

FIG. 14 will be referenced.

The figures from here up to FIG. 17 express variations of the piping and valves as operation mode switching means. Although in FIG. 14 to FIG. 17, symbols are provided in the same manner as in FIG. 1 and numerals are left in the symbols of the valves for the sake of convenience, these numerals do not contain any meaning of order, sequence, or degree of importance, etc.

With an air conditioning system A3 shown in FIG. 14, the valve V2 is removed from the arrangement of the air conditioning system A1 so that the number of valves used is five and the arrangements of other portions are the same as those of the air conditioning system A1.

With the air conditioning system A3, when the outdoor machine 90 is to be put in operation together with the indoor machine 91 and the radiant heat exchanger R1, the valve V5 and the valve V6 are closed, and the valve V1, the valve V3, and the valve V4 are opened. Also, when operation of the indoor machine 91 is to be stopped and only the radiant heat exchanger R1 is to be put in operation, the valve V1 and the valve V6 are closed and the valve V3, the valve V4, and the valve V5 are opened. Further, when operation of the radiant heat exchanger R1 is to be stopped and only the indoor machine 91 is to be put in operation, the valve V3, the valve V4, and the valve V5 are closed and the valve V1 and the valve V6 are opened.

FIG. 15 will be referenced.

With an air conditioning system A4 shown in FIG. 15, the valve V2 and the valve V4 are removed from the arrangement of the air conditioning system A1 so that the number of valves used is four and the arrangements of other portions are the same as those of the air conditioning system A1. Besides this, with the present embodiment, operation in practically the same manner as described below can be performed even with an arrangement with which the valve V2 and the valve V3 are removed from the arrangement of the air conditioning system A1, an arrangement with which the valve V1 and the valve V3 are removed, or an arrangement with which the valve V1 and the valve V4 are removed.

With the air conditioning system A4, when the outdoor machine 90 is to be put in operation together with the indoor machine 91 and the radiant heat exchanger R1, the valve V5 and the valve V6 are closed, and the valve V1 and the valve V3 are opened. Also, when operation of the indoor machine 91 is to be stopped and only the radiant heat exchanger R1 is to be put in operation, the valve V1 and the valve V6 are closed and the valve V3 and the valve V5 are opened. Further, when operation of the radiant heat exchanger R1 is to be stopped and only the indoor machine 91 is to be put in operation, the valve V3 and the valve V5 are closed and the valve V1 and the valve V6 are opened.

FIG. 16 will be referenced.

With an air conditioning system A5 shown in FIG. 16, the piping 92c and the valves V1, V2, V3, V4, and V5 are removed from the arrangement of the air conditioning system A1 so that the valve used is the single valve V6 and the arrangements of other portions are the same as those of the air conditioning system A1.

With the air conditioning system A5, when the outdoor machine 90 is to be put in operation together with the indoor machine 91 and the radiant heat exchanger R1, the valve V6 is closed.

Also, when operation of the radiant heat exchanger R1 is to be stopped and only the indoor machine 91 is to be put in operation, the valve V6 is opened. Thus, the refrigerant passing through the piping 92 does not pass through the piping 92a, the piping 12 of the heating element 1, and the piping 92b that branch from the piping 92 and the sum course of the piping 92a, the piping 12 of the heating element 1, and the piping 92b is longer than the course between the connection portion to the piping 92a and the connection portion to the piping 92b but the refrigerant passes through the shorter course between the connection portion to the piping 92a and the connection portion to the piping 92b. Further, when operation of the indoor machine 91 is to be stopped and only the radiant heat exchanger R1 is to be put in operation, the fan 970 of the indoor machine 91 of the air conditioner 9 is stopped in the state where the valve V6 is closed. Thus, the indoor machine 91 cannot perform air conditioning and merely the refrigerant passes through the piping of the indoor side heat exchanger 97 so that practically, only the radiant heat exchanger R1 is put in operation.

FIG. 17 will be referenced.

With an air conditioning system A6 shown in FIG. 17, the piping 92c and the valves V1, V2, and V5 are removed from the arrangement of the air conditioning system A1 so that the valves used are the three valves of valve V6, valve V3, and valve V4, and the arrangements of other portions are the same as those of the air conditioning system A1. Besides this, with the present embodiment, operation in practically the same manner as described below can be performed even with an arrangement with which the valve V3 or the valve V4 is further removed.

With the air conditioning system A6, when the outdoor machine 90 is to be put in operation together with the indoor machine 91 and the radiant heat exchanger R1, the valve V6 is closed and the valve V3 and the valve V4 are opened. Also, when operation of the radiant heat exchanger R1 is to be stopped and only the indoor machine 91 is to be put in operation, the valve V6 is opened and the valve V3 and the valve V4 are closed. Further, when operation of the indoor machine 91 is to be stopped and only the radiant heat exchanger R1 is to be put in operation, the fan 970 of the indoor machine 91 of the air conditioner 9 is stopped in the state where the valve V6 is closed and the valve V3 and the valve V4 are open. Thus, the indoor machine 91 cannot perform air conditioning and merely the refrigerant passes through the piping of the indoor side heat exchanger 97 so that practically, only the radiant heat exchanger R1 is put in operation .

The main types of packaged air conditioners that are generally used are room air conditioners and building multi air conditioners. Room air conditioners are mainly for household use and building multi air conditioners are frequently used in business facilities, etc. Use in combination with such air conditioners is assumed with the radiant heat exchangers R1, R2, R3, R4, and R5, and in the experiments described below, combinations with an air conditioner including an inverter and combinations with an air conditioner without an inverter were compared in regard to the performance of the capabilities of the radiant heat exchangers for the case of heating.

The experiments were conducted in regard to change (transition) of temperature and change (transition) of power consumption in each of the following four cases.

<CASE 1> → Convection air conditioning by operation of only a room air conditioner with an inverter
<CASE 2> → Hybrid air conditioning by simultaneous operation of a radiant heat exchanger and the room air conditioner with the inverter
<CASE 3> → Convection air conditioning by operation of only a building multi air conditioner without an inverter
<CASE 4> → Hybrid air conditioning by simultaneous operation of a radiant heat exchanger and the building multi air conditioner without an inverter

(Comparative tests of temperature change)

- Comparisons using the room air conditioner (with inverter)

FIG. 18 will be referenced. FIG. 18 is a graph showing the changes of the room temperature in CASE 1 of putting only the air conditioner in operation and CASE 2 of putting the air conditioner and the radiant heat exchanger in operation simultaneously. In the figure, the (d) at the end of CASE indicates that the temperature measurement point is at the center of an experimental room and (e) indicates that the temperature measurement point is in front of the radiant heat exchanger .

The experimental conditions are as follows.

| Item | CASE 1 | CASE 2 |
|---|---|---|
| Set temperature °C | 27 | 24 |
| Air blowing amount | Minimal | Minimal |
| Air blowing direction | Horizontal | Horizontal |
| Test duration min | 90 | 90 |
| Outdoor air temperature (average) °C | 9.71 | 10.2 |
| Outdoor humidity (average) % | 18.1 | 22.7 |

(Discussion)

As shown in FIG. 18, until the elapse of 30 minutes, the temperature is higher in CASE 2 than in CASE 1 except during the first approximately 5 minutes . It can thus be understood that the rise of room temperature is faster in CASE 2 in which the radiant heat exchanger is used. Whereas in CASE 1, approximately 50 minutes were required for the room temperature at both (d) and (e) to reach the set temperature (27 °C), it took only 15 minutes for the room temperature to reach the set temperature (24°C) in CASE 2. In CASE 1, it took no less than 25 minutes to reach the set temperature (24°C) of CASE 2.

In CASE 2, the room became warm rapidly immediately after the start of the experiment and a steady state in which the PMV is 0 was attained in approximately 30 minutes. On the other hand, in CASE 1, the heating of the room was slow and it took approximately 50 minutes to attain the steady state in which the PMV is 0. From these results, it can be understood that even in consideration of the difference in set temperature, the hybrid type CASE 2 is higher in efficiency and better in comfort in comparison to the convection type CASE 1 using only the air conditioner.

- Comparisons using the building multi air conditioner (without inverter)

FIG. 19 will be referenced. FIG. 19 is a graph showing the changes of the room temperature in <CASE 3> of putting only the building multi air conditioner in operation and <CASE 4> of putting the building multi air conditioner and the radiant heat exchanger in operation simultaneously. In the figure, the (d) at the end of CASE indicates that the temperature measurement point is at the center of the experimental room and (g) indicates that the temperature measurement point is in front of the radiant heat exchanger.

The experimental conditions are as follows.

| Item | CASE 3 | CASE 4 |
| --- | --- | --- |
| Set temperature °C | 27 | 27 |
| Air blowing amount | Minimal | Minimal |
| Air blowing direction | Horizontal | Horizontal |
| Test duration min | 90 | 90 |
| Outdoor air temperature (average) °C | 10.5 | 11.8 |
| Outdoor humidity (average) % | 75.2 | 69.9 |

(Discussion)

At the measurement point (g) that is positioned in front of the radiant heat exchanger, a large difference in temperature transition was not seen between CASE 3 in which only the building multi air conditioner is put in operation and CASE 4 in which the building multi air conditioner and the radiant heat exchanger are put in operation together. Similarly, hardly any difference was seen between CASE 3 and CASE 4 at the measurement point (d) at the center of the experimental room. Further, a significant difference was not seen in regard to the rate of temperature rise as was observed in the cases using the room air conditioner.

Such differences in result with respect to the room air conditioner is considered to be due to the presence or non-presence of the inverter. With the hybrid air conditioning using the building multi air conditioner and the radiant heat exchanger, the operation of the radiant heat exchanger is stopped when the compressor is stopped. It is thus considered that the emission of radiant heat is insufficient and significant data thus could not be obtained as in the case of the room air conditioner.

(Comparative tests of power consumption)

- Comparisons using the room air conditioner (with inverter)

FIG. 20 will be referenced. FIG. 20 is a graph showing the changes of the power consumption in the case of putting only the air conditioner of the air conditioning system in operation and the case of putting the air conditioner and the radiant heat exchanger in operation simultaneously. Among the indications in FIG. 20, EX11 indicates the "power consumption."

The experimental conditions are as follows.

| Item | CASE 1 | CASE 2 |
| --- | --- | --- |
| Set temperature °C | 27 | 24 |
| Air blowing amount | Minimal | Minimal |
| Air blowing direction | Horizontal | Horizontal |
| Test duration min | 90 | 90 |
| Outdoor air temperature (average) °C | 9.71 | 10.2 |
| Outdoor humidity (average) % | 18.1 | 22.7 |
| Globe temperature (steady state) °C | 24 | 23.5 |
| Room temperature (steady state) °C | 25.8 | 24.4 |
| PMV (steady state) | 0.087442 | 0.085886 |

(Discussion)

It was confirmed that in both the initial operation state and the steady state, the power consumption is lower in CASE 2, in which the radiant heat exchanger is put in operation simultaneously with the air conditioner, than in CASE 1, in which only the air conditioner is put in operation. In the present analysis, a comparison of the total power consumption in the initial operation state and steady state is made to quantitatively demonstrate the energy saving effect of installing the radiant heat exchanger. In regard to the total power consumption at 90 minutes from the start of operation, a reduction of approximately 34% in comparison to CASE 1 was achieved in CASE 2 as shown below.

|  | CASE 1 | CASE 2 | Reduction effect % |
|---|---|---|---|
| Power consumption kWh/90 minutes | 1.103 | 0.73 | 33.8 |

- Comparisons using the building multi air conditioner (without inverter)

FIG. 21 will be referenced. FIG. 21 is a graph showing the changes of the power consumption in the case of putting only the building multi air conditioner of the air conditioning system in operation and the case of putting the building multi air conditioner and the radiant heat exchanger in operation simultaneously. Among the indications in FIG. 21, EX11 indicates the "power consumption."
The experimental conditions are as follows.

| Item | CASE 3 | CASE 4 |
|---|---|---|
| Set temperature °C | 27 | 27 |
| Air blowing amount | Minimal | Minimal |
| Air blowing direction | Horizontal | Horizontal |
| Test duration min | 90 | 90 |
| Outdoor air temperature (average) °C | 10.49 | 11.8 |
| Outdoor humidity (average) % | 75.2 | 69.9 |
| Globe temperature (steady state) °C | 23.3 | 23.8 |
| Room temperature (steady state) °C | 24.5 | 24.4 |
| PMV (steady state) | 0.015546 | 0.039101 |

(Discussion)

A reduction effect was not seen in regard to the total power consumption at 90 minutes from the start of operation. This is considered to be due to the building multi air conditioner lacking an inverter function and the radiant heat from the radiant heat exchanger thus not being emitted sufficiently.

|  | CASE 3 | CASE 4 | Reduction effect % |
|---|---|---|---|
| Power consumption kWh/90 minutes | 1.566 | 1.686 | -8 |

As mentioned above, the effect of the radiant heat exchanger was confirmed sufficiently in the case of the room air conditioner that includes the inverter. On the other hand, with the building multi air conditioner without an inverter, hardly any differences were observed between using and not using the radiant heat exchanger in both the temperature change comparison test and the power consumption comparison test, and the effect of the radiation heat exchanger could not be observed.
It was thus found that the radiant heat exchanger can exhibits its functions sufficiently in combination with an air conditioner having an inverter, with which the stopped state is not entered frequently and radiant heat can be emitted in a sustained manner from the radiant heat exchanger. Also, although the above experiments were performed for the case of heating, similar results can be presumed for the case of cooling in regard to the point that an air conditioner with an inverter should be used to make the radiant heat exchanger exhibit its functions sufficiently.

DESCRIPTION OF THE SYMBOLS

A1: air conditioning system
9: air conditioner, 90: outdoor machine, 91: indoor machine, 92: piping, 92a, 92b, 92c: piping, 93: outdoor side heat exchanger, 930: fan

94: compressor, 95: four-way selector valve, 96: expansion valve, 97: indoor side heat exchanger, 970: fan, 98: piping, 99: control portion

V1, V2, V3, V4, V5, V6: valve

R1: radiant heat exchanger

1: heating element, 10: upper header pipe, 11: lower header pipe, 12: vertical pipe, 120: flow path, 13: supply/discharge pipe, 14: supply/discharge pipe, 15: drain pan, 16: drain pipe, 160: drainage pipe, 12a: piping, 121: stria portion

2, 2a: decorative frame, 20, 21: lower fixing member, 22, 23: upper fixing member, 24, 25: fixture, 26: reinforcing member, 27: upper opening portion, 28: lower opening portion

3, 3a, 3b: rectifying plate, 30: radiant heat passing pore, 31: reflecting surface, 39: gap

4, 4a, 4b: rectifying plate, 40: radiant heat passing pore, 41: reflecting surface, 49: gap

5: floor surface, 50: lower clearance

6: ceiling surface, 60: upper clearance

7a, 7b: advertisement characters

8: wall surface

R2: radiant heat exchanger

1a, 1b: heating element

19: suspending beam member, 190: suspending member

R3: radiant heat exchanger

1c: heating element

29: supporting member

R4: radiant heat exchanger

1d: heating element

18: outer shell body, 181, 182: shell member, 183, 184: gap, 185: stria portion

R5: radiant heat exchanger

17: lower ventilation guiding member, 18: upper ventilation guiding member

A2: air conditioning system

9a: multi air conditioner, 90a: outdoor machine

91a, 91b: indoor machine

A3: air conditioning system

A4: air conditioning system

A5: air conditioning system

A6: air conditioning system

## Claims

1.  An air conditioning system (A1) comprising:

    an air conditioner (9) having a refrigerant circuit, in which a compressor (94), an expansion valve (96), a flow path switching valve (95), an indoor side heat exchanger (97), and an outdoor side heat exchanger (93) are connected by piping to circulate a refrigerant to perform a refrigeration cycle, and comprising a fan (930; 970), said fan (930; 970) supplying air, which has undergone heat exchange with the refrigerant at the indoor side heat exchanger (97), to an indoor space;
    a radiant heat exchanger (R1) having a heating element (1) incorporated in the refrigerant circuit of the air conditioner (9);
    **characterized in that** the air conditioning system (A1) comprises rectifying plates (30, 40) sandwiching the heating element (1) of the radiant heat exchanger (Rl) in between and each covering a surface (31, 41) of the heating element (1) across a gap (39, 49) provided with respect to the surface (31, 41), the rectifying plates (30, 40) having the inner surface (31, 41) arranged as a reflecting surface (31, 41) that reflects the radiant heat radiated from the heating element (1), having a radiant heat passing portion penetrating through the inner and outer surfaces (31, 41) and allowing passage of radiant heat and air, and promoting air convection by a chimney effect, and further comprises
    operation mode switching means by which switching to a single operation mode among the respective operation modes of a first operation mode of putting the air conditioner (9) and the radiant heat exchanger (R1) in operation, a second operation mode of putting only the air conditioner (9) in operation, and a third operation mode of putting only the radiant heat exchanger (R1) in operation is performed automatically or manually; and
    wherein the operation mode switching means includes
    a first piping connecting the expansion valve (96) and the indoor side heat exchanger (97),

a first valve that the first piping has in its course,

a second piping connecting the flow path switching valve (95) and the indoor side heat exchanger (97), a second valve that the second piping has in its course,

a third piping having one end side connected to the second piping and the other end side connected to one end side of the piping of the heating element (1) of the radiant heat exchanger (R1),

a third valve that the third piping has in its course,

a fourth piping having one end side connected to the other end side of the piping of the heating element (1) of the radiant heat exchanger (R1) and the other end side connected to the second piping at a position closer to the flow path switching valve (95) than the second valve,

a fourth valve that the fourth piping has in its course,

a fifth piping having one end side connected to the second piping at a position closer to the flow path switching valve (95) than the second valve and the other end side connected to the first piping at a position closer to the expansion valve (96) than the first valve,

a fifth valve that the fifth piping has in its course, and

a sixth valve that the second piping has in a course between the connection portions to the fourth piping and the third piping.

2. An air conditioning system (A2) comprising:

an air conditioner (9) having a refrigerant circuit, in which a compressor (94), an expansion valve (96), a flow path switching valve (95), an indoor side heat exchanger (97), and an outdoor side heat exchanger (93) are connected by piping to circulate a refrigerant to perform a refrigeration cycle, and comprising a fan (930; 970), said fan (930; 970) supplying air, which has undergone heat exchange with the refrigerant at the indoor side heat exchanger (97), to an indoor space ;

a radiant heat exchanger (R2) having a heating element (1a, 1b) incorporated in the refrigerant circuit of the air conditioner (9);

**characterized in that** the air conditioning system (A2) comprises rectifying plates (30, 40) sandwiching the heating element (1) of the radiant heat exchanger (RI) in between and each covering a surface (31, 41) of the heating element (1) across a gap (39, 49) provided with respect to the surface (31, 41), the rectifying plates (30, 40) having the inner surface (31, 41) arranged as a reflecting surface (31, 41) that reflects the radiant heat radiated from the heating element (1), having a radiant heat passing portion penetrating through the inner and outer surfaces (31, 41) and allowing passage of radiant heat and air, and promoting air convection by a chimney effect, and further comprises an operation mode switching means by which switching to a single operation mode among the respective operation modes of a first operation mode of putting the air conditioner (9) and the radiant heat exchanger (R2) in operation, a second operation mode of putting only the air conditioner (9) in operation, and a third operation mode of putting only the radiant heat exchanger (R2) in operation is performed automatically or manually; and

wherein the operation mode switching means includes

a first piping connecting the expansion valve (96) and the indoor side heat exchanger (97),

a second piping connecting the flow path switching valve (95) and the indoor side heat exchanger (97),

a third piping having one end side connected to the second piping and the other end side connected to one end side of the piping of the heating element (1a, 1b) of the radiant heat exchanger (R2),

a fourth piping having one end side connected to the other end side of the piping of the heating element (1a, 1b) of the radiant heat exchanger (R2) and the other end side connected to the second piping at a position closer to the indoor side heat exchanger (97) than the connection portion to the third piping,

a fifth piping having one end side connected to the second piping at a position near the connection portion to the fourth piping and the other end side connected to the first piping,

a valve that the fifth piping has in its course, and

a valve that the second piping has in its course between the connection portions to the fourth piping and the third piping, and

one of either of the first piping and the second piping has a valve in its course or one of either of the third piping and the fourth piping has a valve in its course.

3. An air conditioning system (A3) comprising:

an air conditioner (9) having a refrigerant circuit, in which a compressor (94), an expansion valve (96), a flow path switching valve (95), an indoor side heat exchanger (97), and an outdoor side heat exchanger (93) are connected by piping to circulate a refrigerant to perform a refrigeration cycle, and comprising a fan (930; 970), said fan (930; 970) supplying air, which has undergone heat exchange with the refrigerant at the indoor side heat exchanger (97), to an indoor space ;

a radiant heat exchanger (R3) having a heating element (1c) incorporated in the refrigerant circuit of the air conditioner (9);

**characterized in that** the air conditioning system (A3) comprises rectifying plates (30, 40) sandwiching the heating element (1) of the radiant heat exchanger (Rl) in between and each covering a surface (31, 41) of the heating element (1) across a gap (39, 49) provided with respect to the surface (31, 41), the rectifying plates (30, 40) having the inner surface (31, 41) arranged as a reflecting surface (31, 41) that reflects the radiant heat radiated from the heating element (1), having a radiant heat passing portion penetrating through the inner and outer surfaces (31, 41) and allowing passage of radiant heat and air, and promoting air convection by a chimney effect, and further comprises

an operation mode switching means by which switching to a single operation mode among the respective operation modes of a first operation mode of putting the air conditioner (9) and the radiant heat exchanger (R3) in operation, a second operation mode of putting only the air conditioner (9) in operation, and a third operation mode of putting only the radiant heat exchanger (R3) in operation is performed automatically or manually; and wherein the operation mode switching means includes

a first piping connecting the expansion valve (96) and the indoor side heat exchanger (97),

a second piping connecting the flow path switching valve (95) and the indoor side heat exchanger (97),

a third piping having one end side connected to the second piping and the other end side connected to one end side of the piping of the heating element (1c) of the radiant heat exchanger (R3),

a fourth piping having one end side connected to the other end side of the piping of the heating element (1c) of the radiant heat exchanger (R3) and the other end side connected to the second piping at a position closer to the indoor side heat exchanger (97) than the connection portion to the third piping,

a fifth piping having one end side connected to the second piping at a position near the connection portion to the fourth piping and the other end side connected to the first piping,

a valve that the fifth piping has in its course, and

a valve that the second piping has in its course between the connection portions to the fourth piping and the third piping, and

one of either of the first piping and the second piping has a valve in its course and one of either of the third piping and the fourth piping has a valve in its course.

4. An air conditioning system (A4) comprising:

an air conditioner (9) having a refrigerant circuit, in which a compressor (94), an expansion valve (96), a flow path switching valve (95), an indoor side heat exchanger (97), and an outdoor side heat exchanger (93) are connected by piping to circulate a refrigerant to perform a refrigeration cycle, and comprising a fan (930; 970), said fan (930; 970) supplying air, which has undergone heat exchange with the refrigerant at the indoor side heat exchanger (97), to an indoor space ;

a radiant heat exchanger (R4) having a heating element (1d) incorporated in the refrigerant circuit of the air conditioner (9);

**characterized in that** the air conditioning system (A4) comprises rectifying plates (30, 40) sandwiching the heating element (1) of the radiant heat exchanger (Rl) in between and each covering a surface (31, 41) of the heating element (1) across a gap (39, 49) provided with respect to the surface (31, 41), the rectifying plates (30, 40) having the inner surface (31, 41) arranged as a reflecting surface (31, 41) that reflects the radiant heat radiated from the heating element (1), having a radiant heat passing portion penetrating through the inner and outer surfaces (31, 41) and allowing passage of radiant heat and air, and promoting air convection by a chimney effect, and further comprises

an operation mode switching means by which switching to a single operation mode among the respective operation modes of a first operation mode of putting the air conditioner (9) and the radiant heat exchanger (R4) in operation, a second operation mode of putting only the air conditioner (9) in operation, and a third operation mode of putting only the radiant heat exchanger (R4) in operation is performed automatically or manually; and wherein the operation mode switching means includes

a first piping connecting the expansion valve (96) and the indoor side heat exchanger (97),

a second piping connecting the flow path switching valve (95) and the indoor side heat exchanger (97),

a third piping having one end side connected branchingly to the second piping and the other end side connected to one end side of the piping of the heating element (1d) of the radiant heat exchanger (R4),

a fourth piping having one end side connected to the other end side of the piping of the heating element (1d) of the radiant heat exchanger (R4) and the other end side connected branchingly to the second piping, and

a valve that the second piping has in its course between the connection portion to the third piping and the connection portion to the fourth piping, and

the length of the course that is the sum of the third piping, the piping of the heating element (1d), and the fourth piping is formed to be longer than the length of the course between the connection portion to the third piping and the connection portion to the fourth piping.

5. An air conditioning system (A5) comprising:

an air conditioner (9) having a refrigerant circuit, in which a compressor (94), an expansion valve (96), a flow path switching valve (95), an indoor side heat exchanger (97), and an outdoor side heat exchanger (93) are connected by piping to circulate a refrigerant to perform a refrigeration cycle, and comprising a fan (930; 970), said fan (930; 970) supplying air, which has undergone heat exchange with the refrigerant at the indoor side heat exchanger (97), to an indoor space;

a radiant heat exchanger (R5) having a heating element (1) incorporated in the refrigerant circuit of the air conditioner (9);

**characterized in that** the air conditioning system (A5) comprises rectifying plates (30, 40) sandwiching the heating element (1) of the radiant heat exchanger (RI) in between and each covering a surface (31, 41) of the heating element (1) across a gap (39, 49) provided with respect to the surface (31, 41), the rectifying plates (30, 40) having the inner surface (31, 41) arranged as a reflecting surface (31, 41) that reflects the radiant heat radiated from the heating element (1), having a radiant heat passing portion penetrating through the inner and outer surfaces (31, 41) and allowing passage of radiant heat and air, and promoting air convection by a chimney effect, and further comprises

an operation mode switching means by which switching to a single operation mode among the respective operation modes of a first operation mode of putting the air conditioner (9) and the radiant heat exchanger (R5) in operation, a second operation mode of putting only the air conditioner (9) in operation, and a third operation mode of putting only the radiant heat exchanger (R5) in operation is performed automatically or manually; and wherein the operation mode switching means includes

a first piping connecting the expansion valve (96) and the indoor side heat exchanger (97), a second piping connecting the flow path switching valve (95) and the indoor side heat exchanger (97),

a third piping having one end side connected to the second piping and the other end side connected to one end side of the piping of the heating element (1) of the radiant heat exchanger (R5),

a fourth piping having one end side connected to the other end side of the piping of the heating element (1) of the radiant heat exchanger (R5) and the other end side connected to the second piping, and

a valve that the second piping has in its course between the connection portion to the third piping and the connection portion to the fourth piping, and

either or both of the third piping and the fourth piping has or have a valve in the course or courses thereof.

6. The air conditioning system (A1; A2; A3; A4; A5) according to Claim 1, 2, 3, 4, or 5, wherein the heating element (1, 1a, 1b, 1c, 1d) has a plurality of piping, the piping is connected in parallel to the piping making up the refrigerant circuit, the direction of flow of the refrigerant is the up/down direction, wherein the piping is adapted such that a gas-liquid two-phase refrigerant is able to pass through from the upper sides to the lower sides of the piping of the heating element (1, 1a, 1b, 1c, 1d) during cooling, and a gas phase refrigerant is able to pass through from the lower sides to the upper sides of the piping of the heating element (1, 1a, 1b, 1c, 1d) during heating.

7. The air conditioning system according to Claim 6, wherein the piping of the heating element (1, 1a, 1b, 1c, 1d) has a corrugated pipe arrangement, which is connected in series to the piping making up the refrigerant circuit and with which the direction of flow of the refrigerant is the up/down direction.

8. The air conditioning system according to Claim 6, wherein the piping of the heating element (1, 1a, 1b, 1c, 1d) has a corrugated pipe arrangement, which is connected in series to the piping making up the refrigerant circuit and with which the direction of flow of the refrigerant is the horizontal direction, wherein the piping is adapted such that a gas-liquid two-phase refrigerant is able to pass from the upper side to the lower side of the piping of the heating element (1, 1a, 1b, 1c, 1d) during cooling, and a gas phase refrigerant is able to pass from the lower side to the upper side of the piping during heating.

9. The air conditioning system according to Claim 1, 2, 3, 4, or 5, wherein

end members connecting the respective rectifying plates (30, 40) are disposed at end portions at both sides of the respective rectifying plates (30, 40) to form a tubular body that is open at an upper portion and a lower portion, and the heating element (1, 1a, 1b, 1c, 1d) is enclosed in the tubular body.

10. The air conditioning system according to Claim 1, 2, 3, 4, or 5, wherein
the air conditioner (9) is a multi air conditioner (9) having a plurality of indoor side heat exchangers (97), with piping connected in parallel, with respect to the single outdoor side heat exchanger (93) and one or a plurality of the radiant heat exchanger (R1; R2; R3; R4; R5) is or are installed in respective correspondence to the plurality of indoor side heat exchangers (97).

11. The air conditioning system according to Claim 1, 2, 3, 4, or 5, wherein
the air conditioner (9) is an inverter air conditioner (9) that performs inverter control of the compressor (94).

12. The air conditioning system according to Claim 6 wherein
the piping of the heating element (1, 1a, 1b, 1c, 1d) is a flat pipe having a plurality of flow paths running in parallel in the longitudinal direction in the interior or a pipe having a plurality of stria portions running in parallel in the longitudinal direction on the inner surface (31, 41).

13. The air conditioning system according to Claim 1, 2, 3, 4, or 5, wherein
a ventilation guiding member, which guides the air that enters and exits the gaps (39, 49) at the inner sides of the rectifying plates (30, 40) so that the air flows smoothly, is disposed at the upper side or the lower side or the upper side and the lower side of the heating element (1, 1a, 1b, 1c, 1d).

14. The air conditioning system according to Claim 1, 2, 3, 4, or 5, wherein
one or a plurality of types of processing or coating, selected from among knurling, alumite processing, heat dissipation coating, far infrared ray emission coating, and coating having a deodorizing function, an antibacterial function, or a volatile organic compound adsorption-decomposition function, is applied to the surface (31, 41) of the heating element (1, 1a, 1b, 1c, 1d).

15. The air conditioning system according to Claim 6, wherein
an advertisement or an art image is displayed on the surface (31, 41) of the rectifying plate.

16. An operation method for air conditioning system (A1),
wherein in an air conditioning system (A1) including an air conditioner (9) having a refrigerant circuit, in which a compressor (94), an expansion valve (96), a flow path switching valve (95), an indoor side heat exchanger (97), and an outdoor side heat exchanger (93) are connected by piping to circulate a refrigerant to perform a refrigeration cycle, and supplying air, which has undergone heat exchange with the refrigerant at the indoor side heat exchanger (97), to an indoor space by a fan (930; 970),
a radiant heat exchanger (R1) having a heating element (1) incorporated in the refrigerant circuit of the air conditioner (9), and
an operation mode switching means, by which switching to a single operation mode among the respective operation modes of a first operation mode of putting the air conditioner (9) and the radiant heat exchanger (R1) in operation, a second operation mode of putting only the air conditioner (9) in operation, and a third operation mode of putting only the radiant heat exchanger (R1) in operation is performed automatically or manually,
when the air conditioner (9) and the radiant heat exchanger (R1) are put in operation in the first operation mode, the fan (930; 970) of the air conditioner (9) is stopped to practically put only the radiant heat exchanger (R1) in operation,
**characterized in that** the air conditioning system comprises rectifying plates (30, 40) sandwiching the heating element (1) of the radiant heat exchanger (RI) in between and each covering a surface (31, 41) of the heating element (1) across a gap (39, 49) provided with respect to the surface (31, 41), the rectifying plates (30, 40) having the inner surface (31, 41) arranged as a reflecting surface (31, 41) that reflects the radiant heat radiated from the heating element (1), having a radiant heat passing portion penetrating through the inner and outer surfaces (31, 41) and allowing passage of radiant heat and air, and promoting air convection by a chimney effect, and the operation mode switching means includes
a first piping connecting the expansion valve (96) and the indoor side heat exchanger (97),
a first valve that the first piping has in its course,
a second piping connecting the flow path switching valve (95) and the indoor side heat exchanger (97), a second valve that the second piping has in its course,

a third piping having one end side connected to the second piping and the other end side connected to one end side of the piping of the heating element (1) of the radiant heat exchanger (R1),

a third valve that the third piping has in its course,

a fourth piping having one end side connected to the other end side of the piping of the heating element (1) of the radiant heat exchanger (R1) and the other end side connected to the second piping at a position closer to the flow path switching valve (95) than the second valve,

a fourth valve that the fourth piping has in its course,

a fifth piping having one end side connected to the second piping at a position closer to the flow path switching valve (95) than the second valve and the other end side connected to the first piping at a position closer to the expansion valve (96) than the first valve,

a fifth valve that the fifth piping has in its course, and

a sixth valve that the second piping has in a course between the connection portions to the fourth piping and the third piping.

17. An operation method for air conditioning system (A2),

wherein in an air conditioning system (A2) including an air conditioner (9) having a refrigerant circuit, in which a compressor (94), an expansion valve (96), a flow path switching valve (95), an indoor side heat exchanger (97), and an outdoor side heat exchanger (93) are connected by piping to circulate a refrigerant to perform a refrigeration cycle, and supplying air, which has undergone heat exchange with the refrigerant at the indoor side heat exchanger (97), to an indoor space by a fan (930; 970),

a radiant heat exchanger (R2) having a heating element (1a, 1b) incorporated in the refrigerant circuit of the air conditioner (9), and

an operation mode switching means, by which switching to a single operation mode among the respective operation modes of a first operation mode of putting the air conditioner (9) and the radiant heat exchanger (R2) in operation, a second operation mode of putting only the air conditioner (9) in operation, and a third operation mode of putting only the radiant heat exchanger (R2) in operation is performed automatically or manually,

when the air conditioner (9) and the radiant heat exchanger (R2) are put in operation in the first operation mode, the fan (930; 970) of the air conditioner (9) is stopped to practically put only the radiant heat exchanger (R2) in operation,

**characterized in that** the air conditioning system comprises rectifying plates (30, 40) sandwiching the heating element (1) of the radiant heat exchanger (RI) in between and each covering a surface (31, 41) of the heating element (1) across a gap (39, 49) provided with respect to the surface (31, 41), the rectifying plates (30, 40) having the inner surface (31, 41) arranged as a reflecting surface (31, 41) that reflects the radiant heat radiated from the heating element (1), having a radiant heat passing portion penetrating through the inner and outer surfaces (31, 41) and allowing passage of radiant heat and air, and promoting air convection by a chimney effect, and the operation mode switching means includes

a first piping connecting the expansion valve (96) and the indoor side heat exchanger (97),

a second piping connecting the flow path switching valve (95) and the indoor side heat exchanger (97),

a third piping having one end side connected to the second piping and the other end side connected to one end side of the piping of the heating element (1a, 1b) of the radiant heat exchanger (R2),

a fourth piping having one end side connected to the other end side of the piping of the heating element (1a, 1b) of the radiant heat exchanger (R2) and the other end side connected to the second piping at a position closer to the indoor side heat exchanger (97) than the connection portion to the third piping,

a fifth piping having one end side connected to the second piping at a position near the connection portion to the fourth piping and the other end side connected to the first piping,

a valve that the fifth piping has in its course, and

a valve that the second piping has in its course between the connection portions to the fourth piping and the third piping, and

one of either of the first piping and the second piping has a valve in its course or one of either of the third piping and the fourth piping has a valve in its course.

18. An operation method for air conditioning system (A3),

wherein in an air conditioning system (A3) including an air conditioner (9) having a refrigerant circuit, in which a compressor (94), an expansion valve (96), a flow path switching valve (95), an indoor side heat exchanger (97), and an outdoor side heat exchanger (93) are connected by piping to circulate a refrigerant to perform a refrigeration cycle, and supplying air, which has undergone heat exchange with the refrigerant at the indoor side heat exchanger (97), to an indoor space by a fan (930; 970),

a radiant heat exchanger (R3) having a heating element (1c) incorporated in the refrigerant circuit of the air conditioner (9), and

an operation mode switching means, by which switching to a single operation mode among the respective operation modes of a first operation mode of putting the air conditioner (9) and the radiant heat exchanger (R3) in operation, a second operation mode of putting only the air conditioner (9) in operation, and a third operation mode of putting only the radiant heat exchanger (R3) in operation is performed automatically or manually,

when the air conditioner (9) and the radiant heat exchanger (R3) are put in operation in the first operation mode, the fan (930; 970) of the air conditioner (9) is stopped to practically put only the radiant heat exchanger (R3) in operation,

**characterized in that** the air conditioning system comprises rectifying plates (30, 40) sandwiching the heating element (1) of the radiant heat exchanger (RI) in between and each covering a surface (31, 41) of the heating element (1) across a gap (39, 49) provided with respect to the surface (31, 41), the rectifying plates (30, 40) having the inner surface (31, 41) arranged as a reflecting surface (31, 41) that reflects the radiant heat radiated from the heating element (1), having a radiant heat passing portion penetrating through the inner and outer surfaces (31, 41) and allowing passage of radiant heat and air, and promoting air convection by a chimney effect, and the operation mode switching means includes

a first piping connecting the expansion valve (96) and the indoor side heat exchanger (97),

a second piping connecting the flow path switching valve (95) and the indoor side heat exchanger (97),

a third piping having one end side connected to the second piping and the other end side connected to one end side of the piping of the heating element (1c) of the radiant heat exchanger (R3),

a fourth piping having one end side connected to the other end side of the piping of the heating element (1c) of the radiant heat exchanger (R3) and the other end side connected to the second piping at a position closer to the indoor side heat exchanger (97) than the connection portion to the third piping,

a fifth piping having one end side connected to the second piping at a position near the connection portion to the fourth piping and the other end side connected to the first piping,

a valve that the fifth piping has in its course, and

a valve that the second piping has in its course between the connection portions to the fourth piping and the third piping, and

one of either of the first piping and the second piping has a valve in its course and one of either of the third piping and the fourth piping has a valve in its course.

19. An operation method for air conditioning system (A4),

wherein in an air conditioning system (A4) including an air conditioner (9) having a refrigerant circuit, in which a compressor (94), an expansion valve (96), a flow path switching valve (95), an indoor side heat exchanger (97), and an outdoor side heat exchanger (93) are connected by piping to circulate a refrigerant to perform a refrigeration cycle, and supplying air, which has undergone heat exchange with the refrigerant at the indoor side heat exchanger (97), to an indoor space by a fan (930; 970),

a radiant heat exchanger (R4) having a heating element (1d) incorporated in the refrigerant circuit of the air conditioner (9), and

promoting air convection by a chimney effect, and

an operation mode switching means, by which switching to a single operation mode among the respective operation modes of a first operation mode of putting the air conditioner (9) and the radiant heat exchanger (R4) in operation, a second operation mode of putting only the air conditioner (9) in operation, and a third operation mode of putting only the radiant heat exchanger (R4) in operation is performed automatically or manually,

when the air conditioner (9) and the radiant heat exchanger (R4) are put in operation in the first operation mode, the fan (930; 970) of the air conditioner (9) is stopped to practically put only the radiant heat exchanger (R4) in operation,

**characterized in that** the air conditioning system comprises rectifying plates (30, 40) sandwiching the heating element (1) of the radiant heat exchanger (RI) in between and each covering a surface (31, 41) of the heating element (1) across a gap (39, 49) provided with respect to the surface (31, 41), the rectifying plates (30, 40) having the inner surface (31, 41) arranged as a reflecting surface (31, 41) that reflects the radiant heat radiated from the heating element (1), having a radiant heat passing portion penetrating through the inner and outer surfaces (31, 41) and allowing passage of radiant heat and air, and promoting air convection by a chimney effect, and the operation mode switching means includes

a first piping connecting the expansion valve (96) and the indoor side heat exchanger (97),

a second piping connecting the flow path switching valve (95) and the indoor side heat exchanger (97),

a third piping having one end side connected branchingly to the second piping and the other end side connected to one end side of the piping of the heating element (1d) of the radiant heat exchanger (R4),

a fourth piping having one end side connected to the other end side of the piping of the heating element (1d) of the radiant heat exchanger (R4) and the other end side connected branchingly to the second piping, and
a valve that the second piping has in its course between the connection portion to the third piping and the connection portion to the fourth piping, and
the length of the course that is the sum of the third piping, the piping of the heating element (1d), and the fourth piping is formed to be longer than the length of the course between the connection portion to the third piping and the connection portion to the fourth piping.

20. An operation method for air conditioning system (A5),
wherein in an air conditioning system (A5) including an air conditioner (9) having a refrigerant circuit, in which a compressor (94), an expansion valve (96), a flow path switching valve (95), an indoor side heat exchanger (97), and an outdoor side heat exchanger (93) are connected by piping to circulate a refrigerant to perform a refrigeration cycle, and supplying air, which has undergone heat exchange with the refrigerant at the indoor side heat exchanger (97), to an indoor space by a fan (930; 970),
a radiant heat exchanger (R5) having a heating element (1) incorporated in the refrigerant circuit of the air conditioner (9), and
an operation mode switching means, by which switching to a single operation mode among the respective operation modes of a first operation mode of putting the air conditioner (9) and the radiant heat exchanger (R5) in operation, a second operation mode of putting only the air conditioner (9) in operation, and a third operation mode of putting only the radiant heat exchanger (R5) in operation is performed automatically or manually,
when the air conditioner (9) and the radiant heat exchanger (R5) are put in operation in the first operation mode, the fan (930; 970) of the air conditioner (9) is stopped to practically put only the radiant heat exchanger (R5) in operation,
**characterized in that** the air conditioning system comprises rectifying plates (30, 40) sandwiching the heating element (1) of the radiant heat exchanger (RI) in between and each covering a surface (31, 41) of the heating element (1) across a gap (39, 49) provided with respect to the surface (31, 41), the rectifying plates (30, 40) having the inner surface (31, 41) arranged as a reflecting surface (31, 41) that reflects the radiant heat radiated from the heating element (1), having a radiant heat passing portion penetrating through the inner and outer surfaces (31, 41) and allowing passage of radiant heat and air, and promoting air convection by a chimney effect, and the operation mode switching means includes
a first piping connecting the expansion valve (96) and the indoor side heat exchanger (97), a second piping connecting the flow path switching valve (95) and the indoor side heat exchanger (97),
a third piping having one end side connected to the second piping and the other end side connected to one end side of the piping of the heating element (1) of the radiant heat exchanger (R5),
a fourth piping having one end side connected to the other end side of the piping of the heating element (1) of the radiant heat exchanger (R5) and the other end side connected to the second piping, and
a valve that the second piping has in its course between the connection portion to the third piping and the connection portion to the fourth piping, and
either or both of the third piping and the fourth piping has or have a valve in the course or courses thereof.

## Patentansprüche

1. Klimaanlage (A1), umfassend:

einen Luftaufbereiter (9), der einen Kältemittelkreis aufweist, in dem ein Kompressor (94), ein Ausdehnungsventil (96), ein Strömungspfad-Umschaltventil (95), ein Innen-Wärmetauscher (97) und ein Außen-Wärmetauscher (93) durch Rohrleitungen verbunden sind, um ein Kältemittel zirkulieren zu lassen, um einen Kühlungszyklus auszuführen, und ein Gebläse (930; 970) umfasst, wobei das Gebläse (930; 970) Luft, die einem Wärmetausch mit dem Kältemittel in dem Innen-Wärmetauscher (97) unterzogen wurde, in einen Innenraum leitet;
einen Strahlungswärmetauscher (R1), der ein Heizelement (1) aufweist, das in den Kältemittelkreis des Luftaufbereiters (9) integriert ist;
**dadurch gekennzeichnet, dass** die Klimaanlage (A1) Richtungsplatten (30, 40) umfasst, die das Heizelement (1) des Strahlungswärmetauschers (R1) zwischen sich aufnehmen und jeweils eine Fläche (31, 41) des Heizelements (1) über einen Spalt (39, 49) hinweg bedecken, der mit Bezug auf die Fläche (31, 41) angeordnet ist, wobei bei den Richtungsplatten (30, 40) die Innenfläche (31, 41) als eine reflektierende Fläche (31, 41) ausgebildet ist, welche die von dem Heizelement (1) abgestrahlte Strahlungswärme reflektiert, einen Strahlungswärme-Durchlassabschnitt aufweist, der durch die Innen- und Außenflächen (31, 41) hindurch verläuft und den Durchtritt von Strahlungswärme und Luft gestattet, und die Luftkonvektion durch einen Kamineffekt unterstützt, und des Weiteren umfassend:

ein Betriebsmodus-Umschaltmittel, mit dem ein Umschalten zu einem Einzelbetriebsmodus unter den jeweiligen Betriebsmodi eines ersten Betriebsmodus des Inbetriebsetzens des Luftaufbereiters (9) und des Strahlungswärmetauschers (R1), eines zweiten Betriebsmodus des Inbetriebsetzens nur des Luftaufbereiters (9), und eines dritten Betriebsmodus des Inbetriebsetzens nur des Strahlungswärmetauschers (R1) automatisch oder manuell ausgeführt wird; und
wobei das Betriebsmodus-Umschaltmittel Folgendes umfasst: eine erste Rohrleitung, die das Ausdehnungsventil (96) und den Innen-Wärmetauscher (97) verbindet,

ein erstes Ventil, das sich im Verlauf der ersten Rohrleitung befindet,
eine zweite Rohrleitung, die das Strömungspfad-Umschaltventil (95) und den Innen-Wärmetauscher (97) verbindet,
ein zweites Ventil, das sich im Verlauf der zweiten Rohrleitung befindet,
eine dritte Rohrleitung, deren eine Endseite mit der zweiten Rohrleitung verbunden ist und deren andere Endseite mit einer Endseite der Rohrleitung des Heizelements (1) des Strahlungswärmetauschers (R1) verbunden ist,
ein drittes Ventil, das sich im Verlauf der dritten Rohrleitung befindet,
eine vierte Rohrleitung, deren eine Endseite mit der anderen Endseite der Rohrleitung des Heizelements (1) des Strahlungswärmetauschers (R1) verbunden ist und deren andere Endseite mit der zweiten Rohrleitung an einer Position verbunden ist, die näher bei dem Strömungspfad-Umschaltventil (95) liegt als das zweite Ventil,
ein viertes Ventil, das sich im Verlauf der vierten Rohrleitung befindet,
eine fünfte Rohrleitung, deren eine Endseite mit der zweiten Rohrleitung an einer Position verbunden ist, die näher bei dem Strömungspfad-Umschaltventil (95) liegt als das zweite Ventil, und deren andere Endseite mit der ersten Rohrleitung an einer Position verbunden ist, die näher bei dem Ausdehnungsventil (96) liegt als das erste Ventil,
ein fünftes Ventil, das sich im Verlauf der fünften Rohrleitung befindet, und
ein sechstes Ventil, das sich im Verlauf der zweiten Rohrleitung zwischen den Verbindungsabschnitten zu der vierten Rohrleitung und der dritten Rohrleitung befindet.

2. Klimaanlage (A2), umfassend:

einen Luftaufbereiter (9), der einen Kältemittelkreis aufweist, in dem ein Kompressor (94), ein Ausdehnungsventil (96), ein Strömungspfad-Umschaltventil (95), ein Innen-Wärmetauscher (97) und ein Außen-Wärmetauscher (93) durch Rohrleitungen verbunden sind, um ein Kältemittel zirkulieren zu lassen, um einen Kühlungszyklus auszuführen, und ein Gebläse (930; 970) umfasst, wobei das Gebläse (930; 970) Luft, die einem Wärmetausch mit dem Kältemittel in dem Innen-Wärmetauscher (97) unterzogen wurde, in einen Innenraum leitet;
einen Strahlungswärmetauscher (R2), der ein Heizelement (1a, 1b) aufweist, das in den Kältemittelkreis des Luftaufbereiters (9) integriert ist;
**dadurch gekennzeichnet, dass** die Klimaanlage (A2) Richtungsplatten (30, 40) umfasst, die das Heizelement (1) des Strahlungswärmetauschers (R1) zwischen sich aufnehmen und jeweils eine Fläche (31, 41) des Heizelements (1) über einen Spalt (39, 49) hinweg bedecken, der mit Bezug auf die Fläche (31, 41) angeordnet ist, wobei bei den Richtungsplatten (30, 40) die Innenfläche (31, 41) als eine reflektierende Fläche (31, 41) ausgebildet ist, welche die von dem Heizelement (1) abgestrahlte Strahlungswärme reflektiert, einen Strahlungswärme-Durchlassabschnitt aufweist, der durch die Innen- und Außenflächen (31, 41) hindurch verläuft und den Durchtritt von Strahlungswärme und Luft gestattet, und die Luftkonvektion durch einen Kamineffekt unterstützt, und des Weiteren ein Betriebsmodus-Umschaltmittel umfasst, mit dem ein Umschalten zu einem Einzelbetriebsmodus unter den jeweiligen Betriebsmodi eines ersten Betriebsmodus des Inbetriebsetzens des Luftaufbereiters (9) und des Strahlungswärmetauschers (R2), eines zweiten Betriebsmodus des Inbetriebsetzens nur des Luftaufbereiters (9), und eines dritten Betriebsmodus des Inbetriebsetzens nur des Strahlungswärmetauschers (R2) automatisch oder manuell ausgeführt wird; und
wobei das Betriebsmodus-Umschaltmittel Folgendes umfasst:

eine erste Rohrleitung, die das Ausdehnungsventil (96) und den Innen-Wärmetauscher (97) verbindet,
eine zweite Rohrleitung, die das Strömungspfad-Umschaltventil (95) und den Innen-Wärmetauscher (97) verbindet,
eine dritte Rohrleitung, deren eine Endseite mit der zweiten Rohrleitung verbunden ist und deren andere Endseite mit einer Endseite der Rohrleitung des Heizelements (1a, 1b) des Strahlungswärmetauschers (R2) verbunden ist,

eine vierte Rohrleitung, deren eine Endseite mit der anderen Endseite der Rohrleitung des Heizelements (1a, 1b) des Strahlungswärmetauschers (R2) verbunden ist und deren andere Endseite mit der zweiten Rohrleitung an einer Position verbunden ist, die näher bei dem Innen-Wärmetauscher (97) liegt als der Verbindungsabschnitt zu der dritten Rohrleitung,

eine fünfte Rohrleitung, deren eine Endseite mit der zweiten Rohrleitung an einer Position nahe dem Verbindungsabschnitt zu der vierten Rohrleitung verbunden ist und deren andere Endseite mit der ersten Rohrleitung verbunden ist,

ein Ventil, das sich im Verlauf der fünften Rohrleitung befindet, und

ein Ventil, das sich im Verlauf der zweiten Rohrleitung zwischen den Verbindungsabschnitten zu der vierten Rohrleitung und der dritten Rohrleitung befindet, und

wobei eine der ersten Rohrleitung und der zweiten Rohrleitung ein Ventil in ihrem Verlauf aufweist oder eine der dritten Rohrleitung und der vierten Rohrleitung ein Ventil in ihrem Verlauf aufweist.

3. Klimaanlage (A3), umfassend:

einen Luftaufbereiter (9), der einen Kältemittelkreis aufweist, in dem ein Kompressor (94), ein Ausdehnungsventil (96), ein Strömungspfad-Umschaltventil (95), ein Innen-Wärmetauscher (97) und ein Außen-Wärmetauscher (93) durch Rohrleitungen verbunden sind, um ein Kältemittel zirkulieren zu lassen, um einen Kühlungszyklus auszuführen, und ein Gebläse (930; 970) umfasst, wobei das Gebläse (930; 970) Luft, die einem Wärmetausch mit dem Kältemittel in dem Innen-Wärmetauscher (97) unterzogen wurde, in einen Innenraum leitet;

einen Strahlungswärmetauscher (R3), der ein Heizelement (1c) aufweist, das in den Kältemittelkreis des Luftaufbereiters (9) integriert ist;

**dadurch gekennzeichnet, dass** die Klimaanlage (A3) Richtungsplatten (30, 40) umfasst, die das Heizelement (1) des Strahlungswärmetauschers (R1) zwischen sich aufnehmen und jeweils eine Fläche (31, 41) des Heizelements (1) über einen Spalt (39, 49) hinweg bedecken, der mit Bezug auf die Fläche (31, 41) angeordnet ist, wobei bei den Richtungsplatten (30, 40) die Innenfläche (31, 41) als eine reflektierende Fläche (31, 41) ausgebildet ist, welche die von dem Heizelement (1) abgestrahlte Strahlungswärme reflektiert, einen Strahlungswärme-Durchlassabschnitt aufweist, der durch die Innen- und Außenflächen (31, 41) hindurch verläuft und den Durchtritt von Strahlungswärme und Luft gestattet, und die Luftkonvektion durch einen Kamineffekt unterstützt, und

des Weiteren ein Betriebsmodus-Umschaltmittel umfasst, mit dem ein Umschalten zu einem Einzelbetriebsmodus unter den jeweiligen Betriebsmodi eines ersten Betriebsmodus des Inbetriebsetzens des Luftaufbereiters (9) und des Strahlungswärmetauschers (R3), eines zweiten Betriebsmodus des Inbetriebsetzens nur des Luftaufbereiters (9), und eines dritten Betriebsmodus des Inbetriebsetzens nur des Strahlungswärmetauschers (R3) automatisch oder manuell ausgeführt wird; und

wobei das Betriebsmodus-Umschaltmittel Folgendes umfasst:

eine erste Rohrleitung, die das Ausdehnungsventil (96) und den Innen-Wärmetauscher (97) verbindet,

eine zweite Rohrleitung, die das Strömungspfad-Umschaltventil (95) und den Innen-Wärmetauscher (97) verbindet,

eine dritte Rohrleitung, deren eine Endseite mit der zweiten Rohrleitung verbunden ist und deren andere Endseite mit einer Endseite der Rohrleitung des Heizelements (1c) des Strahlungswärmetauschers (R3) verbunden ist,

eine vierte Rohrleitung, deren eine Endseite mit der anderen Endseite der Rohrleitung des Heizelements (1c) des Strahlungswärmetauschers (R3) verbunden ist und deren andere Endseite mit der zweiten Rohrleitung an einer Position verbunden ist, die näher bei dem Innen-Wärmetauscher (97) liegt als der Verbindungsabschnitt zu der dritten Rohrleitung,

eine fünfte Rohrleitung, deren eine Endseite mit der zweiten Rohrleitung an einer Position nahe dem Verbindungsabschnitt zu der vierten Rohrleitung verbunden ist und deren andere Endseite mit der ersten Rohrleitung verbunden ist,

ein Ventil, das sich im Verlauf der fünften Rohrleitung befindet, und

ein Ventil, das sich im Verlauf der zweiten Rohrleitung zwischen den Verbindungsabschnitten zu der vierten Rohrleitung und der dritten Rohrleitung befindet, und

wobei eine der ersten Rohrleitung und der zweiten Rohrleitung ein Ventil in ihrem Verlauf aufweist und eine der dritten Rohrleitung und der vierten Rohrleitung ein Ventil in ihrem Verlauf aufweist.

4. Klimaanlage (A4), umfassend:

einen Luftaufbereiter (9), der einen Kältemittelkreis aufweist, in dem ein Kompressor (94), ein Ausdehnungsventil (96), ein Strömungspfad-Umschaltventil (95), ein Innen-Wärmetauscher (97) und ein Außen-Wärmetauscher (93) durch Rohrleitungen verbunden sind, um ein Kältemittel zirkulieren zu lassen, um einen Kühlungszyklus auszuführen, und ein Gebläse (930; 970) umfasst, wobei das Gebläse (930; 970) Luft, die einem Wärmetausch mit dem Kältemittel in dem Innen-Wärmetauscher (97) unterzogen wurde, in einen Innenraum leitet;
einen Strahlungswärmetauscher (R4), der ein Heizelement (1d) aufweist, das in den Kältemittelkreis des Luftaufbereiters (9) integriert ist;
**dadurch gekennzeichnet, dass** die Klimaanlage (A4) Richtungsplatten (30, 40) umfasst, die das Heizelement (1) des Strahlungswärmetauschers (R1) zwischen sich aufnehmen und jeweils eine Fläche (31, 41) des Heizelements (1) über einen Spalt (39, 49) hinweg bedecken, der mit Bezug auf die Fläche (31, 41) angeordnet ist, wobei bei den Richtungsplatten (30, 40) die Innenfläche (31, 41) als eine reflektierende Fläche (31, 41) ausgebildet ist, welche die von dem Heizelement (1) abgestrahlte Strahlungswärme reflektiert, einen Strahlungswärme-Durchlassabschnitt aufweist, der durch die Innen- und Außenflächen (31, 41) hindurch verläuft und den Durchtritt von Strahlungswärme und Luft gestattet, und die Luftkonvektion durch einen Kamineffekt unterstützt, und
des Weiteren ein Betriebsmodus-Umschaltmittel umfasst, mit dem ein Umschalten zu einem Einzelbetriebsmodus unter den jeweiligen Betriebsmodi eines ersten Betriebsmodus des Inbetriebsetzens des Luftaufbereiters (9) und des Strahlungswärmetauschers (R4), eines zweiten Betriebsmodus des Inbetriebsetzens nur des Luftaufbereiters (9), und eines dritten Betriebsmodus des Inbetriebsetzens nur des Strahlungswärmetauschers (R4) automatisch oder manuell ausgeführt wird; und
wobei das Betriebsmodus-Umschaltmittel Folgendes umfasst:

eine erste Rohrleitung, die das Ausdehnungsventil (96) und den Innen-Wärmetauscher (97) verbindet,
eine zweite Rohrleitung, die das Strömungspfad-Umschaltventil (95) und den Innen-Wärmetauscher (97) verbindet,
eine dritte Rohrleitung, deren eine Endseite abzweigend mit der zweiten Rohrleitung verbunden ist und deren andere Endseite mit einer Endseite der Rohrleitung des Heizelements (1d) des Strahlungswärmetauschers (R4) verbunden ist,
eine vierte Rohrleitung, deren eine Endseite mit der anderen Endseite der Rohrleitung des Heizelements (1d) des Strahlungswärmetauschers (R4) verbunden ist und die andere Endseite abzweigend mit der zweiten Rohrleitung verbunden ist, und
ein Ventil, das sich im Verlauf der zweiten Rohrleitung zwischen dem Verbindungsabschnitt zu der dritten Rohrleitung und dem Verbindungsabschnitt zu der vierten Rohrleitung befindet, und

die Länge des Verlaufs, welche die Summe der dritten Rohrleitung, der Rohrleitung des Heizelements (1d) und der vierten Rohrleitung ist, länger ausgebildet wird als die Länge des Verlaufs zwischen dem Verbindungsabschnitt zu der dritten Rohrleitung und dem Verbindungsabschnitt zu der vierten Rohrleitung.

5. Klimaanlage (A5), umfassend:

einen Luftaufbereiter (9) mit einem Kältemittelkreislauf, in dem ein Kompressor (94), ein Ausdehnungsventil (96), ein Strömungspfad-Umschaltventil (95), ein Innen-Wärmetauscher (97) und ein Außen-Wärmetauscher (93) durch Rohrleitungen verbunden sind, um ein Kältemittel zirkulieren zu lassen, um einen Kühlungszyklus auszuführen, und ein Gebläse (930; 970) umfasst, wobei das Gebläse (930; 970) Luft, die einem Wärmetausch mit dem Kältemittel in dem Innen-Wärmetauscher (97) unterzogen wurde, in einen Innenraum leitet;
einen Strahlungswärmetauscher (R5), der ein Heizelement (1) aufweist, das in den Kältemittelkreis des Luftaufbereiters (9) integriert ist,
**dadurch gekennzeichnet, dass** die Klimaanlage (A5) Richtungsplatten (30, 40) umfasst, die das Heizelement (1) des Strahlungswärmetauschers (R1) zwischen sich aufnehmen und jeweils eine Fläche (31, 41) des Heizelements (1) über einen Spalt (39, 49) hinweg bedecken, der mit Bezug auf die Fläche (31, 41) angeordnet ist, wobei bei den Richtungsplatten (30, 40) die Innenfläche (31, 41) als eine reflektierende Fläche (31, 41) ausgebildet ist, welche die von dem Heizelement (1) abgestrahlte Strahlungswärme reflektiert, einen Strahlungswärme-Durchlassabschnitt aufweist, der durch die Innen- und Außenflächen (31, 41) hindurch verläuft und den Durchtritt von Strahlungswärme und Luft gestattet, und die Luftkonvektion durch einen Kamineffekt unterstützt, und
des Weiteren ein Betriebsmodus-Umschaltmittel umfasst, mit dem ein Umschalten zu einem Einzelbetriebsmodus unter den jeweiligen Betriebsmodi eines ersten Betriebsmodus des Inbetriebsetzens des Luftaufbereiters (9) und des Strahlungswärmetauschers (R5), eines zweiten Betriebsmodus des Inbetriebsetzens nur des Luftaufbereiters (9), und eines dritten Betriebsmodus des Inbetriebsetzens nur des Strahlungswärmetauschers (R5) automatisch oder manuell ausgeführt wird; und

wobei das Betriebsmodus-Umschaltmittel Folgendes umfasst:

eine erste Rohrleitung, die das Ausdehnungsventil (96) und den Innen-Wärmetauscher (97) verbindet,
eine zweite Rohrleitung, die das Strömungspfad-Umschaltventil (95) und den Innen-Wärmetauscher (97) verbindet,
eine dritte Rohrleitung, deren eine Endseite mit der zweiten Rohrleitung verbunden ist und deren andere Endseite mit einer Endseite der Rohrleitung des Heizelements (1) des Strahlungswärmetauschers (R5) verbunden ist,
eine vierte Rohrleitung, deren eine Endseite mit der anderen Endseite der Rohrleitung des Heizelements (1) des Strahlungswärmetauschers (R5) verbunden ist und deren andere Endseite mit der zweiten Rohrleitung verbunden ist, und
ein Ventil, das sich im Verlauf der zweiten Rohrleitung zwischen dem Verbindungsabschnitt zu der dritten Rohrleitung und dem Verbindungsabschnitt zu der vierten Rohrleitung befindet, und

eine oder beide der dritten Rohrleitung und der vierten Rohrleitung ein Ventil in ihrem Verlauf aufweisen.

6. Klimaanlage (A1; A2; A3; A4; A5) nach Anspruch 1, 2, 3, 4 oder 5, wobei
das Heizelement (1, 1a, 1b, 1c, 1d) mehrere Rohrleitungen hat, die Rohrleitungen parallel zu den Rohrleitungen verlaufen, aus denen der Kältemittelkreis besteht, die Strömungsrichtung des Kältemittels die Aufwärts-Abwärts-Richtung ist, wobei die Rohrleitungen so ausgelegt sind, dass während des Kühlens ein zweiphasiges Gas-Flüssigkeit-Kältemittel von den Oberseiten zu den Unterseiten der Rohrleitung des Heizelements (1, 1a, 1b, 1c, 1d) hindurchströmen kann und während des Erwärmens ein Gasphasen-Kältemittel von den Unterseiten zu den Oberseiten der Rohrleitung des Heizelements (1, 1a, 1b, 1c, 1d) hindurchströmen kann.

7. Klimaanlage nach Anspruch 6, wobei die Rohrleitungen des Heizelements (1, 1a, 1b, 1c, 1d) eine Wellrohranordnung haben, die in Reihe mit den Rohrleitungen verbunden ist, aus denen der Kältemittelkreis besteht, und mit der die Strömungsrichtung des Kältemittels die Aufwärts-AbwärtsRichtung ist.

8. Klimaanlage nach Anspruch 5, wobei die Rohrleitungen des Heizelements (1, 1a, 1b, 1c, 1d) eine Wellrohranordnung haben, die in Reihe mit den Rohrleitungen verbunden ist, aus denen der Kältemittelkreis besteht, und mit der die Strömungsrichtung des Kältemittels die horizontale Richtung ist, wobei die Rohrleitungen so ausgelegt sind, dass während des Kühlens ein zweiphasiges Gas-Flüssigkeit-Kältemittel von der Oberseite zur Unterseite der Rohrleitung des Heizelements (1, 1a, 1b, 1c, 1d) strömen kann und während des Erwärmens ein Gasphasen-Kältemittel von der Unterseite zur Oberseite der Rohrleitungen strömen kann.

9. Klimaanlage nach Anspruch 1, 2, 3, 4 oder 5, wobei Endelemente, welche die jeweiligen Richtungsplatten (30, 40) verbinden, an Endabschnitten auf beiden Seiten der jeweiligen Richtungsplatten (30, 40) angeordnet sind, um einen röhrenförmigen Körper zu bilden, der an einem oberen Abschnitt und einem unteren Abschnitt offen ist, und das Heizelement (1, 1a, 1b, 1c, 1d) in dem röhrenförmigen Körper umschlossen ist.

10. Klimaanlage nach Anspruch 1, 2, 3, 4 oder 5, wobei der Luftaufbereiter (9) ein Multi-Luftaufbereiter (9) ist, der mehrere Innen-Wärmetauscher (97) aufweist, wobei Rohrleitungen mit Bezug auf den einzelnen Außen-Wärmetauscher (93) parallel verbunden sind und ein oder mehrere des Strahlungswärmetauschers (R1; R2; R3; R4; R5) in jeweiliger Entsprechung zu den mehreren Innen-Wärmetauschern (97) installiert sind.

11. Klimaanlage nach Anspruch 1, 2, 3, 4 oder 5, wobei der Luftaufbereiter (9) ein Inverter-Luftaufbereiter (9) ist, der eine Invertersteuerung des Kompressors (94) ausführt.

12. Klimaanlage nach Anspruch 6, wobei
die Rohrleitungen des Heizelements (1, 1a, 1b, 1c, 1d) ein Flachrohr sind, das mehrere Strömungspfade aufweist, die parallel in der Längsrichtung im Inneren verlaufen, oder ein Rohr sind, das mehrere Riefenabschnitte aufweist, die parallel in der Längsrichtung auf der Innenfläche (31, 41) verlaufen.

13. Klimaanlage nach Anspruch 1, 2, 3, 4 oder 5, wobei ein Ventilationsführungselement, das die Luft, die in die Spalte (39, 49) auf den Innenseiten der Richtungsplatten (30, 40) eintritt und aus ihnen austritt, so führt, dass die Luft sanft strömt, an der Oberseite oder der Unterseite oder an der Oberseite und der Unterseite des Heizelements (1, 1a, 1b, 1c, 1d) angeordnet ist.

14. Klimaanlage nach Anspruch 1, 2, 3, 4 oder 5, wobei eine oder mehrere Arten von Verarbeitung oder Beschichtung, ausgewählt aus Rändeln, Alumitverarbeitung, Wärmedissipationsbeschichtung, Fernfrarotabstrahlungsbeschichtung und Beschichtung mit einer Geruchshemmerfunktion, einer antibakteriellen Funktion oder einer Funktion des Zersetzens adsorbierter flüchtiger organischer Verbindungen, auf die Fläche (31, 41) des Heizelements (1, 1a, 1b, 1c, 1d) angewendet wird.

15. Klimaanlage nach Anspruch 6, wobei
Werbung oder ein Kunstbild auf der Fläche (31, 41) der Richtungsplatte angezeigt wird.

16. Betriebsverfahren für eine Klimaanlage (A1),
wobei in einer Klimaanlage (A1), die Folgendes umfasst:

einen Luftaufbereiter (9), der einen Kältemittelkreis aufweist, in dem ein Kompressor (94), ein Ausdehnungsventil (96), ein Strömungspfad-Umschaltventil (95), ein Innen-Wärmetauscher (97) und ein Außen-Wärmetauscher (93) durch Rohrleitungen verbunden sind, um ein Kältemittel zirkulieren zu lassen, um einen Kühlungszyklus auszuführen, und Luft, die einem Wärmetausch mit dem Kältemittel in dem Innen-Wärmetauscher (97) unterzogen wurde, durch ein Gebläse (930; 970) in einen Innenraum leitet,
einen Strahlungswärmetauscher (R1), der ein Heizelement (1) aufweist, das in den Kältemittelkreis des Luftaufbereiters (9) integriert ist, und
ein Betriebsmodus-Umschaltmittel, mit dem ein Umschalten zu einem Einzelbetriebsmodus unter den jeweiligen Betriebsmodi eines ersten Betriebsmodus des Inbetriebsetzens des Luftaufbereiters (9) und des Strahlungswärmetauschers (R1), eines zweiten Betriebsmodus des Inbetriebsetzens nur des Luftaufbereiters (9), und eines dritten Betriebsmodus des Inbetriebsetzens nur des Strahlungswärmetauschers (R1) automatisch oder manuell ausgeführt wird,
wenn der Luftaufbereiter (9) und der Strahlungswärmetauscher (R1) in dem ersten Betriebsmodus in Betrieb gesetzt werden, das Gebläse (930; 970) des Luftaufbereiters (9) gestoppt wird, um praktisch nur den Strahlungswärmetauscher (R1) in Betrieb zu setzen,
**dadurch gekennzeichnet, dass** die Klimaanlage Richtungsplatten (30, 40) umfasst, die das Heizelement (1) des Strahlungswärmetauschers (R1) zwischen sich aufnehmen und jeweils eine Fläche (31, 41) des Heizelements (1) über einen Spalt (39, 49) hinweg bedecken, der mit Bezug auf die Fläche (31, 41) angeordnet ist,
wobei bei den Richtungsplatten (30, 40) die Innenfläche (31, 41) als eine reflektierende Fläche (31, 41) ausgebildet ist, welche die von dem Heizelement (1) abgestrahlte Strahlungswärme reflektiert, einen Strahlungswärme-Durchlassabschnitt aufweist, der durch die Innen- und Außenflächen (31, 41) hindurch verläuft und den Durchtritt von Strahlungswärme und Luft gestattet, und die Luftkonvektion durch einen Kamineffekt unterstützt, und
das Betriebsmodus-Umschaltmittel Folgendes umfasst:

eine erste Rohrleitung, die das Ausdehnungsventil (96) und den Innen-Wärmetauscher (97) verbindet,
ein erstes Ventil, das sich im Verlauf der ersten Rohrleitung befindet,
eine zweite Rohrleitung, die das Strömungspfad-Umschaltventil (95) und den Innen-Wärmetauscher (97) verbindet,
ein zweites Ventil, das sich im Verlauf der zweiten Rohrleitung befindet,
eine dritte Rohrleitung, deren eine Endseite mit der zweiten Rohrleitung verbunden ist und deren andere Endseite mit einer Endseite der Rohrleitung des Heizelements (1) des Strahlungswärmetauschers (R1) verbunden ist,
ein drittes Ventil, das sich im Verlauf der dritten Rohrleitung befindet,
eine vierte Rohrleitung, deren eine Endseite mit der anderen Endseite der Rohrleitung des Heizelements (1) des Strahlungswärmetauschers (P1) verbunden ist und deren andere Endseite mit der zweiten Rohrleitung an einer Position verbunden ist, die näher bei dem Strömungspfad-Umschaltventil (95) liegt als das zweite Ventil,
ein viertes Ventil, das sich im Verlauf der vierten Rohrleitung befindet,
eine fünfte Rohrleitung, deren eine Endseite mit der zweiten Rohrleitung an einer Position verbunden ist, die näher bei dem Strömungspfad-Umschaltventil (95) liegt als das zweite Ventil, und deren andere Endseite mit der ersten Rohrleitung an einer Position verbunden ist, die näher bei dem Ausdehnungsventil (96) liegt als das erste Ventil,

ein fünftes Ventil, das sich im Verlauf der fünften Rohrleitung befindet, und

ein sechstes Ventil, das sich im Verlauf der zweiten Rohrleitung zwischen den Verbindungsabschnitten zu der vierten Rohrleitung und der dritten Rohrleitung befindet.

17. Betriebsverfahren für eine Klimaanlage (A2),

wobei in einer Klimaanlage (A2), die Folgendes umfasst:

einen Luftaufbereiter (9), der einen Kältemittelkreis aufweist, in dem ein Kompressor (94), ein Ausdehnungsventil (96), ein Strömungspfad-Umschaltventil (95), ein Innen-Wärmetauscher (97) und ein Außen-Wärmetauscher (93) durch Rohrleitungen verbunden sind, um ein Kältemittel zirkulieren zu lassen, um einen Kühlungszyklus auszuführen, und Luft, die einem Wärmetausch mit dem Kältemittel in dem Innen-Wärmetauscher (97) unterzogen wurde, durch ein Gebläse (930; 970) in einen Innenraum geleitet wird,

einen Strahlungswärmetauscher (R2), der ein Heizelement (1a, 1b) aufweist, das in den Kältemittelkreis des Luftaufbereiters (9) integriert ist, und

ein Betriebsmodus-Umschaltmittel, mit dem ein Umschalten zu einem Einzelbetriebsmodus unter den jeweiligen Betriebsmodi eines ersten Betriebsmodus des Inbetriebsetzens des Luftaufbereiters (9) und des Strahlungswärmetauschers (R2), eines zweiten Betriebsmodus des Inbetriebsetzens nur des Luftaufbereiters (9), und eines dritten Betriebsmodus des Inbetriebsetzens nur des Strahlungswärmetauschers (R2) automatisch oder manuell ausgeführt wird,

wenn der Luftaufbereiter (9) und der Strahlungswärmetauscher (R2) in dem ersten Betriebsmodus in Betrieb gesetzt werden, das Gebläse (930; 970) des Luftaufbereiters (9) gestoppt wird, um praktisch nur den Strahlungswärmetauscher (R2) in Betrieb zu setzen,

**dadurch gekennzeichnet, dass** die Klimaanlage Richtungsplatten (30, 40) umfasst, die das Heizelement (1) des Strahlungswärmetauschers (R1) zwischen sich aufnehmen und jeweils eine Fläche (31, 41) des Heizelements (1) über einen Spalt (39, 49) hinweg bedecken, der mit Bezug auf die Fläche (31, 41) angeordnet ist, wobei bei den Richtungsplatten (30, 40) die Innenfläche (31, 41) als eine reflektierende Fläche (31, 41) ausgebildet ist, welche die von dem Heizelement (1) abgestrahlte Strahlungswärme reflektiert, einen Strahlungswärme-Durchlassabschnitt aufweist, der durch die Innen- und Außenflächen (31, 41) hindurch verläuft und den Durchtritt von Strahlungswärme und Luft gestattet, und die Luftkonvektion durch einen Kamineffekt unterstützt, und

das Betriebsmodus-Umschaltmittel Folgendes umfasst:

eine erste Rohrleitung, die das Ausdehnungsventil (96) und den Innen-Wärmetauscher (97) verbindet,

eine zweite Rohrleitung, die das Strömungspfad-Umschaltventil (95) und den Innen-Wärmetauscher (97) verbindet,

eine dritte Rohrleitung, deren eine Endseite mit der zweiten Rohrleitung verbunden ist und deren andere Endseite mit einer Endseite der Rohrleitung des Heizelements (1a, 1b) des Strahlungswärmetauschers (R2) verbunden ist,

eine vierte Rohrleitung, deren eine Endseite mit der anderen Endseite der Rohrleitung des Heizelements (1a, 1b) des Strahlungswärmetauschers (R2) verbunden ist und deren andere Endseite mit der zweiten Rohrleitung an einer Position verbunden ist, die näher bei dem Innen-Wärmetauscher (97) liegt als der Verbindungsabschnitt zu der dritten Rohrleitung,

eine fünfte Rohrleitung, deren eine Endseite mit der zweiten Rohrleitung an einer Position nahe dem Verbindungsabschnitt zu der vierten Rohrleitung verbunden ist und deren andere Endseite mit der ersten Rohrleitung verbunden ist,

ein Ventil, das sich im Verlauf der fünften Rohrleitung befindet, und

ein Ventil, das sich im Verlauf der zweiten Rohrleitung zwischen den Verbindungsabschnitten zu der vierten Rohrleitung und der dritten Rohrleitung befindet, und wobei eine der ersten Rohrleitung und der zweiten Rohrleitung ein Ventil in ihrem Verlauf aufweist oder eine der dritten Rohrleitung und der vierten Rohrleitung ein Ventil in ihrem Verlauf aufweist.

18. Betriebsverfahren für eine Klimaanlage (A3),

wobei in einer Klimaanlage (A3), die Folgendes umfasst:

einen Luftaufbereiter (9), der einen Kältemittelkreis aufweist, in dem ein Kompressor (94), ein Ausdehnungsventil (96), ein Strömungspfad-Umschaltventil (95), ein Innen-Wärmetauscher (97) und ein Außen-Wärmetauscher (93) durch Rohrleitungen verbunden sind, um ein Kältemittel zirkulieren zu lassen, um einen Kühlungszyklus auszuführen, und Luft, die einem Wärmetausch mit dem Kältemittel in dem Innen-Wärmetauscher (97) unterzogen wurde, durch ein Gebläse (930; 970) in einen Innenraum geleitet wird,

einen Strahlungswärmetauscher (R3), der ein Heizelement (1c) aufweist, das in den Kältemittelkreis des Luftaufbereiters (9) integriert ist, und

ein Betriebsmodus-Umschaltmittel, mit dem ein Umschalten zu einem Einzelbetriebsmodus unter den jeweiligen Betriebsmodi eines ersten Betriebsmodus des Inbetriebsetzens des Luftaufbereiters (9) und des Strahlungswärmetauschers (R3), eines zweiten Betriebsmodus des Inbetriebsetzens nur des Luftaufbereiters (9), und eines dritten Betriebsmodus des Inbetriebsetzens nur des Strahlungswärmetauschers (R3) automatisch oder manuell ausgeführt wird,

wenn der Luftaufbereiter (9) und der

Strahlungswärmetauscher (R3) in dem ersten Betriebsmodus in Betrieb gesetzt werden, das Gebläse (930; 970) des Luftaufbereiters (9) gestoppt wird, um praktisch nur den Strahlungswärmetauscher (R3) in Betrieb zu setzen,

**dadurch gekennzeichnet, dass** die Klimaanlage Richtungsplatten (30, 40) umfasst, die das Heizelement (1) des Strahlungswärmetauschers (R1) zwischen sich aufnehmen und jeweils eine Fläche (31, 41) des Heizelements (1) über einen Spalt (39, 49) hinweg bedecken, der mit Bezug auf die Fläche (31, 41) angeordnet ist, wobei bei den Richtungsplatten (30, 40) die Innenfläche (31, 41) als eine reflektierende Fläche (31, 41) ausgebildet ist, welche die von dem Heizelement (1) abgestrahlte Strahlungswärme reflektiert, einen Strahlungswärme-Durchlassabschnitt aufweist, der durch die Innen- und Außenflächen (31, 41) hindurch verläuft und den Durchtritt von Strahlungswärme und Luft gestattet, und die Luftkonvektion durch einen Kamineffekt unterstützt, und

das Betriebsmodus-Umschaltmittel Folgendes umfasst:

eine erste Rohrleitung, die das Ausdehnungsventil (96) und den Innen-Wärmetauscher (97) verbindet,

eine zweite Rohrleitung, die das Strömungspfad-Umschaltventil (95) und den Innen-Wärmetauscher (97) verbindet,

eine dritte Rohrleitung, deren eine Endseite mit der zweiten Rohrleitung verbunden ist und deren andere Endseite mit einer Endseite der Rohrleitung des Heizelements (1c) des Strahlungswärmetauschers (R3) verbunden ist,

eine vierte Rohrleitung, deren eine Endseite mit der anderen Endseite der Rohrleitung des Heizelements (1c) des Strahlungswärmetauschers (R3) verbunden ist und deren andere Endseite mit der zweiten Rohrleitung an einer Position verbunden ist, der näher bei dem Innen-Wärmetauscher (97) liegt als der Verbindungsabschnitt zu der dritten Rohrleitung,

eine fünfte Rohrleitung, deren eine Endseite mit der zweiten Rohrleitung an einer Position nahe dem Verbindungsabschnitt zu der vierten Rohrleitung verbunden ist und deren andere Endseite mit der ersten Rohrleitung verbunden ist,

ein Ventil, das sich im Verlauf der fünften Rohrleitung befindet, und

ein Ventil, das sich im Verlauf der zweiten Rohrleitung zwischen den Verbindungsabschnitten zu der vierten Rohrleitung und der dritten Rohrleitung befindet, und wobei eine der ersten Rohrleitung und der zweiten Rohrleitung ein Ventil in ihrem Verlauf aufweist und eine der dritten Rohrleitung und der vierten Rohrleitung ein Ventil in ihrem Verlauf aufweist.

19. Betriebsverfahren für eine Klimaanlage (A4),

wobei in einer Klimaanlage (A4), die Folgendes umfasst:

einen Luftaufbereiter (9), der einen Kältemittelkreis aufweist, in dem ein Kompressor (94), ein Ausdehnungsventil (96), ein Strömungspfad-Umschaltventil (95), ein Innen-Wärmetauscher (97) und ein Außen-Wärmetauscher (93) durch Rohrleitungen verbunden sind, um ein Kältemittel zirkulieren zu lassen, um einen Kühlungszyklus auszuführen, und Luft, die einem Wärmetausch mit dem Kältemittel in dem Innen-Wärmetauscher (97) unterzogen wurde, durch ein Gebläse (930; 970) in einen Innenraum geleitet wird,

einen Strahlungswärmetauscher (R4), der ein Heizelement (1d) aufweist, das in den Kältemittelkreis des Luftaufbereiters (9) integriert ist, und die Luftkonvektion durch einen Kamineffekt unterstützt, und

ein Betriebsmodus-Umschaltmittel, mit dem ein Umschalten zu einem Einzelbetriebsmodus unter den jeweiligen Betriebsmodi eines ersten Betriebsmodus des Inbetriebsetzens des Luftaufbereiters (9) und des Strahlungswärmetauschers (R4), eines zweiten Betriebsmodus des Inbetriebsetzens nur des Luftaufbereiters (9), und eines dritten Betriebsmodus des Inbetriebsetzens nur des Strahlungswärmetauschers (R4) automatisch oder manuell ausgeführt wird,

wenn der Luftaufbereiter (9) und der

Strahlungswärmetauscher (R4) in dem ersten Betriebsmodus in Betrieb gesetzt werden, das Gebläse (930; 970) des Luftaufbereiters (9) gestoppt wird, um praktisch nur den Strahlungswärmetauscher (R4) in Betrieb zu setzen,

**dadurch gekennzeichnet, dass** die Klimaanlage Richtungsplatten (30, 40) umfasst, die das Heizelement (1) des Strahlungswärmetauschers (R1) zwischen sich aufnehmen und jeweils eine Fläche (31, 41) des Heizelements (1) über einen Spalt (39, 49) hinweg bedecken, der mit Bezug auf die Fläche (31, 41) angeordnet ist, wobei bei den Richtungsplatten (30, 40) die Innenfläche (31, 41) als eine reflektierende Fläche (31, 41) ausgebildet ist, welche die von dem Heizelement (1) abgestrahlte Strahlungswärme reflektiert, einen Strahlungswärme-Durchlassabschnitt aufweist, der durch die Innen- und Außenflächen (31, 41) hindurch verläuft und den Durchtritt von Strahlungswärme und Luft gestattet, und die Luftkonvektion durch einen Kamineffekt unterstützt, und

das Betriebsmodus-Umschaltmittel Folgendes umfasst:

eine erste Rohrleitung, die das Ausdehnungsventil (96) und den Innen-Wärmetauscher (97) verbindet, eine zweite Rohrleitung, die das Strömungspfad-Umschaltventil (95) und den Innen-Wärmetauscher (97) verbindet,

eine dritte Rohrleitung, deren eine Endseite abzweigend mit der zweiten Rohrleitung verbunden ist und deren andere Endseite mit einer Endseite der Rohrleitung des Heizelements (1d) des Strahlungswärmetauschers (R4) verbunden ist,

eine vierte Rohrleitung, deren eine Endseite mit der anderen Endseite der Rohrleitung des Heizelements (1d) des Strahlungswärmetauschers (R4) verbunden ist und deren andere Endseite abzweigend mit der zweiten Rohrleitung verbunden ist, und

ein Ventil, das sich im Verlauf der zweiten Rohrleitung zwischen dem Verbindungsabschnitt zu der dritten Rohrleitung und dem Verbindungsabschnitt zu der vierten Rohrleitung befindet, und

die Länge des Verlaufs, welche die Summe der dritten Rohrleitung, der Rohrleitung des Heizelements (1d) und der vierten Rohrleitung ist, länger ausgebildet wird als die Länge des Verlaufs zwischen dem Verbindungsabschnitt zu der dritten Rohrleitung und dem Verbindungsabschnitt zu der vierten Rohrleitung.

20. Betriebsverfahren für eine Klimaanlage (A5),
   wobei in einer Klimaanlage (A5), die Folgendes umfasst:

einen Luftaufbereiter (9), der einen Kältemittelkreis aufweist, in dem ein Kompressor (94), ein Ausdehnungsventil (96), ein Strömungspfad-Umschaltventil (95), ein Innen-Wärmetauscher (97) und ein Außen-Wärmetauscher (93) durch Rohrleitungen verbunden sind, um ein Kältemittel zirkulieren zu lassen, um einen Kühlungszyklus auszuführen, und Luft, die einem Wärmetausch mit dem Kältemittel in dem Innen-Wärmetauscher (97) unterzogen wurde, durch ein Gebläse (930; 970) in einen Innenraum geleitet wird,

einen Strahlungswärmetauscher (R5), der ein Heizelement (1) aufweist, das in den Kältemittelkreis des Luftaufbereiters (9) integriert ist, und

ein Betriebsmodus-Umschaltmittel, mit dem ein Umschalten zu einem Einzelbetriebsmodus unter den jeweiligen Betriebsmodi eines ersten Betriebsmodus des Inbetriebsetzens des Luftaufbereiters (9) und des Strahlungswärmetauschers (R5), eines zweiten Betriebsmodus des Inbetriebsetzens nur des Luftaufbereiters (9), und eines dritten Betriebsmodus des Inbetriebsetzens nur des Strahlungswärmetauschers (R5) automatisch oder manuell ausgeführt wird,

wenn der Luftaufbereiter (9) und der Strahlungswärmetauscher (R5) in dem ersten Betriebsmodus in Betrieb gesetzt werden, das Gebläse (930; 970) des Luftaufbereiters (9) gestoppt wird, um praktisch nur den Strahlungswärmetauscher (R5) in Betrieb zu setzen,

**dadurch gekennzeichnet, dass** die Klimaanlage Richtungsplatten (30, 40) umfasst, die das Heizelement (1) des Strahlungswärmetauschers (R1) zwischen sich aufnehmen und jeweils eine Fläche (31, 41) des Heizelements (1) über einen Spalt (39, 49) hinweg bedecken, der mit Bezug auf die Fläche (31, 41) angeordnet ist, wobei bei den Richtungsplatten (30, 40) die Innenfläche (31, 41) als eine reflektierende Fläche (31, 41) ausgebildet ist, welche die von dem Heizelement (1) abgestrahlte Strahlungswärme reflektiert, einen Strahlungswärme-Durchlassabschnitt aufweist, der durch die Innen- und Außenflächen (31, 41) hindurch verläuft und den Durchtritt von Strahlungswärme und Luft gestattet, und die Luftkonvektion durch einen Kamineffekt unterstützt, und

das Betriebsmodus-Umschaltmittel Folgendes umfasst:

eine erste Rohrleitung, die das Ausdehnungsventil (96) und den Innen-Wärmetauscher (97) verbindet,

eine zweite Rohrleitung, die das Strömungspfad-Umschaltventil (95) und den Innen-Wärmetauscher (97) verbindet,

eine dritte Rohrleitung, deren eine Endseite mit der zweiten Rohrleitung verbunden ist und deren andere Endseite mit einer Endseite der Rohrleitung des Heizelements (1) des Strahlungswärmetauschers (R5) verbunden ist,

eine vierte Rohrleitung, deren eine Endseite mit der anderen Endseite der Rohrleitung des Heizelements (1) des Strahlungswärmetauschers (R5) verbunden ist und deren andere Endseite mit der zweiten Rohrleitung verbunden ist, und

ein Ventil, das sich im Verlauf der zweiten Rohrleitung zwischen dem Verbindungsabschnitt zu der dritten Rohrleitung und dem Verbindungsabschnitt zu der vierten Rohrleitung befindet, und

eine oder beide der dritten Rohrleitung und der vierten Rohrleitung ein Ventil in ihrem Verlauf aufweisen.

## Revendications

1.  Système de climatisation (A1) comprenant :

    un climatiseur (9) comportant un circuit de fluide frigorigène, dans lequel un compresseur (94), un détendeur (96), une vanne de commutation de trajet d'écoulement (95), un échangeur de chaleur côté intérieur (97) et un échangeur de chaleur côté extérieur (93) sont raccordés par tuyauterie pour faire circuler un fluide frigorigène afin de réaliser un cycle de réfrigération, et comprenant un ventilateur (930 ; 970), ledit ventilateur (930 ; 970) fournissant de l'air qui a subi un échange de chaleur avec le fluide frigorigène au niveau de l'échangeur de chaleur côté intérieur (97), à un espace intérieur ;

    un échangeur de chaleur radiant (R1) comportant un élément de chauffage (1) incorporé dans le circuit de fluide frigorigène du climatiseur (9) ;

    **caractérisé en ce que** le système de climatisation (A1) comprend des plaques de rectification (30, 40) prenant en sandwich l'élément de chauffage (1) de l'échangeur de chaleur radiant (R1) entre elles et recouvrant chacune une surface (31, 41) de l'élément de chauffage (1) à travers un intervalle (39, 49) ménagé par rapport à la surface (31, 41), les plaques de rectification (30, 40) dont la surface intérieure (31, 41) est conçue comme une surface réfléchissante (31, 41) qui réfléchit la chaleur rayonnante émise par l'élément de chauffage (1), comportant une partie de passage de chaleur rayonnante, pénétrant à travers les surfaces intérieure et extérieure (31, 41) et permettant le passage de la chaleur rayonnante et de l'air, et favorisant la convection de l'air par un effet de cheminée, et comprend en outre un moyen de commutation de mode de fonctionnement, par lequel la commutation sur un mode de fonctionnement unique parmi les modes de fonctionnement respectifs composés d'un premier mode de fonctionnement consistant à mettre le climatiseur (9) et l'échangeur de chaleur radiant (R1) en marche, d'un deuxième mode de fonctionnement consistant à ne mettre que le climatiseur (9) en marche, et d'un troisième mode de fonctionnement consistant à ne mettre que l'échangeur de chaleur radiant (R1) en marche est réalisée automatiquement ou manuellement ; et

    dans lequel le moyen de commutation de mode de fonctionnement comporte :

    une première tuyauterie raccordant le détendeur (96) et l'échangeur de chaleur côté intérieur (97),
    une première soupape que la première tuyauterie comporte sur son parcours,
    une deuxième tuyauterie raccordant la vanne de commutation de trajet d'écoulement (95) et l'échangeur de chaleur côté intérieur (97),
    une deuxième soupape que la deuxième tuyauterie comporte sur son parcours,
    une troisième tuyauterie dont un côté d'extrémité est raccordé à la deuxième tuyauterie et l'autre côté d'extrémité est raccordé à un côté d'extrémité de la tuyauterie de l'élément de chauffage (1) de l'échangeur de chaleur radiant (R1),
    une troisième soupape que la troisième tuyauterie comporte sur son parcours,
    une quatrième tuyauterie dont un côté d'extrémité est raccordé à l'autre côté d'extrémité de la tuyauterie de l'élément de chauffage (1) de l'échangeur de chaleur radiant (R1) et l'autre côté d'extrémité est raccordé à la deuxième tuyauterie, à une position plus proche de la vanne de commutation de trajet d'écoulement (95) que la deuxième soupape,
    une quatrième soupape que la quatrième tuyauterie comporte sur son parcours,
    une cinquième tuyauterie dont un côté d'extrémité est raccordé à la deuxième tuyauterie, à une position plus proche de la vanne de commutation de trajet d'écoulement (95) que la deuxième soupape et l'autre côté d'extrémité est raccordé à la première tuyauterie, à une position plus proche du détendeur (96) que la première soupape,
une cinquième soupape que la cinquième tuyauterie comporte sur son parcours, et
une sixième soupape que la deuxième tuyauterie comporte sur son parcours, entre les parties de raccordement à la quatrième tuyauterie et à la troisième tuyauterie.

**2.** Système de climatisation (A2) comprenant :

un climatiseur (9) comportant un circuit de fluide frigorigène, dans lequel un compresseur (94), un détendeur (96), une vanne de commutation de trajet d'écoulement (95), un échangeur de chaleur côté intérieur (97) et un échangeur de chaleur côté extérieur (93) sont raccordés par tuyauterie pour faire circuler un fluide frigorigène afin de réaliser un cycle de réfrigération, et comprenant un ventilateur (930 ; 970), ledit ventilateur (930 ; 970) fournissant de l'air qui a subi un échange de chaleur avec le fluide frigorigène au niveau de l'échangeur de chaleur côté intérieur (97), à un espace intérieur ;
un échangeur de chaleur radiant (R2) comportant un élément de chauffage (1a, 1b) incorporé dans le circuit de fluide frigorigène du climatiseur (9) ;
**caractérisé en ce que** le système de climatisation (A2) comprend des plaques de rectification (30, 40) prenant en sandwich l'élément de chauffage (1) de l'échangeur de chaleur radiant (R1) entre elles et recouvrant chacune une surface (31, 41) de l'élément de chauffage (1) à travers un intervalle (39, 49) ménagé par rapport à la surface (31, 41), les plaques de rectification (30, 40) dont la surface intérieure (31, 41) est conçue comme une surface réfléchissante (31, 41) qui réfléchit la chaleur rayonnante émise par l'élément de chauffage (1), comportant une partie de passage de chaleur rayonnante, pénétrant à travers les surfaces intérieure et extérieure (31, 41) et permettant le passage de la chaleur rayonnante et de l'air, et favorisant la convection de l'air par un effet de cheminée, et comprend en outre un moyen de commutation de mode de fonctionnement, par lequel la commutation sur un mode de fonctionnement unique parmi les modes de fonctionnement respectifs composés d'un premier mode de fonctionnement consistant à mettre le climatiseur (9) et l'échangeur de chaleur radiant (R2) en marche, d'un deuxième mode de fonctionnement consistant à ne mettre que le climatiseur (9) en marche, et d'un troisième mode de fonctionnement consistant à ne mettre que l'échangeur de chaleur radiant (R2) en marche est réalisée automatiquement ou manuellement ; et
dans lequel le moyen de commutation de mode de fonctionnement comporte :

une première tuyauterie raccordant le détendeur (96) et l'échangeur de chaleur côté intérieur (97),
une deuxième tuyauterie raccordant la vanne de commutation de trajet d'écoulement (95) et l'échangeur de chaleur côté intérieur (97),
une troisième tuyauterie dont un côté d'extrémité est raccordé à la deuxième tuyauterie et l'autre côté d'extrémité est raccordé à un côté d'extrémité de la tuyauterie de l'élément de chauffage (1a, 1b) de l'échangeur de chaleur radiant (R2),
une quatrième tuyauterie dont un côté d'extrémité est raccordé à l'autre côté d'extrémité de la tuyauterie de l'élément de chauffage (1a, 1b) de l'échangeur de chaleur radiant (R2) et l'autre côté d'extrémité est raccordé à la deuxième tuyauterie, à une position plus proche de l'échangeur de chaleur côté intérieur (97) que la partie de raccordement à la troisième tuyauterie,
une cinquième tuyauterie dont un côté d'extrémité est raccordé à la deuxième tuyauterie, à une position proche de la partie de raccordement à la quatrième tuyauterie et l'autre côté d'extrémité est raccordé à la première tuyauterie,
une soupape que la cinquième tuyauterie comporte sur son parcours, et
une soupape que la deuxième tuyauterie comporte sur son parcours, entre les parties de raccordement à la quatrième tuyauterie et à la troisième tuyauterie, et

l'une ou l'autre de la première tuyauterie et de la deuxième tuyauterie comporte une soupape sur son parcours ou l'une ou l'autre de la troisième tuyauterie et de la quatrième tuyauterie comporte une soupape sur son parcours.

**3.** Système de climatisation (A3) comprenant :

un climatiseur (9) comportant un circuit de fluide frigorigène, dans lequel un compresseur (94), un détendeur (96), une vanne de commutation de trajet d'écoulement (95), un échangeur de chaleur côté intérieur (97) et un échangeur de chaleur côté extérieur (93) sont raccordés par tuyauterie pour faire circuler un fluide frigorigène afin de réaliser un cycle de réfrigération, et comprenant un ventilateur (930 ; 970), ledit ventilateur (930 ; 970) fournissant de l'air qui a subi un échange de chaleur avec le fluide frigorigène au niveau de l'échangeur de chaleur côté intérieur (97), à un espace intérieur ;
un échangeur de chaleur radiant (R3) comportant un élément de chauffage (1c) incorporé dans le circuit de fluide frigorigène du climatiseur (9) ;

**caractérisé en ce que** le système de climatisation (A3) comprend des plaques de rectification (30, 40) prenant en sandwich l'élément de chauffage (1) de l'échangeur de chaleur radiant (R1) entre elles et recouvrant chacune une surface (31, 41) de l'élément de chauffage (1) à travers un intervalle (39, 49) ménagé par rapport à la surface (31, 41), les plaques de rectification (30, 40) dont la surface intérieure (31, 41) est conçue comme une surface réfléchissante (31, 41) qui réfléchit la chaleur rayonnante émise par l'élément de chauffage (1), comportant une partie de passage de chaleur rayonnante, pénétrant à travers les surfaces intérieure et extérieure (31, 41) et permettant le passage de la chaleur rayonnante et de l'air, et favorisant la convection de l'air par un effet de cheminée, et comprend en outre un moyen de commutation de mode de fonctionnement, par lequel la commutation sur un mode de fonctionnement unique parmi les modes de fonctionnement respectifs composés d'un premier mode de fonctionnement consistant à mettre le climatiseur (9) et l'échangeur de chaleur radiant (R3) en marche, d'un deuxième mode de fonctionnement consistant à ne mettre que le climatiseur (9) en marche, et d'un troisième mode de fonctionnement consistant à ne mettre que l'échangeur de chaleur radiant (R3) en marche est réalisée automatiquement ou manuellement ; et
dans lequel le moyen de commutation de mode de fonctionnement comporte :

une première tuyauterie raccordant le détendeur (96) et l'échangeur de chaleur côté intérieur (97),
une deuxième tuyauterie raccordant la vanne de commutation de trajet d'écoulement (95) et l'échangeur de chaleur côté intérieur (97),
une troisième tuyauterie dont un côté d'extrémité est raccordé à la deuxième tuyauterie et l'autre côté d'extrémité est raccordé à un côté d'extrémité de la tuyauterie de l'élément de chauffage (1c) de l'échangeur de chaleur radiant (R3),
une quatrième tuyauterie dont un côté d'extrémité est raccordé à l'autre côté d'extrémité de la tuyauterie de l'élément de chauffage (1c) de l'échangeur de chaleur radiant (R3) et l'autre côté d'extrémité est raccordé à la deuxième tuyauterie, à une position plus proche de l'échangeur de chaleur côté intérieur (97) que la partie de raccordement à la troisième tuyauterie,
une cinquième tuyauterie dont un côté d'extrémité est raccordé à la deuxième tuyauterie, à une position proche de la partie de raccordement à la quatrième tuyauterie et l'autre côté d'extrémité est raccordé à la première tuyauterie,
une soupape que la cinquième tuyauterie comporte sur son parcours, et
une soupape que la deuxième tuyauterie comporte sur son parcours, entre les parties de raccordement à la quatrième tuyauterie et à la troisième tuyauterie, et

l'une ou l'autre de la première tuyauterie et de la deuxième tuyauterie comporte une soupape sur son parcours et l'une ou l'autre de la troisième tuyauterie et de la quatrième tuyauterie comporte une soupape sur son parcours.

4. Système de climatisation (A4) comprenant :

un climatiseur (9) comportant un circuit de fluide frigorigène, dans lequel un compresseur (94), un détendeur (96), une vanne de commutation de trajet d'écoulement (95), un échangeur de chaleur côté intérieur (97) et un échangeur de chaleur côté extérieur (93) sont raccordés par tuyauterie pour faire circuler un fluide frigorigène afin de réaliser un cycle de réfrigération, et comprenant un ventilateur (930 ; 970), ledit ventilateur (930 ; 970) fournissant de l'air qui a subi un échange de chaleur avec le fluide frigorigène au niveau de l'échangeur de chaleur côté intérieur (97), à un espace intérieur ;
un échangeur de chaleur radiant (R4) comportant un élément de chauffage (1d) incorporé dans le circuit de fluide frigorigène du climatiseur (9) ;

**caractérisé en ce que** le système de climatisation (A4) comprend des plaques de rectification (30, 40) prenant en sandwich l'élément de chauffage (1) de l'échangeur de chaleur radiant (R1) entre elles et recouvrant chacune une surface (31, 41) de l'élément de chauffage (1) à travers un intervalle (39, 49) ménagé par rapport à la surface (31, 41), les plaques de rectification (30, 40) dont la surface intérieure (31, 41) est conçue comme une surface réfléchissante (31, 41) qui réfléchit la chaleur rayonnante émise par l'élément de chauffage (1), comportant une partie de passage de chaleur rayonnante, pénétrant à travers les surfaces intérieure et extérieure (31, 41) et permettant le passage de la chaleur rayonnante et de l'air, et favorisant la convection de l'air par un effet de cheminée, et comprend en outre un moyen de commutation de mode de fonctionnement, par lequel la commutation sur un mode de fonctionnement unique parmi les modes de fonctionnement respectifs composés d'un premier mode de fonctionnement consistant à mettre le climatiseur (9) et l'échangeur de chaleur radiant (R4) en marche, d'un deuxième mode de fonctionnement consistant à ne mettre que le climatiseur (9) en marche, et d'un troisième mode de fonctionnement consistant à ne mettre que l'échangeur de chaleur radiant (R4) en marche est réalisée automatiquement ou manuellement ; et

dans lequel le moyen de commutation de mode de fonctionnement comporte :

une première tuyauterie raccordant le détendeur (96) et l'échangeur de chaleur côté intérieur (97),

une deuxième tuyauterie raccordant la vanne de commutation de trajet d'écoulement (95) et l'échangeur de chaleur côté intérieur (97),

une troisième tuyauterie dont un côté d'extrémité est raccordé par dérivation à la deuxième tuyauterie et l'autre côté d'extrémité est raccordé à un côté d'extrémité de la tuyauterie de l'élément de chauffage (1d) de l'échangeur de chaleur radiant (R4), une quatrième tuyauterie dont un côté d'extrémité est raccordé à l'autre côté d'extrémité de la tuyauterie de l'élément de chauffage (1d) de l'échangeur de chaleur radiant (R4) et l'autre côté d'extrémité est raccordé par dérivation à la deuxième tuyauterie, et

une soupape que la deuxième tuyauterie comporte sur son parcours, entre la partie de raccordement à la troisième tuyauterie et la partie de raccordement à la quatrième la tuyauterie, et

la longueur du parcours qui est la somme de la troisième tuyauterie, de la tuyauterie de l'élément de chauffage (1d), et de la quatrième tuyauterie est formée pour être supérieure à la longueur du parcours entre la partie de raccordement à la troisième tuyauterie et la partie de raccordement à la quatrième tuyauterie.

5. Système de climatisation (A5) comprenant :

un climatiseur (9) comportant un circuit de fluide frigorigène, dans lequel un compresseur (94), un détendeur (96), une vanne de commutation de trajet d'écoulement (95), un échangeur de chaleur côté intérieur (97) et un échangeur de chaleur côté extérieur (93) sont raccordés par tuyauterie pour faire circuler un fluide frigorigène afin de réaliser un cycle de réfrigération, et comprenant un ventilateur (930 ; 970), ledit ventilateur (930 ; 970) fournissant de l'air qui a subi un échange de chaleur avec le fluide frigorigène au niveau de l'échangeur de chaleur côté intérieur (97), à un espace intérieur ;

un échangeur de chaleur radiant (R5) comportant un élément de chauffage (1) incorporé dans le circuit de fluide frigorigène du climatiseur (9) ;

**caractérisé en ce que** le système de climatisation (A5) comprend des plaques de rectification (30, 40) prenant en sandwich l'élément de chauffage (1) de l'échangeur de chaleur radiant (R1) entre elles et recouvrant chacune une surface (31, 41) de l'élément de chauffage (1) à travers un intervalle (39, 49) ménagé par rapport à la surface (31, 41), les plaques de rectification (30, 40) dont la surface intérieure (31, 41) est conçue comme une surface réfléchissante (31, 41) qui réfléchit la chaleur rayonnante émise par l'élément de chauffage (1), comportant une partie de passage de chaleur rayonnante, pénétrant à travers les surfaces intérieure et extérieure (31, 41) et permettant le passage de la chaleur rayonnante et de l'air, et favorisant la convection de l'air par un effet de cheminée, et comprend en outre un moyen de commutation de mode de fonctionnement, par lequel la commutation sur un mode de fonctionnement unique parmi les modes de fonctionnement respectifs composés d'un premier mode de fonctionnement consistant à mettre le climatiseur (9) et l'échangeur de chaleur radiant (R5) en marche, d'un deuxième mode de fonctionnement consistant à ne mettre que le climatiseur (9) en marche, et d'un troisième mode de fonctionnement consistant à ne mettre que l'échangeur de chaleur radiant (R5) en marche est réalisée automatiquement ou manuellement ; et

dans lequel le moyen de commutation de mode de fonctionnement comporte :

une première tuyauterie raccordant le détendeur (96) et l'échangeur de chaleur côté intérieur (97),

une deuxième tuyauterie raccordant la vanne de commutation de trajet d'écoulement (95) et l'échangeur de chaleur côté intérieur (97),

une troisième tuyauterie dont un côté d'extrémité est raccordé à la deuxième tuyauterie et l'autre côté d'extrémité est raccordé à un côté d'extrémité de la tuyauterie de l'élément de chauffage (1) de l'échangeur de chaleur radiant (R5),

une quatrième tuyauterie dont un côté d'extrémité est raccordé à l'autre côté d'extrémité de la tuyauterie de l'élément de chauffage (1) de l'échangeur de chaleur radiant (R5) et l'autre côté d'extrémité est raccordé à la deuxième tuyauterie, et

une soupape que la deuxième tuyauterie comporte sur son parcours, entre la partie de raccordement à la troisième tuyauterie et la partie de raccordement à la quatrième la tuyauterie, et

l'une et/ou l'autre de la troisième tuyauterie et de la quatrième tuyauterie comporte(nt) une soupape sur son parcours ou sur leur parcours.

**6.** Système de climatisation (A1 ; A2 ; A3 ; A4 ; A5) selon la revendication 1, 2, 3, 4 ou 5, dans lequel :
l'élément de chauffage (1, 1a, 1b, 1c, 1d) comporte une pluralité de tuyauteries, les tuyauteries sont raccordées parallèlement à la tuyauterie constituant le circuit de fluide frigorigène, la direction d'écoulement du fluide frigorigène est la direction de la montée/descente, dans lequel la tuyauterie est conçue de manière qu'un fluide frigorigène diphasique gaz-liquide soit apte à la traverser des côtés supérieurs aux côtés inférieurs de la tuyauterie de l'élément de chauffage (1, 1a, 1b, 1c, 1d) au cours du refroidissement, et qu'un fluide frigorigène en phase gazeuse soit apte à la traverser des côtés inférieurs aux côtés supérieurs de la tuyauterie de l'élément de chauffage (1, 1a, 1b, 1c, 1d) au cours du chauffage.

**7.** Système de climatisation selon la revendication 6, dans lequel :
la tuyauterie de l'élément de chauffage (1, 1a, 1b, 1c, 1d) comporte un agencement de tuyaux annelés qui est raccordé en série à la tuyauterie constituant le circuit de fluide frigorigène et avec laquelle la direction d'écoulement du fluide frigorigène est la direction de la montée/descente.

**8.** Système de climatisation selon la revendication 6, dans lequel :
la tuyauterie de l'élément de chauffage (1, 1a, 1b, 1c, 1d) comporte un agencement de tuyaux annelés qui est raccordé en série à la tuyauterie constituant le circuit de fluide frigorigène et avec laquelle la direction d'écoulement du fluide frigorigène est la direction horizontale, dans lequel la tuyauterie est conçue de manière qu'un fluide frigorigène diphasique gaz-liquide soit apte à passer du côté supérieur au côté inférieur de la tuyauterie de l'élément de chauffage (1, 1a, 1b, 1c, 1d) au cours du refroidissement, et qu'un fluide frigorigène en phase gazeuse soit apte à passer du côté inférieur au côté supérieur de la tuyauterie au cours du chauffage.

**9.** Système de climatisation selon la revendication 1, 2, 3, 4 ou 5, dans lequel :
des éléments d'extrémité raccordant les plaques de rectification respectives (30, 40) sont disposés à des parties d'extrémité des deux côtés des plaques de rectification respectives (30, 40) pour former un corps tubulaire qui est ouvert à une partie supérieure et à une partie inférieure, et l'élément de chauffage (1, 1a, 1b, 1c, 1d) est enfermé dans le corps tubulaire.

**10.** Système de climatisation selon la revendication 1, 2, 3, 4 ou 5, dans lequel :
le climatiseur (9) est un climatiseur multizone (9) comportant une pluralité d'échangeurs de chaleur côté intérieur (97) avec tuyauterie raccordée en parallèle, par rapport à l'unique échangeur de chaleur extérieur (93) et un ou plusieurs échangeur(s) de chaleur radiants (R1 ; R2 ; R3 ; R4 ; R5) est ou sont installé(s) pour correspondre respectivement à la pluralité d'échangeurs de chaleur côté intérieur (97).

**11.** Système de climatisation selon la revendication 1, 2, 3, 4 ou 5, dans lequel :
le climatiseur (9) est un climatiseur à inverseur (9) qui réalise une commande par inverseur du compresseur (94).

**12.** Système de climatisation selon la revendication 6, dans lequel :
la tuyauterie de l'élément de chauffage (1, 1a, 1b, 1c, 1d) est un tuyau plat comportant une pluralité de trajets d'écoulement s'étendant parallèlement les uns aux autres dans la direction longitudinale à l'intérieur ou un tuyau comportant une pluralité de parties striées s'étendant parallèlement les unes aux autres dans la direction longitudinale sur la surface intérieure (31, 41).

**13.** Système de climatisation selon la revendication 1, 2, 3, 4 ou 5, dans lequel :
un élément de guidage de ventilation qui guide l'air qui entre dans les intervalles (39, 49) et en sort, sur les côtés intérieurs des plaques de rectification (30, 40), de manière que l'air s'écoule aisément, est disposé du côté supérieur ou du côté inférieur ou du côté supérieur et du côté inférieur de l'élément de chauffage (1, 1a, 1b, 1c, 1d).

**14.** Système de climatisation selon la revendication 1, 2, 3, 4 ou 5, dans lequel :
un ou plusieurs type(s) de traitement ou de revêtement, choisi(s) parmi un moletage, un traitement à l'alumite, un revêtement de dissipation thermique, un revêtement d'émission de rayonnement infrarouge lointain, et un revêtement ayant une fonction désodorisante, une fonction antibactérienne ou une fonction d'adsorption-décomposition de composés organiques volatils, est ou sont appliqué(s) à la surface (31, 41) de l'élément de chauffage (1, 1a, 1b, 1c, 1d).

**15.** Système de climatisation selon la revendication 6, dans lequel :

un message publicitaire ou une image artistique est affiché(e) sur la surface (31, 41) de la plaque de rectification.

16. Procédé d'utilisation d'un système de climatisation (A1), dans lequel, dans un système de climatisation (A1) comprenant un climatiseur (9) comportant un circuit de fluide frigorigène, dans lequel un compresseur (94), un détendeur (96), une vanne de commutation de trajet d'écoulement (95), un échangeur de chaleur côté intérieur (97) et un échangeur de chaleur côté extérieur (93) sont raccordés par tuyauterie pour faire circuler un fluide frigorigène afin de réaliser un cycle de réfrigération, et fournir de l'air qui a subi un échange de chaleur avec le fluide frigorigène au niveau de l'échangeur de chaleur côté intérieur (97), à un espace intérieur, au moyen d'un ventilateur (930 ; 970), un échangeur de chaleur radiant (R1) comportant un élément de chauffage (1) incorporé dans le circuit de fluide frigorigène du climatiseur (9), et

un moyen de commutation de mode de fonctionnement, par lequel la commutation sur un mode de fonctionnement unique parmi les modes de fonctionnement respectifs composés d'un premier mode de fonctionnement consistant à mettre le climatiseur (9) et l'échangeur de chaleur radiant (R1) en marche, d'un deuxième mode de fonctionnement consistant à ne mettre que le climatiseur (9) en marche, et d'un troisième mode de fonctionnement consistant à ne mettre que l'échangeur de chaleur radiant (R1) en marche est réalisée automatiquement ou manuellement, lorsque le climatiseur (9) et l'échangeur de chaleur radiant (R1) sont mis en marche dans le premier mode de fonctionnement, le ventilateur (930 ; 970) du climatiseur (9) est arrêté pour ne pratiquement mettre en marche que l'échangeur de chaleur radiant (R1), **caractérisé en ce que** le système de climatisation comprend des plaques de rectification (30, 40) prenant en sandwich l'élément de chauffage (1) de l'échangeur de chaleur radiant (R1) entre elles et recouvrant chacune une surface (31, 41) de l'élément de chauffage (1) à travers un intervalle (39, 49) ménagé par rapport à la surface (31, 41), les plaques de rectification (30, 40) dont la surface intérieure (31, 41) est conçue comme une surface réfléchissante (31, 41) qui réfléchit la chaleur rayonnante émise par l'élément de chauffage (1), comportant une partie de passage de chaleur rayonnante, pénétrant à travers les surfaces intérieure et extérieure (31, 41) et permettant le passage de la chaleur rayonnante et de l'air, et favorisant la convection de l'air par un effet de cheminée, et

le moyen de commutation de mode de fonctionnement comporte :

une première tuyauterie raccordant le détendeur (96) et l'échangeur de chaleur côté intérieur (97),
une première soupape que la première tuyauterie comporte sur son parcours,
une deuxième tuyauterie raccordant la vanne de commutation de trajet d'écoulement (95) et l'échangeur de chaleur côté intérieur (97),
une deuxième soupape que la deuxième tuyauterie comporte sur son parcours,
une troisième tuyauterie dont un côté d'extrémité est raccordé à la deuxième tuyauterie et l'autre côté d'extrémité est raccordé à un côté d'extrémité de la tuyauterie de l'élément de chauffage (1) de l'échangeur de chaleur radiant (R1),
une troisième soupape que la troisième tuyauterie comporte sur son parcours,
une quatrième tuyauterie dont un côté d'extrémité est raccordé à l'autre côté d'extrémité de la tuyauterie de l'élément de chauffage (1) de l'échangeur de chaleur radiant (R1) et l'autre côté d'extrémité est raccordé à la deuxième tuyauterie, à une position plus proche de la vanne de commutation de trajet d'écoulement (95) que la deuxième soupape,
une quatrième soupape que la quatrième tuyauterie comporte sur son parcours,
une cinquième tuyauterie dont un côté d'extrémité est raccordé à la deuxième tuyauterie, à une position plus proche de la vanne de commutation de trajet d'écoulement (95) que la deuxième soupape et l'autre côté d'extrémité est raccordé à la première tuyauterie, à une position plus proche du détendeur (96) que la première soupape,
une cinquième soupape que la cinquième tuyauterie comporte sur son parcours, et
une sixième soupape que la deuxième tuyauterie comporte sur son parcours, entre les parties de raccordement à la quatrième tuyauterie et à la troisième tuyauterie.

17. Procédé d'utilisation d'un système de climatisation (A2), dans lequel, dans un système de climatisation (A2) comprenant un climatiseur (9) comportant un circuit de fluide frigorigène, dans lequel un compresseur (94), un détendeur (96), une vanne de commutation de trajet d'écoulement (95), un échangeur de chaleur côté intérieur (97) et un échangeur de chaleur côté extérieur (93) sont raccordés par tuyauterie pour faire circuler un fluide frigorigène afin de réaliser un cycle de réfrigération, et fournir de l'air qui a subi un échange de chaleur avec le fluide frigorigène au niveau de l'échangeur de chaleur côté intérieur (97), à un espace intérieur, au moyen d'un ventilateur (930 ; 970), un échangeur de chaleur radiant (R2) comportant un élément de chauffage (1a, 1b) incorporé dans le circuit de fluide frigorigène du climatiseur (9),

un moyen de commutation de mode de fonctionnement, par lequel la commutation sur un mode de fonctionnement unique parmi les modes de fonctionnement respectifs composés d'un premier mode de fonctionnement consistant à mettre le climatiseur (9) et l'échangeur de chaleur radiant (R2) en marche, d'un deuxième mode de fonctionnement consistant à ne mettre que le climatiseur (9) en marche, et d'un troisième mode de fonctionnement consistant à ne mettre que l'échangeur de chaleur radiant (R2) en marche est réalisée automatiquement ou manuellement, lorsque le climatiseur (9) et l'échangeur de chaleur radiant (R2) sont mis en marche dans le premier mode de fonctionnement, le ventilateur (930 ; 970) du climatiseur (9) est arrêté pour ne pratiquement mettre en marche que l'échangeur de chaleur radiant (R2), **caractérisé en ce que** le système de climatisation comprend des plaques de rectification (30, 40) prenant en sandwich l'élément de chauffage (1) de l'échangeur de chaleur radiant (R1) entre elles et recouvrant chacune une surface (31, 41) de l'élément de chauffage (1) à travers un intervalle (39, 49) ménagé par rapport à la surface (31, 41), les plaques de rectification (30, 40) dont la surface intérieure (31, 41) est conçue comme une surface réfléchissante (31, 41) qui réfléchit la chaleur rayonnante émise par l'élément de chauffage (1), comportant une partie de passage de chaleur rayonnante, pénétrant à travers les surfaces intérieure et extérieure (31, 41) et permettant le passage de la chaleur rayonnante et de l'air, et favorisant la convection de l'air par un effet de cheminée, et le moyen de commutation de mode de fonctionnement comporte :

une première tuyauterie raccordant le détendeur (96) et l'échangeur de chaleur côté intérieur (97),
une deuxième tuyauterie raccordant la vanne de commutation de trajet d'écoulement (95) et l'échangeur de chaleur côté intérieur (97),
une troisième tuyauterie dont un côté d'extrémité est raccordé à la deuxième tuyauterie et l'autre côté d'extrémité est raccordé à un côté d'extrémité de la tuyauterie de l'élément de chauffage (1a, 1b) de l'échangeur de chaleur radiant (R2),
une quatrième tuyauterie dont un côté d'extrémité est raccordé à l'autre côté d'extrémité de la tuyauterie de l'élément de chauffage (1a, 1b) de l'échangeur de chaleur radiant (R2) et l'autre côté d'extrémité est raccordé à la deuxième tuyauterie, à une position plus proche de l'échangeur de chaleur côté intérieur (97) que la partie de raccordement à la troisième tuyauterie,
une cinquième tuyauterie dont un côté d'extrémité est raccordé à la deuxième tuyauterie, à une position proche de la partie de raccordement à la quatrième tuyauterie et l'autre côté d'extrémité est raccordé à la première tuyauterie,
une soupape que la cinquième tuyauterie comporte sur son parcours, et
une soupape que la deuxième tuyauterie comporte sur son parcours, entre les parties de raccordement à la quatrième tuyauterie et à la troisième tuyauterie, et
l'une ou l'autre de la première tuyauterie et de la deuxième tuyauterie comporte une soupape sur son parcours ou l'une ou l'autre de la troisième tuyauterie et de la quatrième tuyauterie comporte une soupape sur son parcours.

18. Procédé d'utilisation d'un système de climatisation (A3), dans lequel, dans un système de climatisation (A3) comprenant un climatiseur (9) comportant un circuit de fluide frigorigène, dans lequel un compresseur (94), un détendeur (96), une vanne de commutation de trajet d'écoulement (95), un échangeur de chaleur côté intérieur (97) et un échangeur de chaleur côté extérieur (93) sont raccordés par tuyauterie pour faire circuler un fluide frigorigène afin de réaliser un cycle de réfrigération, et fournir de l'air qui a subi un échange de chaleur avec le fluide frigorigène au niveau de l'échangeur de chaleur côté intérieur (97), à un espace intérieur, au moyen d'un ventilateur (930 ; 970), un échangeur de chaleur radiant (R3) comportant un élément de chauffage (1c) incorporé dans le circuit de fluide frigorigène du climatiseur (9), et

un moyen de commutation de mode de fonctionnement, par lequel la commutation sur un mode de fonctionnement unique parmi les modes de fonctionnement respectifs composés d'un premier mode de fonctionnement consistant à mettre le climatiseur (9) et l'échangeur de chaleur radiant (R3) en marche, d'un deuxième mode de fonctionnement consistant à ne mettre que le climatiseur (9) en marche, et d'un troisième mode de fonctionnement consistant à ne mettre que l'échangeur de chaleur radiant (R3) en marche est réalisée automatiquement ou manuellement, lorsque le climatiseur (9) et l'échangeur de chaleur radiant (R3) sont mis en marche dans le premier mode de fonctionnement, le ventilateur (930 ; 970) du climatiseur (9) est arrêté pour ne pratiquement mettre en marche que l'échangeur de chaleur radiant (R3),

**caractérisé en ce que** le système de climatisation comprend des plaques de rectification (30, 40) prenant en sandwich l'élément de chauffage (1) de l'échangeur de chaleur radiant (R1) entre elles et recouvrant chacune une surface (31, 41) de l'élément de chauffage (1) à travers un intervalle (39, 49) ménagé par rapport à la surface (31, 41), les plaques de rectification (30, 40) dont la surface intérieure (31, 41) est conçue comme une surface réfléchissante (31, 41) qui réfléchit la chaleur rayonnante émise par l'élément de chauffage (1), comportant une partie de passage de chaleur rayonnante, pénétrant à travers les surfaces intérieure et extérieure (31, 41) et permettant le passage de la chaleur rayonnante et de l'air, et favorisant la convection de l'air par un effet de cheminée, et le moyen de commutation de mode de fonctionnement comporte :

une première tuyauterie raccordant le détendeur (96) et l'échangeur de chaleur côté intérieur (97),

une deuxième tuyauterie raccordant la vanne de commutation de trajet d'écoulement (95) et l'échangeur de chaleur côté intérieur (97),

une troisième tuyauterie dont un côté d'extrémité est raccordé à la deuxième tuyauterie et l'autre côté d'extrémité est raccordé à un côté d'extrémité de la tuyauterie de l'élément de chauffage (1c) de l'échangeur de chaleur radiant (R3),

une quatrième tuyauterie dont un côté d'extrémité est raccordé à l'autre côté d'extrémité de la tuyauterie de l'élément de chauffage (1c) de l'échangeur de chaleur radiant (R3) et l'autre côté d'extrémité est raccordé à la deuxième tuyauterie, à une position plus proche de l'échangeur de chaleur côté intérieur (97) que la partie de raccordement à la troisième tuyauterie,

une cinquième tuyauterie dont un côté d'extrémité est raccordé à la deuxième tuyauterie, à une position proche de la partie de raccordement à la quatrième tuyauterie et l'autre côté d'extrémité est raccordé à la première tuyauterie,

une soupape que la cinquième tuyauterie comporte sur son parcours, et

une soupape que la deuxième tuyauterie comporte sur son parcours, entre les parties de raccordement à la quatrième tuyauterie et à la troisième tuyauterie, et

l'une ou l'autre de la première tuyauterie et de la deuxième tuyauterie comporte une soupape sur son parcours et l'une ou l'autre de la troisième tuyauterie et de la quatrième tuyauterie comporte une soupape sur son parcours.

19. Procédé d'utilisation d'un système de climatisation (A4), dans lequel, dans un système de climatisation (A4) comprenant un climatiseur (9) comportant un circuit de fluide frigorigène, dans lequel un compresseur (94), un détendeur (96), une vanne de commutation de trajet d'écoulement (95), un échangeur de chaleur côté intérieur (97) et un échangeur de chaleur côté extérieur (93) sont raccordés par tuyauterie pour faire circuler un fluide frigorigène afin de réaliser un cycle de réfrigération, et fournir de l'air qui a subi un échange de chaleur avec le fluide frigorigène au niveau de l'échangeur de chaleur côté intérieur (97), à un espace intérieur, au moyen d'un ventilateur (930 ; 970), un échangeur de chaleur radiant (R4) comportant un élément de chauffage (1d) incorporé dans le circuit de fluide frigorigène du climatiseur (9), et favorisant la convection de l'air par un effet de cheminée, et un moyen de commutation de mode de fonctionnement, par lequel la commutation sur un mode de fonctionnement unique parmi les modes de fonctionnement respectifs composés d'un premier mode de fonctionnement consistant à mettre le climatiseur (9) et l'échangeur de chaleur radiant (R4) en marche, d'un deuxième mode de fonctionnement consistant à ne mettre que le climatiseur (9) en marche, et d'un troisième mode de fonctionnement consistant à ne mettre que l'échangeur de chaleur radiant (R4) en marche est réalisée automatiquement ou manuellement,

lorsque le climatiseur (9) et l'échangeur de chaleur radiant (R4) sont mis en marche dans le premier mode de fonctionnement, le ventilateur (930 ; 970) du climatiseur (9) est arrêté pour ne pratiquement mettre en marche que l'échangeur de chaleur radiant (R4), **caractérisé en ce que** le système de climatisation comprend des plaques de rectification (30, 40) prenant en sandwich l'élément de chauffage (1) de l'échangeur de chaleur radiant (R1) entre elles et recouvrant chacune une surface (31, 41) de l'élément de chauffage (1) à travers un intervalle (39, 49) ménagé par rapport à la surface (31, 41), les plaques de rectification (30, 40) dont la surface intérieure (31, 41) est conçue comme une surface réfléchissante (31, 41) qui réfléchit la chaleur rayonnante émise par l'élément de chauffage (1), comportant une partie de passage de chaleur rayonnante, pénétrant à travers les surfaces intérieure et extérieure (31, 41) et permettant le passage de la chaleur rayonnante et de l'air, et favorisant la convection de l'air par un effet de cheminée, et le moyen de commutation de mode de fonctionnement comporte :

une première tuyauterie raccordant le détendeur (96) et l'échangeur de chaleur côté intérieur (97),

une deuxième tuyauterie raccordant la vanne de commutation de trajet d'écoulement (95) et l'échangeur de chaleur côté intérieur (97),

une troisième tuyauterie dont un côté d'extrémité est raccordé par dérivation à la deuxième tuyauterie et l'autre côté d'extrémité est raccordé à un côté d'extrémité de la tuyauterie de l'élément de chauffage (1d) de l'échangeur de chaleur radiant (R4),

une quatrième tuyauterie dont un côté d'extrémité est raccordé à l'autre côté d'extrémité de la tuyauterie de l'élément de chauffage (1d) de l'échangeur de chaleur radiant (R4) et l'autre côté d'extrémité est raccordé par dérivation à la deuxième tuyauterie, et

une soupape que la deuxième tuyauterie comporte sur son parcours, entre la partie de raccordement à la troisième tuyauterie et la partie de raccordement à la quatrième la tuyauterie, et

la longueur du parcours qui est la somme de la troisième tuyauterie, de la tuyauterie de l'élément de chauffage (1d), et de la quatrième tuyauterie est formée pour être supérieure à la longueur du parcours entre la partie de raccordement à la troisième tuyauterie et la partie de raccordement à la quatrième tuyauterie.

20. Procédé d'utilisation d'un système de climatisation (A5), dans lequel, dans un système de climatisation (A5) comprenant un climatiseur (9) comportant un circuit de fluide frigorigène, dans lequel un compresseur (94), un détendeur (96), une vanne de commutation de trajet d'écoulement (95), un échangeur de chaleur côté intérieur (97) et un échangeur de chaleur côté extérieur (93) sont raccordés par tuyauterie pour faire circuler un fluide frigorigène afin de réaliser un cycle de réfrigération, et fournir de l'air qui a subi un échange de chaleur avec le fluide frigorigène au niveau de l'échangeur de chaleur côté intérieur (97), à un espace intérieur, au moyen d'un ventilateur (930 ; 970), un échangeur de chaleur radiant (R5) comportant un élément de chauffage (1) incorporé dans le circuit de fluide frigorigène du climatiseur (9), et

un moyen de commutation de mode de fonctionnement, par lequel la commutation sur un mode de fonctionnement unique parmi les modes de fonctionnement respectifs composés d'un premier mode de fonctionnement consistant à mettre le climatiseur (9) et l'échangeur de chaleur radiant (R5) en marche, d'un deuxième mode de fonctionnement consistant à ne mettre que le climatiseur (9) en marche, et d'un troisième mode de fonctionnement consistant à ne mettre que l'échangeur de chaleur radiant (R5) en marche est réalisée automatiquement ou manuellement, lorsque le climatiseur (9) et l'échangeur de chaleur radiant (R5) sont mis en marche dans le premier mode de fonctionnement, le ventilateur (930 ; 970) du climatiseur (9) est arrêté pour ne pratiquement mettre en marche que l'échangeur de chaleur radiant (R5), **caractérisé en ce que** le système de climatisation comprend des plaques de rectification (30, 40) prenant en sandwich l'élément de chauffage (1) de l'échangeur de chaleur radiant (R1) entre elles et recouvrant chacune une surface (31, 41) de l'élément de chauffage (1) à travers un intervalle (39, 49) ménagé par rapport à la surface (31, 41), les plaques de rectification (30, 40) dont la surface intérieure (31, 41) est conçue comme une surface réfléchissante (31, 41) qui réfléchit la chaleur rayonnante émise par l'élément de chauffage (1), comportant une partie de passage de chaleur rayonnante, pénétrant à travers les surfaces intérieure et extérieure (31, 41) et permettant le passage de la chaleur rayonnante et de l'air, et favorisant la convection de l'air par un effet de cheminée, et le moyen de commutation de mode de fonctionnement comporte :

une première tuyauterie raccordant le détendeur (96) et l'échangeur de chaleur côté intérieur (97), une deuxième tuyauterie raccordant la vanne de commutation de trajet d'écoulement (95) et l'échangeur de chaleur côté intérieur (97),

une troisième tuyauterie dont un côté d'extrémité est raccordé à la deuxième tuyauterie et l'autre côté d'extrémité est raccordé à un côté d'extrémité de la tuyauterie de l'élément de chauffage (1) de l'échangeur de chaleur radiant (R5),

une quatrième tuyauterie dont un côté d'extrémité est raccordé à l'autre côté d'extrémité de la tuyauterie de l'élément de chauffage (1) de l'échangeur de chaleur radiant (R5) et l'autre côté d'extrémité est raccordé à la deuxième tuyauterie, et

une soupape que la deuxième tuyauterie comporte sur son parcours, entre la partie de raccordement à la troisième tuyauterie et la partie de raccordement à la quatrième la tuyauterie, et

l'une et/ou l'autre de la troisième tuyauterie et de la quatrième tuyauterie comporte(nt) une soupape sur son parcours ou sur leur parcours.

## F I G . 1

## F I G . 2

EP 2 868 986 B1

FIG.3

(a)

(b)

52

# F I G . 4

( a )

( b )

# ＦＩＧ．５

# ＦＩＧ.6

( a )

( b )

( c )

FIG.7

EP 2 868 986 B1

# F I G.8

( a )

( b )

EP 2 868 986 B1

FIG.9

(a)

(b)

58

F I G .10

# F I G.11

## ( a )

(F-F)

## ( b )

F I G.12

( a )

R5

28

60    18
      10
      6

31    41
3     4    1
39    49
      12

3a    4a

      11
      15
16    17    (EX9)
5     50         ⇩
160        29    ▽ FL

(EX7)

( b )

R5

28

60    18
      10
      6

31    41
3     4    1
39    49
      12

3a    4a

      11
      15
16    17    ⇧
5     50         (EX10)
160        29    ▽ FL

(EX8)

F I G.13

(a)                    (b)

EP 2 868 986 B1

F I G.14

A3

F I G.15

A4

63

EP 2 868 986 B1

F I G.16

A5

F I G.17

A6

64

F I G .18

F I G .19

F I G .20

F I G .21

**EP 2 868 986 B1**

## REFERENCES CITED IN THE DESCRIPTION

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- JP 2005016919 A

- JP 2007024417 B